(19) Europäisches Patentamt
European Patent Office
Office européen des brevets

(11) **EP 3 954 741 B1**

(12) **EUROPEAN PATENT SPECIFICATION**

(45) Date of publication and mention
of the grant of the patent:
**29.11.2023 Bulletin 2023/48**

(21) Application number: **20211867.5**

(22) Date of filing: **04.12.2020**

(51) International Patent Classification (IPC):
*C09D 5/00* *(2006.01)*

(52) Cooperative Patent Classification (CPC):
**C09D 5/00**

(54) **RADIATIVE COOLING DEVICE**

STRAHLUNGSKÜHLVORRICHTUNG

DISPOSITIF DE REFROIDISSEMENT RADIATIF

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.08.2020 KR 20200100751
24.11.2020 KR 20200158664**

(43) Date of publication of application:
**16.02.2022 Bulletin 2022/07**

(73) Proprietor: **Korea University Research and
Business Foundation
Seoul 02841 (KR)**

(72) Inventors:
• **LEE, Heon
06584 Seoul (KR)**

• **SON, Soomin
02857 Seoul (KR)**
• **CHAE, Dongwoo
05367 Seoul (KR)**
• **JUNG, Pil-Hoon
16808 Yongin-si, Gyeonggi-do (KR)**
• **LIU, Yuting
02842 Seoul (KR)**
• **LIM, Hangyu
01363 Seoul (KR)**

(74) Representative: **Prüfer & Partner mbB
Patentanwälte · Rechtsanwälte
Sohnckestraße 12
81479 München (DE)**

(56) References cited:
**WO-A1-2020/195743      CN-A- 110 567 188
CN-A- 111 155 332**

**Description**

**CROSS-REFERENCE TO RELATED APPLICATIONS**

This application claims the priority of Korean Patent Application No. 10-2020-0100751 filed on August 11, 2020 and Korean Patent Application No. 10-2020-0158664 filed on November 24, 2020 in the Korean Intellectual Property Office.

**BACKGROUND OF THE INVENTION**

**Field of the Invention**

The present invention relates to a radiative cooling device and a method of manufacturing the same. In addition, the present invention relates to a radiative cooling device including a paint coating layer composed of nano or microparticles, and more particularly, to a technique of cooling a temperature on the surface of a material or under the material by emitting heat under a radiative cooling device to the outside while minimizing the absorption of light in a solar spectrum by forming a paint coating layer with excellent radiative cooling performance on various surfaces.

**Description of the Related Art**

In general, energy consumption is required for cooling. General-purpose cooling devices such as refrigerators and air conditioners compress a refrigerant using energy and then perform cooling by absorbing heat generated when the compressed refrigerant is expanded. In contrast, radiative cooling is a technology that can cool without consuming energy.

For radiative cooling, absorption, reflection, and radiation of light in each wavelength band must be effectively controlled.

In most cases, a heat source is incident sunlight, and the heat of sunlight is distributed in wavelength ranges corresponding to UV-visible light-near infrared regions. When light corresponding to these wavelength ranges is reflected, inflow of heat through sunlight may be blocked.

When a material has a reflectance of 100 % with respect to UV, visible light, and near-infrared light, this means that the material reflects 100 % of the energy of incident sunlight and does not absorb the sunlight at all.

For example, the internal temperature of a black car, which absorbs a lot of light in broad daylight, increases rapidly, but in the case of a white car, which absorbs relatively little light and reflects a lot of light, the internal temperature thereof increases slowly.

When the surface of a car reflects all UV, visible light, and near-infrared light, inflow of heat energy by sunlight may be blocked.

All objects emit heat to the outside in the form of light, and the wavelength band of the emitted light is determined by the surface temperature of the objects.

Since the surface temperature of the sun is 6, 000 °C, the sun emits light corresponding to the UV-visible-near-infrared wavelength band to the outside.

A material having a surface temperature of several tens of degrees C emits mid-infrared light with a wavelength of several tens of micrometers to the outside.

When radiation of mid-infrared light from the surface of a material is blocked or coating is performed using a coating material that reflects emitted light again, heat loss due to mid-infrared radiation may be reduced, and thermal insulation effect may be achieved.

Water vapor and carbon dioxide exist in the atmosphere of the earth, and these gases absorb some wavelengths of mid-infrared light emitted from the earth to the outside and suppress emission of mid-infrared light.

However, mid-infrared light of a wavelength of 8 to 13 $\mu$m, commonly referred to as atmospheric window, is not absorbed by the atmosphere of the earth, so the mid-infrared light is called as atmospheric window. Infrared light in this wavelength is not absorbed by the atmosphere and is emitted into space.

When all incident sunlight (emitted from the sun) corresponding to UV-visible light-near-infrared regions is reflected and mid-infrared light having a wavelength of 8 to 13 $\mu$m corresponding to the atmospheric window is effectively emitted to the outside, heat inflow may be block and heat emission may be maximized, and thus cooling of a material may be performed without energy consumption.

As a solar reflective material, a metal material that is transparent to sunlight and can effectively emit long-wavelength infrared light is mainly used. Accordingly, most radiative cooling devices have a metallic mirror-like color.

This metallic mirror-like color may be a disadvantage in the application of radiative cooling materials.

Radiative cooling devices may be used in automobiles, buildings, containers, etc. to reduce energy consumption required for cooling. However, since the color of the radiative cooling device is limited to the color of a metallic mirror. Thus, there is a demand for a radiative cooling device having various colors while having the same cooling performance.

A passive radiative cooling device may be passively cooled by reflecting a wavelength (0.3 μm to 2.5 μm) corresponding to sunlight during the day and emitting radiative heat (8 μm to 13 μm) energy that may be removed out of space.

Meanwhile, the passive radiative cooling device may be passively heated by absorbing a wavelength (0.3 μm to 2.5 μm) corresponding to sunlight during the day and not properly absorbing radiative heat (8 μm to 13 μm) energy that may be removed out of space.

The efficiency of the passive cooling device may be confirmed by measuring the optical properties of the device itself.

In order to emit heat, the heat needs to be well emitted into the space due to high absorptivity or emissivity in a long-wavelength infrared area.

According to the Planck distribution, at a temperature of 300K, there is a condition capable of emitting heat at a maximum in a wavelength range of 6 μm to 20 μm. In the case of the Earth, since a sky window area is an area of about 8 μm to 13 μm, the absorptivity or emissivity in the area of 8 to 13 μm needs to be the maximum in order to maximize the heat emission capacity of the passive cooling device.

Infrared emission in the wavelength range of the sky window plays a key role in achieving radiative cooling by actual heat emission. If in the wavelength range, the sunlight (emitted from the sun) incident with the ultraviolet-visible-near-infrared rays may be 100% reflected and the long-wavelength infrared rays in the range of 8 μm to 13 μm, which is the sky window section, may be 100% emitted to the outside, at an ambient temperature of 300K, the cooling performance of 158 W/m$^2$ may be implemented without energy consumption.

If 95% of sunlight is reflected and 90% or more of the mid-infrared rays in the range of 8 μm to 13 μm is emitted to the outside, at an ambient temperature of 300K, the cooling performance of 100 W/m$^2$ may be achieved during the day (that is, there is light absorption by the sun) and the cooling performance of 120 W/m$^2$ may be achieved during the night when there is no light absorption by the sun.

In order to be used as a passive radiative cooling material, the material is not required to absorb incident sunlight due to high transmittance or high reflectance for light in a UV-vis-NIR wavelength range, which is incident sunlight. In addition, the material needs to have high absorptivity (emissivity) for long-wavelength infrared rays in the range of 8 μm to 13 μm, which is the sky window section and to have high durability (stability, corrosion resistance) in outdoor conditions. In addition, the material used needs to be inexpensive and abundantly present, and can be formed in a large area by a cheap and easy process.

Polymer materials generally have high absorptivity (emissivity) for long-wavelength infrared rays, but have a disadvantage of being easily deteriorated by UV rays and moisture when left outdoors due to the nature of the material to shorten the lifespan.

In addition, since thick polymer materials are broadband emitters with high emissivity in all infrared wavelengths, the radiative cooling performance is inferior to selective emitters with high emissivity in the sky window.

In the case of using a multilayered thin film made of an inorganic material or a ceramic material, the number of stacked layers needs to be large in order to increase the emissivity in the entire sky window to increase the solar absorptivity, thereby making it difficult to achieve high-efficiency radiative cooling performance.

In addition, radiative cooling devices including lower metal reflective layers such as silver and aluminum are difficult to apply the radiative cooling in real life due to long-term stability problems (oxidation problems) and unit cost problems of silver and aluminum, and these metal materials mainly perform a regular reflection to cause eye fatigue and light bleeding.

Since existing paint materials contain a high content of binder and use $TiO_2$ nano or microparticles, the materials absorb sunlight in a UV-near-visible light region due to the relatively low bandgap energy of $TiO_2$, and absorb a lot of sunlight in an NIR region due to a high extinction coefficient of the NIR region of the polymer binder.

In addition, since these existing paint materials are not composed of materials having a high extinction coefficient in the sky window, there is a problem that the emissivity in the sky window and the emissivity of each angle are not high.

In most materials, when an absorption value is changed due to the bonding of molecules that make up the material, the absorption wavelength range is changed by bonds and resonances that are present in the molecule.

For example, in the case of $Al_2O_3$, this value increases from about 10 μm. In the case of $SiO_2$, it is difficult to satisfy the range of all wavelengths such as 8 to 10 μm. In the case of a thin-film inorganic material, even when the thickness becomes thick, it is difficult to increase absorption beyond the limit of the material.

Even in the case of organic materials, absorption wavelength varies depending on bonds constituting the organic materials. However, in the case of an organic material, when the thickness thereof is about 50 μm or more, the organic material has high absorption at all wavelengths as well as 8 to 13 μm. In theory, when a radiative cooling material absorbs wavelengths other than 8 to 13 μm, the radiative cooling performance thereof is degraded (when ambient temperature is low). Accordingly, to solve this problem, an emitter for a range of 8 to 13 μm is required.

EP 3 954 741 B1

CN 110 567 188 A describes a winter and summer temperature adjusting device based on radiation cooling and solar energy utilization and a construction method of the winter and summer temperature adjusting device. The winter and summer temperature adjusting device is constituted by a radiation cooling structure and a heat absorbing layer; the radiation cooling structure is composed of a reflecting layer, an emission layer and a wind screen, the emission layer is arranged between the reflecting layer and the wind screen, the wind screen is composed of an air layer and a covering material layer, andthe air layer is located between the emission layer and the covering material layer; the reflecting layer reflects sunlight out, and the emission layer emits heat in a temperature-adjusted medium outin an infrared ray mode; and the heat absorbing layer is composed of a solar heat-absorbing material layer and a metal plate, and the metal plate is located between the solar heat-absorbing materiallayer and the reflecting layer of the radiation cooling structure and is closely combined with the radiation cooling structure. The winter and summer temperature adjusting device can provide passive temperature decreasing and increasing for certain occasions and equipment, and achieves the energy saving effect..

CN 111 155 332 A describes a radiation cooling passive cooling fabric and a preparation method thereof, and belongs to the technical field of textile. The radiation cooling passive cooling fabric sequentially comprises an infrared high emission top layer, a sunlight low absorption fabric layer and a sunlight high reflection bottom layer from top to bottom; the infrared high emission top layer is 0.5-0.9 in emissivity on infrared light with the wavelength of 8-13[mu]m; the sunlight low absorption fabric layer is 0.3-0.9 in sunlight emissivity; the sunlight high reflection bottom layer is 0.5-0.9 in sunlight emissivity; and the sunlight low absorption fabric layer is woven by fibers, wherein the cross sections of the fibers are triangular. According to the fabric, through synergic matching of three layers, a high infrared emissivity and strong sunlight reflectivity effect is realized in daytime, and the radiation cooling performance of the material in daytime is improved.

WO 2020/195743 A1 describes a radiation cooling device that can be retrofitted to existing outdoor equipment and has flexibility. Itis provided with: an infrared radiating layer that radiates infrared IR from a radiation surface; and a light reflective layer positioned on the infrared radiating layer on a side opposite to a side on which the radiation surface is present. The infrared radiating layer is a resin material layer the thickness of which is adjusted such that thermal radiant heat energy greater than absorbed solar heat energy is radiated within a band of wavelength 8-14 μm.

## SUMMARY OF THE INVENTION

An object of the present invention is to provide a radiative cooling device capable of cooling a temperature on the surface of a material or under the material by emitting heat under the radiative cooling device to the outside while minimizing the absorption of light in a solar spectrum by forming a paint coating layer with excellent radiative cooling performance on various surfaces.

Another object of the present invention is to provide a radiative cooling device with excellent radiative cooling performance by forming a paint coating layer which absorb less sunlight and has higher emissivity in a sky window than conventional paints.

Yet another object of the present invention is to provide a rigid or flexible radiative cooling device by forming a paint coating layer on a rigid or flexible plate.

Still another object of the present invention is to perform a radiative cooling function and apply a radiative cooling capacity even to fabric materials such as cloths and the surface of a umbrella through dyeing by forming a paint coating layer having a radiative cooling function on non-planar plate such as the surface of a copper pipe for heat exchange or a vehicle roof.

Still another object of the present invention is to provide a radiative cooling device with hydrophobicity which further includes a polymeric protective layer to prevent the penetration of foreign substances such as moisture and air.

Still another object of the present invention is to provide a radiative cooling device which cools below an ambient temperature without energy consumption even in the day time when the sun is shining or the night time when the sun is not shining.

Still another object of the present invention is to provide a cooling function without energy consumption by being applied to an outer surface of a material requiring cooling, such as construction materials, glass, automotive materials, aviation equipment, energy-saving data centers, electronic devices, solar cells, etc.

Still another object of the present invention is to prevent skin burns by sunlight during the day time by being applied to wearable devices, clothes, shoes, umbrellas, etc.

Still another obj ect of the present invention is to provide a stable radiative cooling function even when being exposed to an external environment for a long time by applying a plate made of a ceramic material with excellent chemical stability and mechanical property.

At least some of the above objects are solved by a radiative cooling device according to claim 1, a method of manufacturing a radiative cooling device according to claim 7, and a white radiative cooling device according to claim 9. Further developments are given in the dependent claims.

A radiative cooling device may include a paint coating layer formed by coating or dyeing on various surfaces a paint coating layer formed by coating or dyeing on various surfaces a paint solution mixed with nano or microparticles of which a particle size and a composition are determined in consideration of infrared emissivity and reflectance to incident sunlight in a wavelength range corresponding to a sky window and a binder mechanically connecting the surfaces of the nano or microparticles in a solvent.

The nano or microparticles may include at least one nano or microparticle material of $SiO_2$, $Al_2O_3$, $CaCO_3$, $CaSO_4$, c-BN, $ZrO_2$, $MgHPO_4$, $Ta_2O_5$, AlN, LiF, $MgF_2$, $HfO_2$, and $BaSO_4$ and a mixed material mixed with the at least one nano or microparticle material.

The nano or microparticle may be formed of a core and a shell, wherein a nano or microparticle material forming the core and a nano or microparticle material forming the shell may be made of different materials, and the infrared emissivity and reflectance of the nano or microparticle material forming the core and the infrared emissivity and reflectance of the nano or microparticle material forming the shell may be determined so as to be complemented with each other for infrared emissivity and reflectance to incident sunlight in the wavelength range corresponding to the sky window.

In the paint coating layer, the thickness of the shell may be adjusted to control at least one property of a reflective property, an absorption property, and a transmission property according to a difference in refractive index between the wavelength range corresponding to the sky window and the wavelength range of incident sunlight.

In the paint coating layer, the infrared emissivity and the reflectance may be determined by overlapping infrared emissivity and reflectance of each of the nano or microparticles.

The paint coating layer may be formed by coating or dyeing, on various surfaces, a paint solution in which powers of the nano or microparticle are mixed in any one volumetric ratio of 1:0, 3:1, 1:1, 1:3, and 0:1.

The binder may include at least one binder material of dipentaerythritol hexaacrylate (DPHA), polytetrafluoroethylene (DPHA), poly urethane acrylate (PUA), ethylene tetra fluoro ethylene (ETFE), polyvinylidene fluoride (PVDF), acrylic polymers, polyester polymers, and polyurethane polymers.

In the paint coating layer, the infrared emissivity may be increased based on infrared emissivity in a wavelength range corresponding to the sky window of the at least one binder material.

The paint coating layer may be formed by coating or dyeing, on various surfaces, a paint solution in which the nano or microparticles and the binder are mixed in a volumetric ratio of x:1, wherein the x may have a range of 0.2 to 2.5.

The radiative cooling device may further include a polymeric protective layer for blocking the penetration of foreign substances on the paint coating layer.

The thickness of the paint coating layer may be 30 $\mu$m to 600 $\mu$m .

As the thickness of the paint coating layer increases, the reflectance may increase and the transmittance may decrease.

The paint coating layer may have infrared emissivity of 0.6 or more when the infrared rays are incident at an incident angle of 40° to 70° with respect to a reference line perpendicular to the infrared rays.

According to the present invention, it is possible to provide a radiative cooling device capable of cooling a temperature on the surface of a material or under the material by emitting heat under the radiative cooling device to the outside while minimizing the absorption of light in a solar spectrum by forming a paint coating layer with excellent radiative cooling performance on various surfaces.

Further, it is possible to provide a radiative cooling device with excellent radiative cooling performance by forming a paint coating layer which absorb less sunlight and has higher emissivity in a sky window than conventional paints.

Further, it is possible to provide a rigid or flexible radiative cooling device by forming a paint coating layer on a rigid or flexible plate.

Further, it is possible to perform a radiative cooling function and apply a radiative cooling capacity even to fabric materials such as cloths and the surface of an umbrella through dyeing by forming a paint coating layer having a radiative cooling function on non-planar plate such as the surface of a copper pipe for heat exchange or a vehicle roof.

Further, it is possible to provide a radiative cooling device with hydrophobicity which further includes a polymeric protective layer to prevent the penetration of foreign substances such as moisture and air.

Further, it is possible to provide a radiative cooling device which cools below an ambient temperature without energy consumption even in the day time when the sun is shining or the night time when the sun is not shining.

Further, it is possible to provide a cooling function without energy consumption by being applied to an outer surface of a material requiring cooling, such as construction materials, glass, automotive materials, aviation equipment, energy-saving data centers, electronic devices, solar cells, etc.

Further, it is possible to prevent skin burns by sunlight during the day time by being applied to wearable devices, clothes, shoes, umbrellas, etc.

Further, it is possible to provide a stable radiative cooling function even when being exposed to an external environment for a long time by applying a plate made of a ceramic material with excellent chemical stability and mechanical property.

A radiative cooling device may include a reflective layer formed on a substrate and responsible for reflecting sunlight having wavelengths corresponding to ultraviolet, visible, and near-infrared regions; and a radiative cooling layer formed on the reflective layer and responsible for absorbing sunlight having a wavelength corresponding to a mid-infrared region and emitting the sunlight as heat, wherein the radiative cooling layer includes a first radiation layer including an uneven pattern; and a second radiation layer formed on the first radiation layer and having a refractive index different from that of the first radiation layer.

Preferably, in the radiative cooling layer, the first radiation layer and the second radiation layer may be repeatedly formed.

Preferably, the reflective layer may include at least one of silver (Ag), aluminum (Al), nickel (Ni), chromium (Cr), lithium (Li), Aurum (Au), and platinum (Pt).

Preferably, each of the first radiation layer and the second radiation layer may include at least one of fine particles made of an oxide or a nitride and a polymer.

Preferably, the fine particles may have a diameter of 10 nm to 20 $\mu$m .

Preferably, the fine particles may include at least one of silica ($SiO_2$), zirconium oxide ($ZrO_2$), alumina ($Al_2O_3$), titanium dioxide ($TiO_2$), and silicon nitride ($Si_3N_4$).

Preferably, the polymer may be polydimethylsiloxane (PDMS) or dipentaerythritol penta/hexa acrylate (DPHA).

Preferably, each of the first radiation layer and the second radiation layer may have a thickness of 10 nm to 10 um.

Preferably, the radiative cooling layer may include a mid-infrared light absorption layer formed on the reflective layer and responsible for absorbing sunlight having a wavelength corresponding to a mid-infrared region and emitting the sunlight as heat; and a coating layer formed on the mid-infrared light absorption layer and including a first coating layer and a second coating layer having different refractive indexes with respect to sunlight having a wavelength corresponding to a visible region. In this case, the first coating layer may have a greater refractive index than the second coating layer with respect to sunlight having a wavelength corresponding to a visible region.

Preferably, the coating layer may reflect sunlight having a wavelength corresponding to a visible region.

Preferably, in the coating layer, the first coating layer and the second coating layer may be repeatedly formed.

Preferably, a difference in refractive index between the first coating layer and the second coating layer may be 0.4 to 3.0.

Preferably, the first coating layer may include at least one of ZnS, Si, and Ge, and the second coating layer may include $CaF_2$.

A method of manufacturing a radiative cooling device includes a step of forming a reflective layer for reflecting sunlight having wavelengths corresponding to ultraviolet, visible, and near-infrared regions on a substrate; and a step of forming, on the reflective layer, a radiative cooling layer for absorbing sunlight having a wavelength corresponding to a mid-infrared region and emitting the sunlight as heat, wherein the step of forming the radiative cooling layer includes a step of forming, on the reflective layer, a first radiation layer including an uneven pattern; and a step of forming, on the first radiation layer, a second radiation layer having a refractive index different from that of the first radiation layer.

Preferably, the radiative cooling layer is formed on the reflective layer, and the first radiation layer and the second radiation layer may be repeatedly formed in the radiative cooling layer.

Preferably, the first radiation layer is formed to have an uneven pattern using a stamp after the reflective layer is coated with at least one of fine particles made of an oxide or a nitride and a polymer.

Preferably, the second radiation layer is formed by spin-coating at least one of fine particles made of an oxide or a nitride and a polymer on the substrate.

Preferably, the spin coating is performed for 30 to 40 seconds.

Preferably, the step of forming the radiative cooling layer includes a step of forming, on the reflective layer, a mid-infrared light absorption layer for absorbing sunlight having a wavelength corresponding to a mid-infrared region and emitting the sunlight as heat; and a step of forming, on the mid-infrared light absorption layer, a coating layer for reflecting sunlight having a wavelength corresponding to a visible region. In the step of forming the coating layer, a first coating layer and a second coating layer having different refractive indexes with respect to sunlight having a wavelength corresponding to a visible region may be formed on the mid-infrared light absorption layer. In this case, the first coating layer may have a greater refractive index than the second coating layer with respect to sunlight having a wavelength corresponding to a visible region.

Preferably, in the coating layer, the first coating layer and the second coating layer are repeatedly formed. A white radiative cooling device including a substrate is provided; and a white radiative cooling layer formed on the substrate, wherein, in the white radiative cooling layer, fine particles including a metal oxide, a metal nitride, a metal fluoride, a metal sulfate, or a metal carbonate or a polymer that reflects and scatters sunlight having a wavelength corresponding to a visible region are embedded in a polymer matrix that absorbs sunlight having a wavelength corresponding to a mid-infrared region and emits the sunlight as heat, wherein the white radiative cooling layer absorbs sunlight having a wavelength corresponding to a mid-infrared region and emits the sunlight as heat while reflecting and scattering sunlight having a wavelength corresponding to a visible region.

Preferably, the white radiative cooling device becomes white due to reflection and scattering of sunlight having a wavelength corresponding to a visible region by the metal oxide-containing fine particles included in the white radiative cooling layer.

Preferably, the polymer matrix and the fine particles including the polymer have different refractive indexes, and the white radiative cooling device becomes white due to reflection and scattering of sunlight having a wavelength corresponding to a visible region by the polymer-containing fine particles included in the white radiative cooling layer.

Preferably, the polymer matrix includes at least one of polydimethylsiloxane (PDMS), polymethyl methacrylate (PMMA), dipentaerythritol penta/hexa acrylate (DPHA), polyvinylidene fluoride (PVDF), and polyurethane acrylate (PUA).

Preferably, the metal oxide includes at least one of titanium dioxide ($TiO_2$), zirconium oxide ($ZrO_2$), alumina ($Al_2O_3$), and zinc oxide (ZnO).

Preferably, the polymer includes at least one of polyvinylidene fluoride (PVDF) and polyurethane acrylate (PUA).

Preferably, the white radiative cooling device further includes, on a lower surface of the white radiative cooling layer, a reflection enhancement layer for additionally reflecting sunlight having a wavelength corresponding to a visible region.

Preferably, the reflection enhancement layer includes at least one of silver (Ag), aluminum (Al), nickel (Ni), chromium (Cr), lithium (Li), Aurum (Au), and platinum (Pt).

Preferably, in the white radiative cooling device, the reflection enhancement layer and the white radiative cooling layer are repeatedly formed.

A white radiative cooling device is provided including a substrate; and a white radiative cooling layer formed on the substrate, wherein, in white radiative cooling layer, the fine particles for reflecting and scattering sunlight having a wavelength corresponding to a visible region and fluorescent particles for emitting fluorescence are embedded in a polymer matrix for absorbing sunlight having a wavelength corresponding to a mid-infrared region and emitting the sunlight as heat, wherein the white radiative cooling layer absorbs sunlight having a wavelength corresponding to a mid-infrared region and emits the sunlight as heat while reflecting and scattering sunlight having a wavelength corresponding to a visible region.

Since a radiative cooling layer includes an uneven pattern, the surface area thereof is increased. Accordingly, the mid-infrared emissivity of a radiative cooling device can be increased, thereby improving the cooling efficiency thereof.

By forming a radiative cooling layer using an oxide, a nitride, or a polymer capable of emitting mid-infrared light, mid-infrared emissivity can be increased, thereby improving the cooling efficiency of a radiative cooling device.

By forming a radiative cooling layer using fine particles made of an oxide or a nitride, a polymer, or a mixture of the fine particles and the polymer, mid-infrared emissivity can be increased, thereby improving the cooling efficiency of a radiative cooling device.

By forming a radiative cooling layer using materials having a high refractive index and a low refractive index with respect to visible light, visible light reflectance can be maximized, thereby improving the cooling efficiency of a radiative cooling device.

By forming a white radiative cooling layer including fine particles made of a metal oxide, or a polymer that reflects and scatters visible light, a radiative cooling device can appear white.

By reflecting all incident sunlight, cooling performance can be improved.

By forming a white radiative cooling layer including a polymer matrix and fine particles including a polymer, mass production can be easy, manufacturing cost can be reduced, and various physical properties can be adjusted.

By including a reflection enhancement layer on the lower surface of a white radiative cooling layer, visible light reflectance can be increased, thereby improving cooling performance.

By forming a white radiative cooling layer including fluorescent particles, a white radiative cooling device can exhibit a variety of colors in addition to white.

Therefore, the present disclosure has been made in view of the above problems, and it is an object of the present disclosure to improve the radiative cooling performance of a radiative cooling device by providing a radiative cooling device having maximum emissivity in a wavelength range corresponding to the atmospheric window through a radiative cooling layer having a multilayer structure based on polymers and inorganic materials.

It is another object of the present disclosure to improve the radiative cooling performance of a radiative cooling device by improving reflectance using a metal or an alloy material that has high reflectance for sunlight and constituting a solar reflective layer having excellent chemical stability.

It is still another object of the present disclosure to improve the radiative cooling performance of a radiative cooling device by providing a radiative cooling device that has maximum emissivity in a wavelength range corresponding to the atmospheric window by including a multilayer structure consisting of various layers such as an inorganic layer, a polymer layer, a composite inorganic layer, and an inorganic material-polymer composite layer.

It is still another object of the present disclosure to provide a radiative cooling enhancement layer on the lower surface of a white radiative cooling layer, visible light reflectance can be increased, thereby improving cooling performance.

According to an embodiment of the present invention, by forming a white radiative cooling layer including fluorescent particles, a white radiative cooling device can exhibit a variety of colors in addition to white.

Therefore, the present disclosure has been made in view of the above problems, and it is an object of the present disclosure to improve the radiative cooling performance of a radiative cooling device by providing a radiative cooling device having maximum emissivity in a wavelength range corresponding to the atmospheric window through a radiative cooling layer having a multilayer structure based on polymers and inorganic materials.

It is another object of the present disclosure to improve the radiative cooling performance of a radiative cooling device by improving reflectance using a metal or an alloy material that has high reflectance for sunlight and constituting a solar reflective layer having excellent chemical stability.

It is still another object of the present disclosure to improve the radiative cooling performance of a radiative cooling device by providing a radiative cooling device that has maximum emissivity in a wavelength range corresponding to the atmospheric window by including a multilayer structure consisting of various layers such as an inorganic layer, a polymer layer, a composite inorganic layer, and an inorganic material-polymer composite layer.

It is still another object of the present disclosure to provide a radiative cooling device capable of realizing high reflectance by using only a multilayer structure without a solar reflective layer, wherein the multilayer structure serves as a solar reflective layer.

It is yet another object of the present disclosure to provide a radiative cooling device capable of cooling the surface temperature of materials used in automobiles and buildings to below ambient temperature without consuming energy during day time when sunlight is incident or even during night time when sunlight is not incident.

In accordance with one aspect of the present disclosure, provided is a radiative cooling device having a multilayer structure, the radiative cooling device including a multilayer structure including at least one pair of at least one of an inorganic layer, a polymer layer, a composite inorganic layer, a composite polymer layer, and an inorganic material-polymer composite layer; and a radiative cooling layer for absorbing and emitting infrared light in a wavelength range corresponding to an atmospheric window while reflecting sunlight based on the multilayer structure.

The multilayer structure may include at least one of a first structure in which the inorganic layer is laminated on the polymer layer, a second structure in which the inorganic layer is laminated on the polymer layer and the polymer layer is laminated thereon, a third structure in which the polymer layer is laminated on the inorganic layer, and a fourth structure in which the polymer layer is laminated on the inorganic layer and the inorganic layer is laminated thereon.

The multilayer structure may include at least one of a first repeat structure in which the first structure is repeatedly laminated at least once, a second repeat structure in which the second structure is repeatedly laminated at least once, a third repeat structure in which the third structure is repeatedly laminated at least once, and a fourth repeat structure in which the fourth structure is repeatedly laminated at least once.

The multilayer structure may include at least one of a fifth structure in which the inorganic layer is laminated on the polymer layer and a polymer layer based on a polymer different from a polymer forming the polymer layer is laminated thereon, and a sixth structure in which the polymer layer is laminated on the inorganic layer and an inorganic layer based on an inorganic material different from an inorganic material forming the inorganic layer is laminated thereon.

The multilayer structure may include at least one of a fifth repeat structure in which the fifth structure is repeatedly laminated at least once and a sixth repeat structure in which the sixth structure is repeatedly laminated at least once.

The multilayer structure may include at least one of a seventh structure in which the inorganic layer is laminated on the inorganic material-polymer composite layer and the inorganic material-polymer composite layer is laminated thereon, an eighth structure in which the inorganic layer is laminated on the inorganic material-polymer composite layer and an inorganic material-polymer composite layer including inorganic particles different from inorganic particles included in the inorganic material-polymer composite layer is laminated thereon, a ninth structure in which the inorganic layer is laminated on the inorganic material-polymer composite layer and an inorganic material-polymer composite layer based on a polymer different from a polymer forming the inorganic material-polymer composite layer is laminated thereon, a tenth structure in which the polymer layer is laminated on the composite inorganic layer and the inorganic material-polymer composite layer is laminated thereon, an eleventh structure in which the composite inorganic layer is laminated on the polymer layer and the polymer layer is laminated thereon, and a twelfth structure in which the inorganic layer is laminated on the composite polymer layer and the composite polymer layer is laminated thereon.

The multilayer structure may include at least one of a seventh repeat structure in which the seventh structure is repeatedly laminated at least once, an eighth repeat structure in which the eighth structure is repeatedly laminated at least once, a ninth repeat structure in which the ninth structure is repeatedly laminated at least once, a tenth repeat structure in which the tenth structure is repeatedly laminated at least once, an eleventh repeat structure in which the eleventh structure is repeatedly laminated at least once, and a twelfth repeat structure in which the twelfth structure is repeatedly laminated at least once.

The inorganic layer may be formed of at least one inorganic material of $Al_2O_3$, $SiO_2$, $BaSO_4$, $LiF$, $CaSO_4$, $ZnO$, $TiO_2$, $ZrO_2$, $CaF_2$, $MgF_2$, $HfOz$, $CaCO_3$, $AlN$, $MgPHO_4$, and $Si_3N_4$.

The polymer layer may be formed of at least one polymer of polydimethyl siloxane (PDMS), polyurethane acrylate (PUA), polyvinylidene fluoride (PVDF), polyethylene terephthalate (PET), polyvinyl chloride (PVC), polyvinylidene fluoride (PVDF), dipentaerythritol hexaacrylate (DPHA), polymethyl methacrylate (PMMA), polybutyl methacrylate (PBMA), perfluoropolyether (PFPE), polycarbonate (PC), PTFE(Polytetrafluoroethylene), Spectralon, ETFE(Ethylene Tetra fluoro Ethylene), and polyethylene (PE).

The inorganic material-polymer composite layer may be formed of a mixture including at least one polymer of polydimethyl siloxane (PDMS), polyurethane acrylate (PUA), polyvinylidene fluoride (PVDF), polyethylene terephthalate (PET), polyvinyl chloride (PVC), polyvinylidene fluoride (PVDF), dipentaerythritol hexaacrylate (DPHA), polymethyl methacrylate (PMMA), polybutyl methacrylate (PBMA), perfluoropolyether (PFPE), polycarbonate (PC), PTFE(Polytetrafluoroethylene), Spectralon, ETFE(Ethylene Tetra fluoro Ethylene), and polyethylene (PE) and at least one inorganic material of $Al_2O_3$, $SiO_2$, $BaSO_4$, LiF, $CaSO_4$, ZnO, $TiO_2$, $ZrO_2$, $CaF_2$, $MgF_2$, HfOz, $CaCO_3$, AlN, $MgPHO_4$, and $Si_3N_4$.

The composite inorganic layer may be formed by mixing any one first inorganic material selected from $Al_2O_3$, $SiO_2$, $BaSO_4$, LiF, $CaSO_4$, ZnO, $TiO_2$, $ZrO_2$, $CaF_2$, $MgF_2$, $HfO_2$, $CaCO_3$, AlN, $MgPHO_4$, and $Si_3N_4$ and a second inorganic material selected from $Al_2O_3$, $SiO_2$, $BaSO_4$, LiF, $CaSO_4$, ZnO, $TiO_2$, $ZrO_2$, $CaF_2$, $MgF_2$, $HfO_2$, $CaCO_3$, AlN, $MgPHO_4$, and $Si_3N_4$, wherein the second inorganic material is different from the first inorganic material.

The composite polymer layer may be formed by mixing a first polymer selected from polydimethyl siloxane (PDMS), polyurethane acrylate (PUA), polyvinylidene fluoride (PVDF), polyethylene terephthalate (PET), polyvinyl chloride (PVC), polyvinylidene fluoride (PVDF), dipentaerythritol hexaacrylate (DPHA), polymethyl methacrylate (PMMA), polybutyl methacrylate (PBMA), perfluoropolyether (PFPE), polycarbonate (PC), and polyethylene (PE), PTFE(Polytetrafluoroethylene), Spectralon, ETFE(Ethylene Tetra fluoro Ethylene), and a second polymer selected from polydimethyl siloxane (PDMS), polyurethane acrylate (PUA), polyvinylidene fluoride (PVDF), polyethylene terephthalate (PET), polyvinyl chloride (PVC), polyvinylidene fluoride (PVDF), dipentaerythritol hexaacrylate (DPHA), polymethyl methacrylate (PMMA), polybutyl methacrylate (PBMA), perfluoropolyether (PFPE), polycarbonate (PC), PTFE(Polytetrafluoroethylene), Spectralon, ETFE(Ethylene Tetra fluoro Ethylene), and polyethylene (PE), wherein the second polymer is different from the first polymer.

The radiative cooling device having a multilayer structure according to one embodiment of the present disclosure may further include a solar reflective layer formed of at least one of a metal material, at least one inorganic particle, and a polymer including the inorganic particle and responsible of reflecting sunlight.

The solar reflective layer may be formed of at least one metal material selected from silver (Ag), aluminum (Al), gold (Au), copper (Cu), titanium (Ti), chromium (Cr), manganese (Mn), iron (Fe), and platinum (Pt) or an alloy material prepared by combining two or more metal materials selected therefrom.

The solar reflective layer may be formed of at least one inorganic particle of $MgF_2$, $Al_2O_3$, $SiO_2$, MgO, ZnO, $CaCO_3$, AlN, $MgPHO_4$, and $TiO_2$ or a polymer including the inorganic particle, wherein the polymer includes at least one polymer of polydimethyl siloxane (PDMS), polyurethane acrylate (PUA), polyvinylidene fluoride (PVDF), polyethylene terephthalate (PET), polyvinyl chloride (PVC), polyvinylidene fluoride (PVDF), dipentaerythritol hexaacrylate (DPHA), polymethyl methacrylate (PMMA), polybutyl methacrylate (PBMA), perfluoropolyether (PFPE), polycarbonate (PC), PTFE(Polytetrafluoroethylene), Spectralon, ETFE(Ethylene Tetra fluoro Ethylene), and polyethylene (PE), wherein the solar reflective layer reflects sunlight based on differences in refractive indexes of the inorganic particle.

**BRIEF DESCRIPTION OF THE DRAWINGS**

FIG. 1 is a diagram illustrating a radiative cooling device including a paint coating layer composed of nano or microparticles according to an embodiment of the present invention.

FIGS. 2A and 2B are diagrams illustrating a core and shell structure of the nano or microparticle forming the paint coating layer according to an embodiment of the present invention.

FIG. 3 is a diagram illustrating a ratio obtained by dividing an extinction coefficient for each wavelength by a refractive index of a thin film composed of nano or microparticles according to an embodiment of the present invention.

FIGS. 4A to 4D are diagrams illustrating optical properties and cooling properties according to a volumetric ratio of the nano or microparticles forming the paint coating layer according to an embodiment of the present invention.

FIGS. 5A and 5B are diagrams illustrating emissivity for each angle according to a volumetric ratio of the nano or microparticles forming the paint coating layer according to an embodiment of the present invention.

FIGS. 6A to 6C are diagrams illustrating optical properties and cooling properties according to a change in thickness of the paint coating layer according to an embodiment of the present invention.

FIGS. 7A to 7C are diagrams illustrating various images of the paint coating layer according to an embodiment of the present invention.

FIGS. 8A and 8B are diagrams illustrating optical properties and average emissivity for each angle in the sky window of the radiative cooling device including the paint coating layer according to an embodiment of the present invention.

FIGS. 9A to 9E are diagrams illustrating cooling power and cooling temperature of the radiative cooling device including the paint coating layer according to an embodiment of the present invention.

FIGS. 10A to 10F are diagrams illustrating a surface cooling measurement experiment of the radiative cooling device including the paint coating layer according to an embodiment of the present invention.

FIGS. 11A to 11F are diagrams illustrating a water cooling measurement experiment of the radiative cooling device including the paint coating layer according to an embodiment of the present invention.

FIGS. 12A and 12B are diagrams illustrating various surfaces formed with the paint coating layer according to an embodiment of the present invention.

FIGS. 13A and 13B are diagrams illustrating a comparison of a visible image and an infrared image formed with the paint coating layer according to an embodiment of the present invention.

FIGS. 14A and 14B are diagrams illustrating an experiment using various surfaces which may be applied with the paint coating layer according to an embodiment of the present invention.

FIGS. 15A and 15B are diagrams illustrating an experiment result using various surfaces which may be applied with the paint coating layer according to an embodiment of the present invention.

FIGS. 16A to 6E are diagrams illustrating optical properties and cooling properties according to a type of binder to be used for forming the paint coating layer according to an embodiment of the present invention.

FIG. 17 is a diagram illustrating net cooling power and cooling temperature of the paint coating layer according to an embodiment of the present invention.

FIG. 18 is a diagram illustrating optical properties according to a volumetric ratio of nano or microparticles forming the paint coating layer according to an embodiment of the present invention.

FIGS. 19A to 19D are diagrams illustrating optical properties and cooling power according to a ratio of the binder and the nano or microparticles forming the paint coating layer according to an embodiment of the present invention.

FIGS. 20A and 20B each show a cross-sectional view of a radiative cooling device according to an embodiment of the present invention.

FIGS. 21A and 21B each show a cross-sectional view of a radiative cooling device according to another embodiment of the present invention.

FIG. 22 is a flowchart for explaining a method of manufacturing a radiative cooling device according to an embodiment of the present invention.

FIG. 23 is a flowchart for explaining a method of manufacturing a radiative cooling device according to another embodiment of the present invention.

FIG. 24 is a graph showing absorbance according to whether the first radiation layer and the second radiation layer are repeatedly laminated according to examples and comparative examples of the present invention.

FIG. 25 is a graph showing the absorptivity and emissivity of a radiative cooling device according to Example 2 of the present invention.

FIG. 26 is a graph showing the temperature of a radiative cooling device according to Example 2 of the present invention during the daytime for each day according to solar radiation quantity.

FIG. 27 is a graph showing the absorptivity and emissivity of a radiative cooling device according to Example 3-1 of the present invention.

FIG. 28 is a graph showing the external temperature of radiative cooling devices according to Example 3-1 and Comparative Example 2 of the present invention during daytime according to solar radiation quantity.

FIG. 29 is a graph showing the temperature of radiative cooling devices according to Example 3-1, Example 3-2, and Comparative Example 2 of the present invention during nighttime.

FIG. 30 is a graph showing the absorbance of radiative cooling devices according to Example 4-1, Example 4-2, and Comparative Example 3 of the present invention.

FIG. 31 is a graph showing the temperature and external temperature of radiative cooling devices according to Example 4-1 and Example 4-2 of the present invention during daytime.

FIG. 32 is a graph showing the temperature and external temperature of radiative cooling devices according to Example 4-1 and Example 4-2 of the present invention during the night.

FIGS. 33A to 33C are scanning electron microscope (SEM) images showing the cross section of a radiative cooling device according to Example 5 of the present invention.

FIG. 34 is a graph showing the absorbance of a radiative cooling device according to Example 5 of the present invention according to the content of DPHA.

FIG. 35 is a graph showing the temperature of a radiative cooling device according to Example 5 of the present invention by observation period according to solar radiation quantity.

FIG. 36 is a graph showing the absorptivity of a radiative cooling device according to Example 6-1 of the present invention according to the content of fine particles.

FIG. 37 is a graph showing the absorptivity of a radiative cooling device according to Example 6-2 of the present invention according to the diameter of fine particles.

FIG. 38 is a graph showing the temperature of a radiative cooling device according to Example 5 of the present invention according to the content of fine particles according to solar radiation quantity.

FIG. 39 is a graph showing absorptivity according to the presence or absence of an uneven pattern according to Example 7 and Comparative Example 4 of the present invention.

FIG. 40 is a graph showing the mid-infrared emissivity of radiative cooling devices according to Example 8, Comparative Example 5-1, and Comparative Example 5-2 of the present invention.

FIGS. 41A to 41C are graphs showing the temperature and the temperature change of radiative cooling devices according to Example 8, Comparative Example 5-1, and Comparative Example 5-2 of the present invention over time.

FIGS. 42A to 42C each show a cross-sectional view of a white radiative cooling device according to an embodiment of the present invention.

FIGS. 43A and 43B are graphs showing the absorptivity of a white radiative cooling device according to an embodiment of the present invention according to the content of fine particles.

FIG. 44 is a graph showing the temperature of a white radiative cooling device including fine particles according to an embodiment of the present invention over time.

FIG. 45A is an image showing the appearance of a conventional radiative cooling device, and FIG. 45B is an image showing the appearance of a white radiative cooling device according to an embodiment of the present invention.

FIG. 46 is a graph showing the absorptivity of a white radiative cooling device according to the types of polymers included in a white radiative cooling layer according to an embodiment of the present invention.

FIG. 47 is a graph showing the temperature of a white radiative cooling device including polymer fine particles according to an embodiment of the present invention over time.

FIGS. 48A and 48B are drawings for explaining radiative cooling devices having a multilayer structure according to one embodiment of the present disclosure.

FIGS. 49A to 49D are drawings for explaining radiative cooling devices having a multilayer structure based on polymer layers and inorganic layers according to one embodiment of the present disclosure.

FIGS. 50A and 50B are drawings for explaining radiative cooling devices having a multilayer structure based on one or more polymer layers and one or more inorganic layers according to one embodiment of the present disclosure.

FIGS. 51A and 51C are drawings for explaining radiative cooling devices having a multilayer structure based on a polymer layer, an inorganic layer, a composite polymer layer, a composite inorganic layer, and an inorganic material-polymer composite layer according to one embodiment of the present disclosure.

FIGS. 52A to 52F show electron microscope images of a radiative cooling device having a multilayer structure according to one embodiment of the present disclosure.

FIGS. 53A to 53C are graphs for explaining the optical properties of a radiative cooling device having a multilayer structure according to one embodiment of the present disclosure.

## DETAILED DESCRIPTION OF THE PREFERRED EMBODIMENT

Hereinafter, various embodiments of the present disclosure will be described with reference to the accompanying drawings.

The embodiments and terms used therein are not intended to limit the technology described in the present disclosure to a specific embodiment, and it should be understood to include various modifications, equivalents, and/or substitutes for the embodiment.

Hereinafter, in describing various embodiments, the detailed description of related known functions or constitutions will be omitted if it is determined that the functions or constitutions unnecessarily make the gist of the present invention unclear.

In addition, terms to be described below, as terms which are defined in consideration of functions in various embodiments, may vary depending on the intention of a user or an operator or usual practices. Accordingly, the terms need to be defined based on contents throughout this specification.

In connection with the description of the drawings, similar reference numerals may be used for similar components.

A singular form may include a plural form unless otherwise clearly meant in the contexts.

In the present disclosure, expressions such as "A or B" or "at least one of A and/or B" may include all possible combinations of items listed together.

Expressions such as "first," and "second," can modify the corresponding components regardless of their order or importance, and will be used only to distinguish one component from another component, but are not limit the components.

When any (e.g., first) component is referred to as being "(functionally or communicatively) connected" or "accessed" to the other (e.g., second) component, the component may be directly connected to the other component, or may be connected through another component (e.g., a third component).

In this specification, "configured to" may be used interchangeably with, for example, "suitable for," "having the ability to," "changed to", "made to", "capable of", or "designed to" in hardware or software, depending on the situation.

In some situations, the expression "a device configured to" may mean that the device "capable of" together with other devices or parts.

For example, the phrase "a processor configured to perform A, B, and C" may mean a dedicated processor (e.g., an embedded processor) for performing the operation, or a general-purpose processor (e.g., a CPU or application processor) capable of performing the corresponding operations by executing one or more software programs stored in a memory device.

Also, the term 'or' means an inclusive logical sum 'inclusive or' rather than an exclusive logical sum 'exclusive or'.

That is, unless stated otherwise or unless clear from the context, the expression of 'x uses a or b' means any one of natural inclusive permutations.

Terms such as 'part' and 'unit' used herein mean a unit that processes at least one function or operation, which may be implemented by hardware or software or a combination of hardware and software.

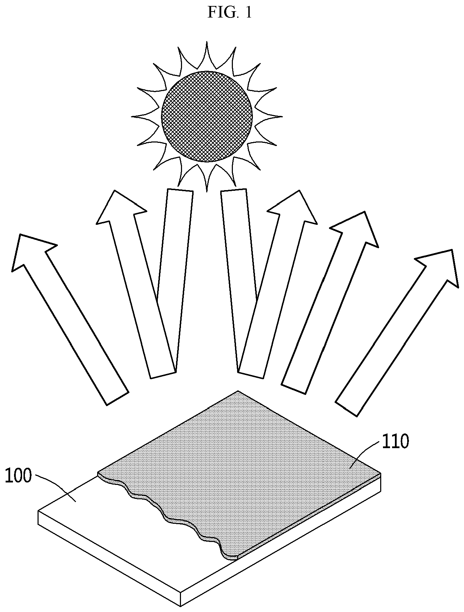

FIG. 1 is a diagram illustrating a radiative cooling device including a paint coating layer composed of nano or microparticles according to an embodiment of the present invention.

Referring to FIG. 1, according to an embodiment of the present invention, a radiative cooling device 100 includes a paint coating layer 110.

For example, the radiative cooling device 100 may be a plate coated with the paint coating layer 110. For example, the plate may be referred to as various surfaces.

In other words, the radiative cooling device 100 may have a structure in which the paint coating layer 110 is formed by coating a radiative cooling paint on the plate.

According to an embodiment of the present invention, if the radiative cooling device is implemented to cool below an ambient temperature without energy consumption even during the day time when the sun is shining or at the night time when the sun is not shining, the radiative cooling device 100 may be applied to an outer surface of a material required for cooling such as architecture, automobiles, etc. to perform a cooling function without energy consumption.

For example, the radiative cooling device 100 has basically high bandgap energy of nano or microparticle materials and thus hardly absorbs sunlight in an ultraviolet-near visible region unlike conventional paints using $TiO_2$.

In addition, since the radiative cooling device 100 has each section having partially high emissivity in the sky window, the emissivity in the sky window may be further increased.

In addition, the materials forming the paint coating layer 110 included in the radiative cooling device 100 are basically inexpensive and rich and enable a solution process, so that low-cost and large-area processes are enabled like a polymer-based radiative cooling device.

According to an embodiment of the present invention, the paint coating layer 110 may be formed by coating or dyeing, on various surfaces, a paint solution mixed with nano or microparticles of which a particle size and a composition are determined in consideration of infrared emissivity and reflectance to incident sunlight in a wavelength range corresponding to a sky window and a binder to mechanically connect the surfaces of the nano or microparticles in a solvent.

As an example, the nano or microparticles may include at least one nano or microparticle material of $SiO_2$, $Al_2O_3$, $CaCO_3$, $CaSO_4$, c-BN, $ZrO_2$, $MgHPO_4$, $Ta_2O_5$, AlN, LiF, $MgF_2$, $HfO_2$, and $BaSO_4$ and a mixed material mixed with the at least one nano or microparticle material.

According to an embodiment of the present invention, the paint coating layer 110 may be determined to improve infrared emissivity and reflectance by overlapping infrared emissivity and reflectance of each nano or microparticle.

As an example, the paint coating layer 110 may be formed by coating or dyeing, on various surfaces, a paint solution in which powders of the nano or microparticles are mixed in any one volumetric ratio of 1:0, 3:1, 1:1, 1:3, and 0:1.

Here, in the powder of the nano or microparticles, 3 to 4 various types of nano or microparticle materials may be mixed in the paint solution with various volumetric ratios.

For example, when powders of the nano or microparticles of $SiO_2$, $Al_2O_3$, $CaCO_3$, and $CaSO_4$ are mixed in the paint solution, the powders of the nano or microparticles of $SiO_2$, $Al_2O_3$, $CaCO_3$, and $CaSO_4$ may be mixed in various volumetric ratios of 1:1:1:1, 1:2:0:1, and 1:0:3:1.

In addition, a powder of nano or microparticles consisting of a core of $SiO_2$ and a shell of $Al_2O_3$ and a powder of nano or microparticles consisting of a core of $CaCO_3$ and a shell of $CaSO_4$ are mixed in any one volumetric ratio of 1:0, 3:1, 1:1, and 1:3 to prepare a paint solution.

According to an embodiment of the present invention, the binder may include at least one binder material of dipentaerythritol hexaacrylate (DPHA), polytetrafluoroethylene (DPHA), poly urethane acrylate (PUA), ethylene tetra fluoro ethylene (ETFE), polyvinylidene fluoride (PVDF), acrylic polymers, polyester polymers, and polyurethane polymers.

For example, the paint coating layer 110 may increase infrared emissivity based on infrared emissivity in a wavelength range corresponding to a sky window of at least one binder material.

According to an embodiment of the present invention, the paint coating layer 110 may be formed by coating or dyeing, on various surfaces, a paint solution in which the nano or microparticles and the binder are mixed in a volumetric ratio of x:1. Here, x may have a range of 0.2 to 2.5.

For example, the various surfaces may include at least one of a wooden surface, a glass surface, a metal plate surface, an umbrella surface, a house model surface, and a cloth surface.

According to an embodiment of the present invention, the radiative cooling device 100 may be additionally formed with a polymeric protective layer (not illustrated) on the paint coating layer 110 to block penetration of foreign substances.

For example, the thickness of the paint coating layer 110 may be 30 $\mu$m to 650 $\mu$m, and as the thickness increases, the reflectance may increase and the transmittance may decrease.

According to an embodiment of the present invention, the paint coating layer 110 may be formed by coating or dyeing, on various surfaces, the paint solution through at least one solution process of spin coating, bar coating, spray coating, doctor blading, and blade coating.

For example, the paint solution according to an embodiment of the present invention may be prepared by arbitrarily adjusting sizes (particle sizes) and compositions of various types of nano or microparticles having high bandgap energy and partially high emissivity for long-wavelength infrared rays in a range of 8 $\mu$m to 13 $\mu$m as a wavelength range of the sky window so as to have high absorptivity (emissivity) in the entire region of the wavelength range of the sky window and mixing a binder material to mechanically connect the surfaces of various types of nano or microparticles and dispersing the mixed binder material in a solvent.

When the binder material is added to the mixed nano or microparticles, the binder material may connect the nano or microparticles to each other to increase the adhesion, thereby increasing durability.

In terms of optical properties, reflection of sunlight may be enhanced due to scattering of an interface between the nano or microparticles having a high refractive index and the polymeric binder material having a low refractive index.

In addition, the polymeric binder material may contribute to having high emissivity of the paint layer by having an extinction coefficient in the sky window.

According to an embodiment of the present invention, the paint coating layer 110 absorbs less sunlight than conventional paints, and has relatively high emissivity within the wavelength range of the sky window to have excellent radiative cooling performance.

In addition, in the radiative cooling device 100, adhesion, surface properties, and external resistance may be changed according to the addition of additional additives.

The present invention may provide a radiative cooling device capable of cooling a temperature on the surface of a material or under the material by emitting heat under the radiative cooling device to the outside while minimizing the absorption of light in a solar spectrum by forming a paint coating layer with excellent radiative cooling performance on various surfaces.

Further, the present invention may provide a radiative cooling device with excellent radiative cooling performance by forming a paint coating layer which absorb less sunlight and has higher emissivity in a sky window than conventional paints.

Further, the present invention may provide a rigid or flexible radiative cooling device by forming a paint coating layer on a rigid or flexible plate.

Further, the present invention may perform a radiative cooling function and apply a radiative cooling capacity even to fabric materials such as cloths and the surface of an umbrella through dyeing by forming a paint coating layer having a radiative cooling function on non-planar plate such as the surface of a copper pipe for heat exchange or a vehicle roof.

Further, , the present invention may provide a radiative cooling device with hydrophobicity which further include a polymeric protective layer to prevent the penetration of foreign substances such as moisture and air.

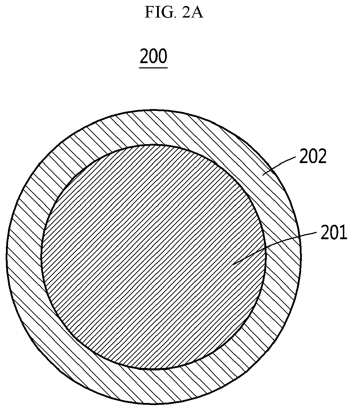

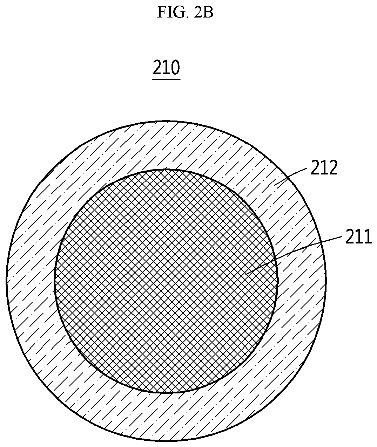

FIGS. 2A and 2B are diagrams illustrating a core and shell structure of a nano or microparticle forming the paint coating layer according to an embodiment of the present invention.

Referring to FIG. 2A, a nano or microparticle 200 in a paint for forming the paint coating layer according to an embodiment of the present invention may have a structure consisting of a core 201 and a shell 202.

For example, a material forming the core 201 and the shell 202 may include $SiO_2$, $Al_2O_3$, $CaCO_3$, $CaSO_4$, c-BN, $ZrO_2$, $MgHPO_4$, $Ta_2O_5$, AlN, LiF, $MgF_2$, $HfO_2$ and $BaSO_4$.

According to an embodiment of the present invention, the core 201 and the shell 202 may be formed of different materials, and may be formed in a combination having a synergistic effect with each other.

For example, the core 201 may be formed of at least one material of $SiO_2$, $Al_2O_3$, $CaCO_3$, $CaSO_4$, c-BN, $ZrO_2$, $MgHPO_4$, $Ta_2O_5$, AlN, LiF, $MgF_2$, $HfO_2$ and $BaSO_4$, and the shell 202 may be formed of at least one material of $SiO_2$, $Al_2O_3$, $CaCO_3$, $CaSO_4$, c-BN, $ZrO_2$, $MgHPO_4$, TazOs, AlN, LiF, $MgF_2$, $HfO_2$ and $BaSO_4$, and may be prepared in a paint form with a polymer.

For example, according to an embodiment of the present invention, the nano or microparticle is formed of the core 201 and the shell 202, and a nano or microparticle material forming the core 201 and a nano or microparticle material forming the shell 202 may be made of different materials.

In addition, the infrared emissivity and reflectance of the nano or microparticle material forming the core 201 and the infrared emissivity and reflectance of the nano or microparticle material forming the shell 202 may be determined so as to be complemented with each other for infrared emissivity and reflectance to incident sunlight in the wavelength range corresponding to the sky window.

Referring to FIG. 2B, a nano or microparticle 210 in a paint for forming the paint coating layer according to an embodiment of the present invention may have a structure consisting of a core 211 and a shell 212.

According to an embodiment of the present invention, the thickness of the shell 212 of the nano or microparticle 210 is adjusted to control at least one property of a reflective property, an absorption property, and a transmission property according to a difference in refractive index between the wavelength range corresponding to the sky window and the wavelength range of incident sunlight.

For example, when the thickness of the shell 212 of the nano or microparticle 210 is increased, the thickness of the paint coating layer may also be increased.

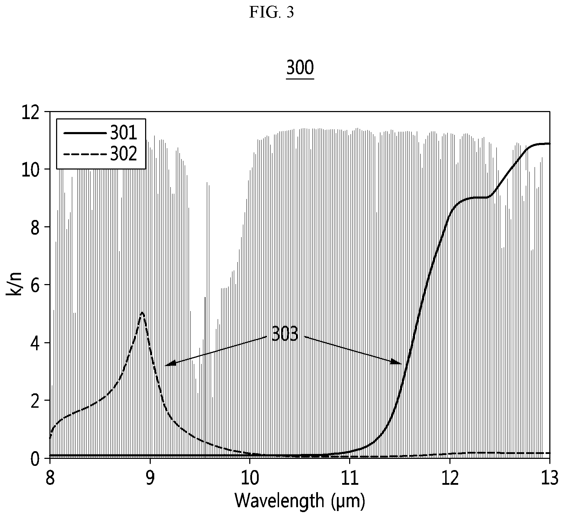

FIG. 3 is a diagram illustrating a ratio obtained by dividing an extinction coefficient for each wavelength by a refractive index of a thin film composed of nano or microparticles according to an embodiment of the present invention.

FIG. 3 illustrates a ratio obtained by dividing an extinction coefficient in each wavelength range by a refractive index of a thin film formed of $Al_2O_3$ and $SiO_2$ among nano or microparticles according to an embodiment of the present invention.

Referring to a graph 300 of FIG. 3, the graph 300 represents a ratio (k/n) by wavelength, a graph line 301 represents $Al_2O_3$, and a graph line 302 represents $SiO_2$.

Points 303 on the graph line 301 and the graph line 302 may represent complementary emission properties.

Since the graph line 301 is high after 12 $\mu$m and the graph line 302 is high at 8 to 10 $\mu$m, the graph line 301 represents an emission property after 12 $\mu$m and the graph line 302 represents an emission property at 8 to 10 $\mu$m.

Therefore, when $Al_2O_3$ and $SiO_2$ are mixed, these emission properties are superimposed to have high emissivity in the sky window area.

The above-described emission properties may be derived based on the following Equation 1.

[Equation 1]

$$ R = \frac{(n_0 - n_1)^2 + k_1{}^2}{(n_0 + n_1)^2 + k_1{}^2} $$

In Equation 1, R may represent reflectance, $n_0$ may represent a refractive index of air, $n_1$ may represent a refractive index of a medium, and k may represent an extinction coefficient of a material.

Since the nano and microparticles also have a similar tendency for the refractive index and the extinction coefficient for each wavelength of a thin film, a mixture of these materials having optimized composition and particle sizes may have high emissivity in the entire sky window as a result.

Accordingly, the radiative cooling device according to an embodiment of the present invention may have high emissivity in the entire sky window.

For example, the emissivity in the entire atmospheric transparency window may also be economical in manufacturing and material costs due to a simple coating process such as blade coating and drop casting and rich materials.

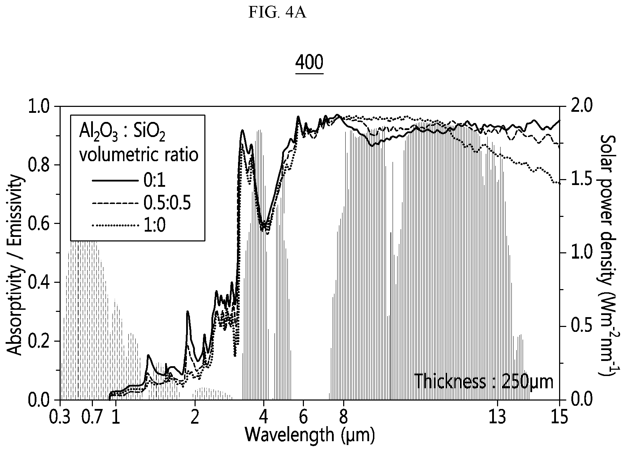

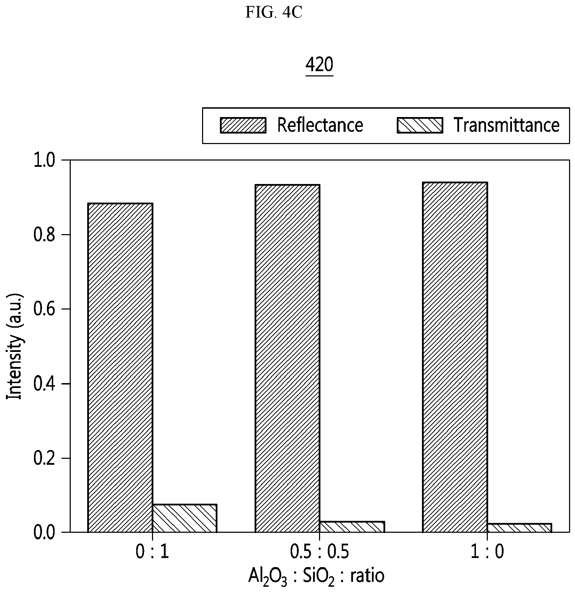

FIGS. 4A to 4D are diagrams illustrating optical properties and cooling properties according to a volumetric ratio of the nano or microparticles forming the paint coating layer according to an embodiment of the present invention.

FIGS. 4A to 4C illustrate changes in optical properties according to a change in volumetric ratio of $Al_2O_3$ and $SiO_2$ when the thickness of the paint coating layer according to an embodiment of the present invention is 250 $\mu$m.

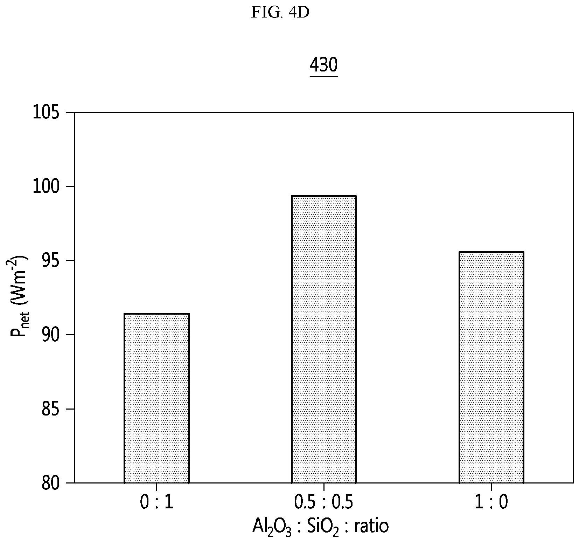

Meanwhile, FIG. 4D illustrates cooling properties according to a change in volumetric ratio of $Al_2O_3$ and $SiO_2$ when the thickness of the paint coating layer according to an embodiment of the present invention is 250 $\mu$m .

Referring to a graph 400 of FIG. 4A, when the ratios of $Al_2O_3$ and $SiO_2$ in the nano or microparticles forming the paint coating layer according to an embodiment of the present invention are 0:1, 0.5:0.5, and 1:0, changes in absorption/emissivity for each wavelength are illustrated.

It can be seen that when the ratio of $Al_2O_3$ and $SiO_2$ is 0.5:0.5 corresponding to 1:1, a graph line has high absorptivity/emissivity evenly in the wavelength range of the sky window.

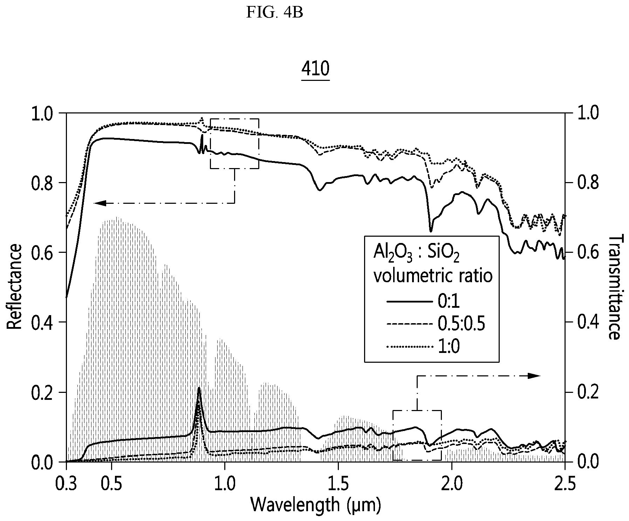

Referring to a graph 410 of FIG. 4B, when the ratios of $Al_2O_3$ and $SiO_2$ in the nano or microparticles forming the paint coating layer according to an embodiment of the present invention are 0:1, 0.5:0.5, and 1:0, changes in reflectance for each wavelength are illustrated.

It can be seen that when the ratio of $Al_2O_3$ and $SiO_2$ is 0.5:0.5 corresponding to 1:1, a graph line has high reflectance evenly in the wavelength range of the sky window.

Referring to a graph 420 of FIG. 4B, when the ratios of $Al_2O_3$ and $SiO_2$ in the nano or microparticles forming the paint coating layer according to an embodiment of the present invention are 0:1, 0.5:0.5, and 1:0, changes in reflectance and transmittance for each wavelength are illustrated.

When reflectance and transmittance are considered together, it may be effective that the ratio of $Al_2O_3$ and $SiO_2$ is 0.5:0.5.

Referring to a graph 430 of FIG. 4D, when only $Al_2O_3$ is present, the solar reflectance and transmittance are similar to the volumetric ratio of 0.5:0.5, but the radiative cooling power is smaller than the volumetric ratio of 0.5:0.5 due to the low emissivity after 12 $\mu$m. For example, the volumetric ratio of 0.5:0.5 is equal to 1:1.

In addition, when only $SiO_2$ is present, the reflectance of sunlight is small and the radiative cooling power is small according to the properties of $SiO_2$, which is a relatively low refractive material.

In the case of the paint according to an embodiment of the present invention mixed in a volumetric ratio of 0.5:0.5, it can be seen that the reflectance to sunlight is high, the transmittance is low, and the radiative cooling power is also the highest.

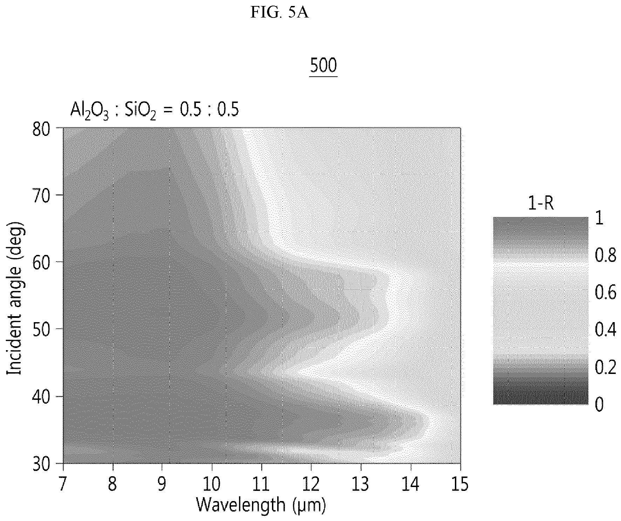

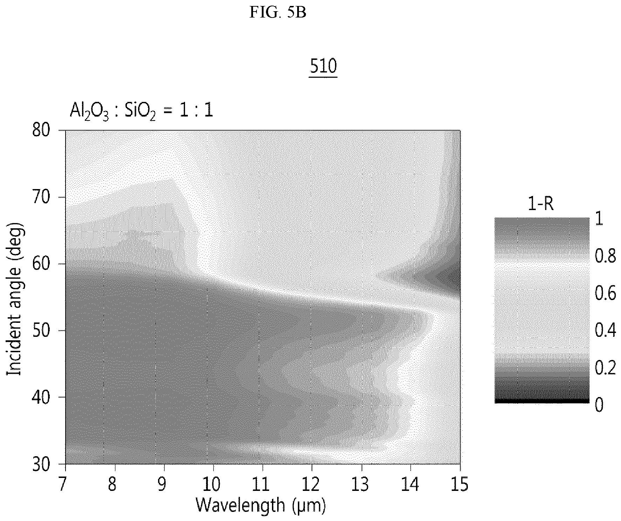

FIGS. 5A and 5B are diagrams illustrating emissivity for each angle according to a volumetric ratio of the nano or microparticles forming the paint coating layer according to an embodiment of the present invention.

FIG. 5A illustrates a case where the ratio of $Al_2O_3$ and $SiO_2$ in the nano or microparticles in the paint for forming the paint coating layer according to an embodiment of the present invention is 0.5:0.5.

FIG. 5B illustrates a case where the ratio of $Al_2O_3$ and $SiO_2$ in the nano or microparticles in the paint for forming the paint coating layer according to an embodiment of the present invention is 1:0.

A graph 500 of FIG. 5A and a graph 510 of FIG. 5B may represent a change in emissivity at an incident angle of sunlight for each wavelength. Here, the incident angle may be an incident angle of infrared rays.

For example, for an excellent radiative cooling capacity, the emissivity per angle needs also to be kept high.

In the case of the graph 510, the emissivity after 12 $\mu$m is low, and at a high angle, the emissivity is very low, and thus the emissivity is not maintained well.

Meanwhile, in the case of the graph 500, the emissivity after 12 $\mu$m is high, and at a high angle, the emissivity maintains high emissivity.

Therefore, it can be seen that the paint coating layer corresponding to the graph 500 emits radiative heat better.

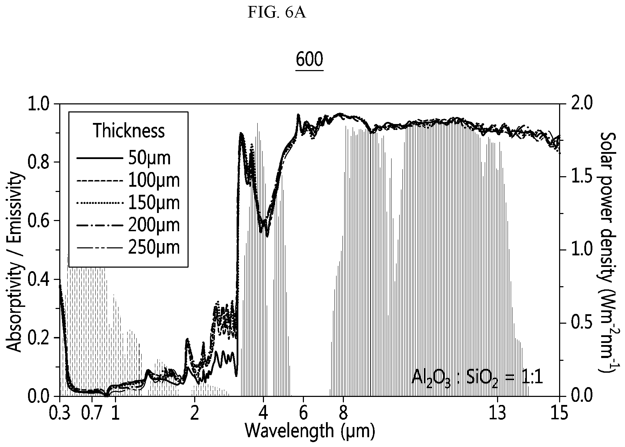

FIGS. 6A to 6C are diagrams illustrating optical properties and cooling properties according to a change in thickness of the paint coating layer according to an embodiment of the present invention.

In FIGS. 6A to 6C, there is illustrated an embodiment in which the thicknesses of the paint coating layer are 50 $\mu$m, 100 $\mu$m, 150 $\mu$m, 200 $\mu$m and 250 $\mu$m, and the paint coating layer is coated on a glass surface.

Preferably, the thickness of the paint coating layer may be formed from 30 $\mu$m to 600 $\mu$m .

FIG. 6A illustrates changes in absorptivity/emissivity for each wavelength according to a change in thickness of a paint coating layer formed using a paint in which a ratio of a mixture of $Al_2O_3$ and $SiO_2$ and a binder is 2:1 when a ratio of $Al_2O_3$ and $SiO_2$ is 1:1 according to an embodiment of the present invention. Here, the ratio of the mixture and the binder constitutes x:1, wherein x may be changed within a range of 0.2 to 2.5.

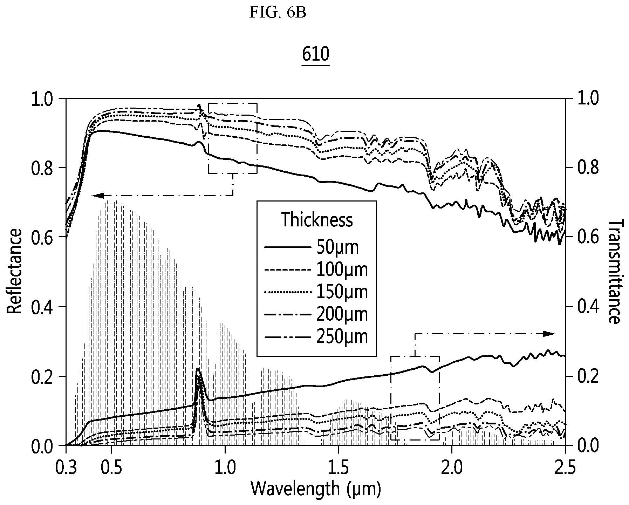

FIG. 6B illustrates changes in reflectance for each wavelength according to a change in thickness of a paint coating layer formed using a paint in which a ratio of a mixture of $Al_2O_3$ and $SiO_2$ and a binder is 2:1 when a ratio of $Al_2O_3$ and $SiO_2$ is 1:1 according to an embodiment of the present invention.

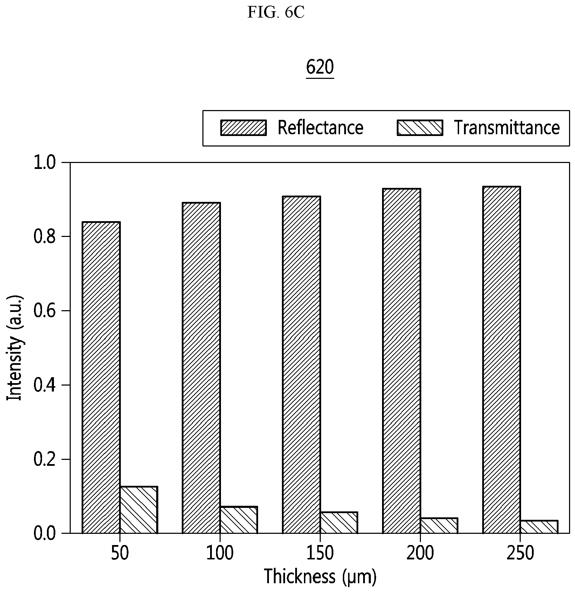

FIG. 6C illustrates changes in reflectance and transmittance for each wavelength according to a change in thickness of a paint coating layer formed using a paint in which a ratio of a mixture of $Al_2O_3$ and $SiO_2$ and a binder is 2:1 when a ratio of $Al_2O_3$ and $SiO_2$ is 1:1 according to an embodiment of the present invention.

In FIGS. 6A to 6C, the thicknesses of the paint coating layer are 50 $\mu$m, 100 $\mu$m, 150 $\mu$m, 200 $\mu$m, and 250 $\mu$m and the paint coating layer is coated on a glass surface.

Referring to a graph 600 of FIG. 6A, changes in absorptivity/emissivity according to a change in thickness are similar.

Referring to a graph 610 of FIG. 6B, the reflectance increases as the thickness increases.

Referring to a graph 620 of FIG. 6C, the reflectance of sunlight increases and the transmittance decreases.

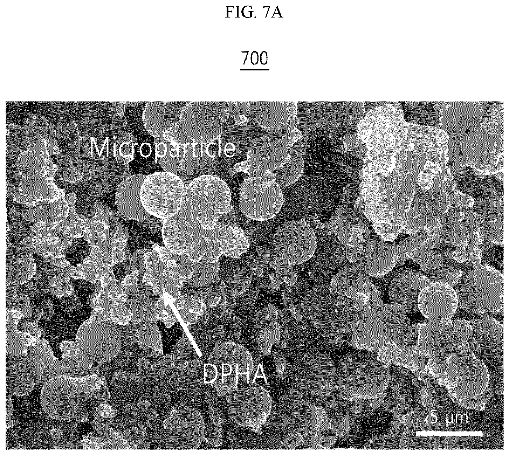

FIGS. 7A to 7C are diagrams illustrating various images of the paint coating layer according to an embodiment of the present invention.

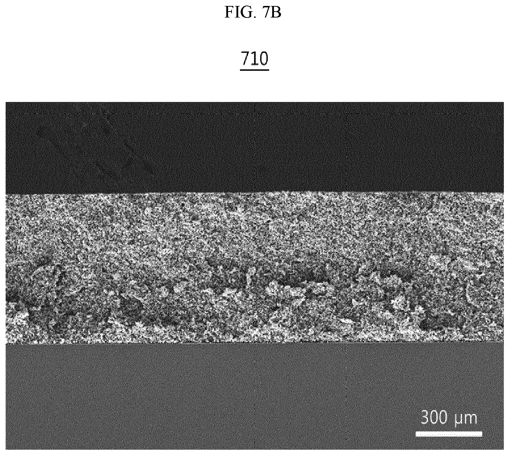

FIG. 7A illustrates a scanning microscope image of a plane of the paint coating layer according to an embodiment of the present invention, and FIG. 7B illustrates a scanning microscope image of a fault plane of the paint coating layer according to an embodiment of the present invention.

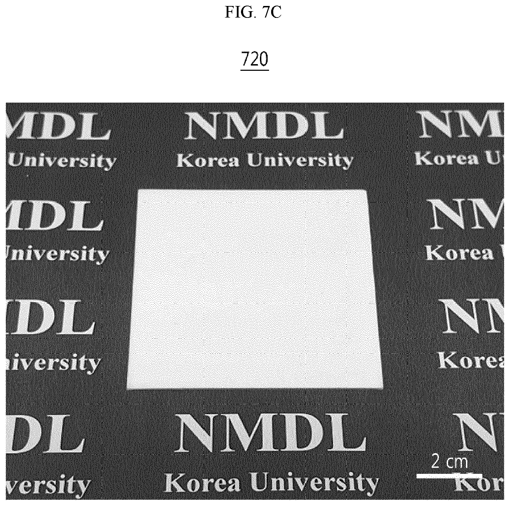

FIG. 7C illustrates an image of a plate formed with a matte white appearance having high diffuse reflectance.

Referring to an image 700 of FIG. 7A and an image 710 of FIG. 7B, $Al_2O_3$ and $SiOz$ particles are well bound with a support of a UV-cured DPHA binder used as a binder material between the particles.

Referring to an image 720 of FIG. 7C, it is confirmed that the matte white is important in reducing eye fatigue compared to a case of a passive daytime radiative cooling (PDRC) structure including an effective reflection of a solar flux and a metal mirror layer.

It can be seen that the image 720 has a matte white color rather than a silver surface such as a mirror.

The image 720 may represent an image formed by coating a conventional white paint to be compared with the paint material used for the paint coating layer according to an embodiment of the present invention.

In the image 700 of FIG. 7A and the image 710 of FIG. 7B, when the ratio of $Al_2O_3$ and $SiO_2$ is 1:1, the paint coating layer may be a paint coating layer formed using a paint in which a ratio of the mixture of $Al_2O_3$ and $SiO_2$ and the binder is 2: 1.

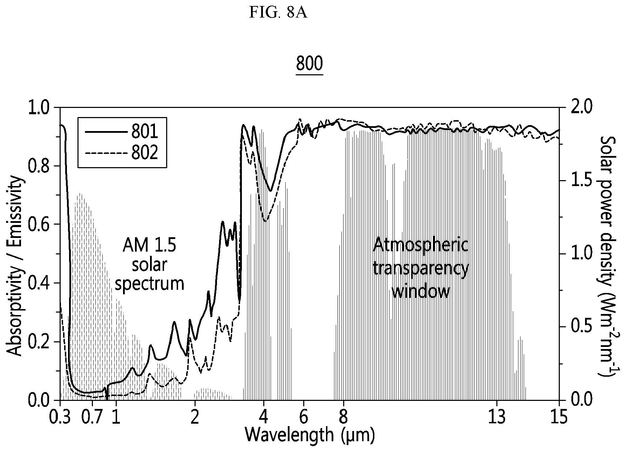

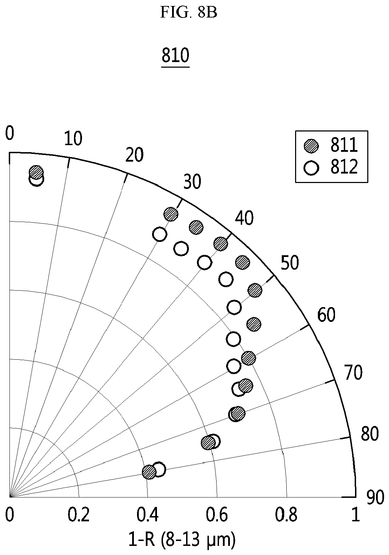

FIGS. 8A and 8B are diagrams illustrating optical properties and average emissivity for each angle in the sky window of the radiative cooling device including the paint coating layer according to an embodiment of the present invention.

FIG. 8A illustrates a comparison of optical properties related to radiative cooling performance of a white paint according to the related art and a paint according to an embodiment of the present invention.

Referring to a graph 800 of FIG. 8A, the white paint according to the related art corresponds to a graph line 801, and the paint according to an embodiment of the present invention corresponds to a graph line 802.

FIG. 8B illustrates a comparison of average emissivity for each angle in the sky window of a white paint according to the related art and a paint according to an embodiment of the present invention.

Referring to a graph 810 of FIG. 8B, the white paint according to the related art corresponds to an indicating point 811, and the paint according to an embodiment of the present invention corresponds to an indicating point 812.

When comparing the optical properties between the paint according to an embodiment of the present invention and the white paint, the paint according to an embodiment of the present invention absorbs less sunlight than the conventional white paint in a UV-near visible light region and an NIR region due to high bandgap energy and light scattering.

In addition, it can be seen that the average emissivity in the sky window of the paint according to an embodiment of the present invention is 93.5%, which is measured to be higher than 92.6% of the conventional white paint, and the average emissivity for each angle is also better in the paint according to an embodiment of the present invention.

More specifically, the conventional white paint consisting of $TiO_2$ particles and an acrylic binder exhibiting NIR band absorption showed the solar weight absorption of 0.112 and average emissivity of 0.924 in the atmospheric transparency window.

On the other hand, the paint according to an embodiment of the present invention exhibited extremely low solar weight absorption of 0.041 and high average emissivity of 0.935 due to the balanced composition and thickness of $Al_2O_3$ and $SiO_2$ particles and DPHA.

In addition, compared to the conventional white paint, the paint according to an embodiment of the present invention exhibits a strong emission property at an angle caused by harmonics of $Al_2O_3$ and $SiO_2$ particles to produce a high result of 0.8 at an incident angle of 60°.

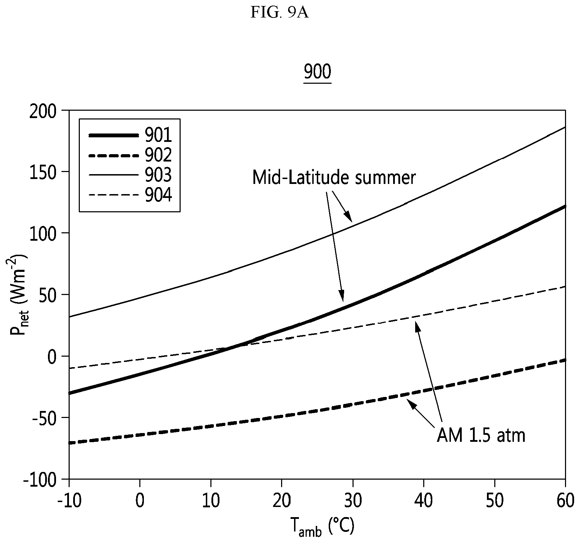

FIGS. 9A to 9E are diagrams illustrating cooling power and cooling temperature of the radiative cooling device including the paint coating layer according to an embodiment of the present invention.

FIG. 9A illustrates a comparison of an ambient temperature to net cooling power in a paint for forming the paint coating layer according to an embodiment of the present invention and a white paint according to the related art. In the following description, for convenience of description, the paint for forming the paint coating layer according to an embodiment of the present invention is referred to as a radiative cooling paint.

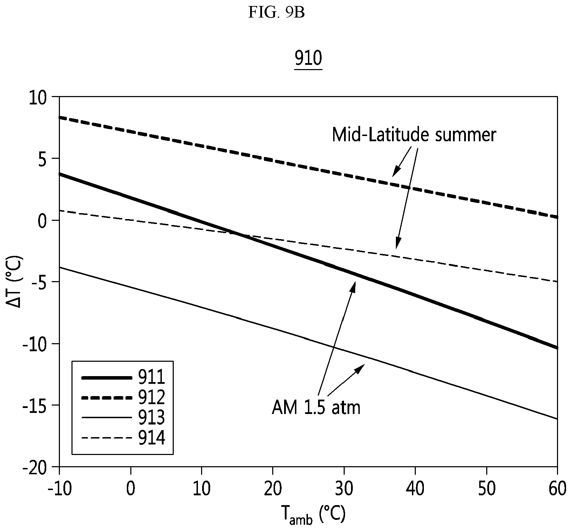

FIG. 9B illustrates a comparison of an ambient temperature to a cooling temperature in a radiative cooling paint according to an embodiment of the present invention and a white paint according to the related art.

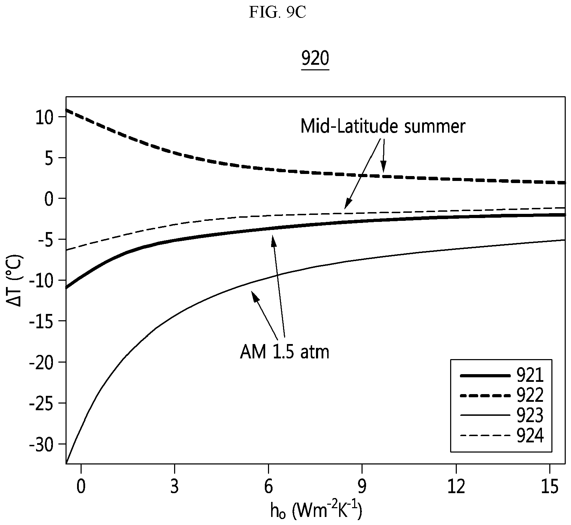

FIG. 9C illustrates a comparison of a heat transfer coefficient to a cooling temperature in a radiative cooling paint according to an embodiment of the present invention and a white paint according to the related art.

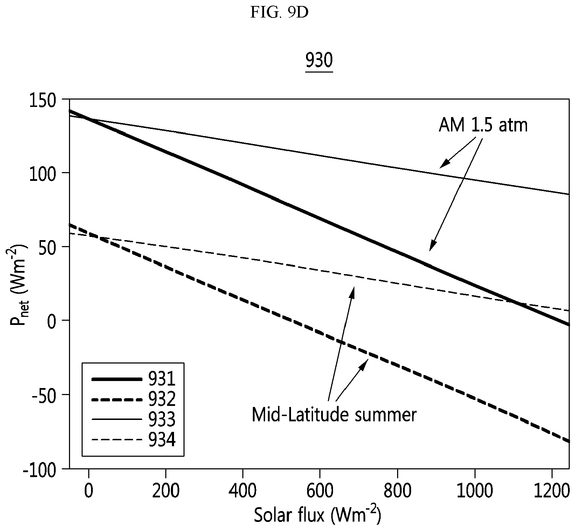

FIG. 9D illustrates a comparison of a solar flux to net cooling power in a radiative cooling paint according to an embodiment of the present invention and a white paint according to the related art.

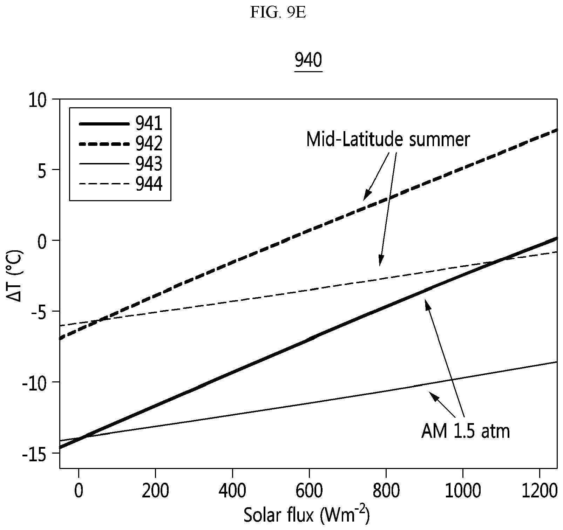

FIG. 9E illustrates a comparison of a solar flux to a cooling temperature in a radiative cooling paint according to an embodiment of the present invention and a white paint according to the related art.

In the graphs of FIGS. 9A to 9E, commonly, measurement results of changes in temperature of a radiative cooling paint and a white paint according to the related art are illustrated with respect to a mid-latitude summer and an air mass (AM) of 1.5, and it is shown that the radiative cooling paint of the present invention has excellent radiative cooling performance compared to the white paint according to the related art.

Referring to a graph 900 of FIG. 9A, a graph line 901 and a graph line 902 represent changes in net cooling power of the white paint according to the related art depending on a change in ambient temperature, and a graph line 903 and a graph line 904 represent changes in net cooling power of the radiative cooling paint according to an embodiment of the present invention depending on a change in ambient temperature.

Referring to a graph 910 of FIG. 9B, a graph line 911 and a graph line 912 represent changes in cooling temperature of the white paint according to the related art depending on a change in ambient temperature, and a graph line 913 and a graph line 914 represent changes in cooling temperature of the radiative cooling paint according to an embodiment of the present invention depending on a change in ambient temperature.

Referring to a graph 920 of FIG. 9C, a graph line 921 and a graph line 922 represent changes in cooling temperature of the white paint according to the related art depending on a heat transfer coefficient, and a graph line 923 and a graph line 924 represent changes in cooling temperature of the radiative cooling paint according to an embodiment of the present invention depending on a heat transfer coefficient.

Referring to a graph 930 of FIG. 9D, a graph line 931 and a graph line 932 represent changes in net cooling power of the white paint according to the related art depending on a solar flux, and a graph line 933 and a graph line 934 represent changes in net cooling power of the radiative cooling paint according to an embodiment of the present invention depending on a solar flux.

Referring to a graph 940 of FIG. 9E, a graph line 941 and a graph line 942 represent changes in cooling temperature of the white paint according to the related art depending on a solar flux, and a graph line 943 and a graph line 944 represent changes in cooling temperature of the radiative cooling paint according to an embodiment of the present invention depending on a solar flux.

Specifically, referring to the graphs of FIGS. 9A to 9E, the radiative cooling paint according to an embodiment of the present invention has higher net cooling power and a lower ambient temperature under all conditions than the white paint according to the related art.

It is confirmed that this difference in net cooling power and ambient temperature between the white paint according to the related art and the radiative cooling paint according to an embodiment of the present invention mainly occurs in a solar absorptivity value.

Therefore, the radiative cooling paint according to an embodiment of the present invention may provide better radiative cooling performance in summer than in winter.

The above-described net cooling power may be derived using radiative power $P_{rad}$, atmospheric emission power $P_{atm}$, solar absorption power $P_{sun}$, and power loss due to conduction and convection.

The radiative power $P_{rad}$ is hemispherical radiative power emitted from the surface of the radiative cooling device, and may be calculated based on the following Equation 2.

[Equation 2]

$$P_{rad}(T) = \int_0^{2\pi} \int_0^{\frac{\pi}{2}} \int_0^{\infty} I_{BB}(T, \lambda) \varepsilon(\lambda, \theta) \cos\theta \sin\theta \, d\lambda d\theta d\varphi$$

In Equation 2, $I_{BB}$ may represent a blackbody radiation intensity, and T may represent a temperature.

For example, the atmospheric emission power $P_{atm}$ is a power loss due to atmospheric radiative adsorption of the radiative cooling device, and may be calculated based on the following Equation 3.

[Equation 3]

$$P_{atm}(T_{atm}) = \int_0^{2\pi} \int_0^{\frac{\pi}{2}} \int_0^{\infty} I_{BB}(T_{atm}, \lambda) \varepsilon(\lambda, \theta) \, \varepsilon_{atm}(\lambda, \theta) \cos\theta \sin\theta \, d\lambda d\theta d\varphi$$

In Equation 3, $I_{BB}$ may represent a blackbody radiation intensity, and $T_{atm}$ may represent an ambient temperature.

For example, the solar absorption power $P_{sun}$ is a power loss due to solar adsorption of the radiative cooling device, and may be calculated based on the following Equation 4.

[Equation 4]

$$P_{sun} = \int_0^\infty I_{AM1.5}(\lambda)\varepsilon(\lambda,\theta)d\lambda$$

In Equation 4, $I_{AM1.5}$ may represent a solar density condition, and AM1.5 may represent 1.5 times of air weight of an air layer.

For example, the net cooling power $P_{net}$ may be expressed by the following Equation 5 based on the law of conservation of energy.

[Equation 5]

$$P_{net}(T) = P_{rad}(T) - P_{atm}(T_{atm}) - P_{sun} - P_{non-rad}$$

In Equation 5, $P_{net}$ may represent net cooling power, $P_{rad}$ may represent radiative power, $P_{atm}$ may represent atmospheric emission power, $P_{sun}$ may represent solar absorption power, and $P_{non-rad}$ may represent a power loss due to conduction and convection.

In other words, referring to FIGS. 9A to 9E, the radiative cooling paint according to an embodiment of the present invention has a cooling temperature lower than that of the white paint according to the related art by at least 4°.

This difference is mostly due to solar absorption. As the solar power increases, the radiative cooling paint performs the cooling better than the conventional white paint to have relatively excellent radiative cooling performance.

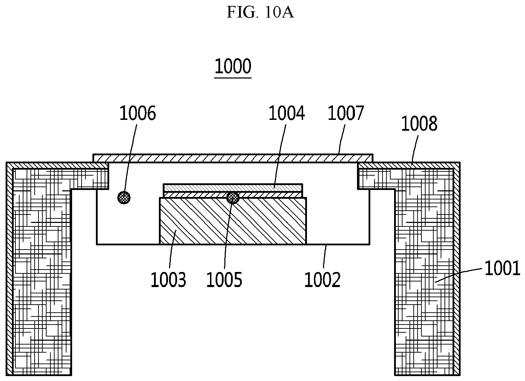

FIGS. 10A to 10F are diagrams illustrating a surface cooling measurement experiment of the radiative cooling device including the paint coating layer according to an embodiment of the present invention.

FIG. 10A illustrates a schematic diagram for a surface cooling measurement experiment of the radiative cooling device including the paint coating layer according to an embodiment of the present invention.

Referring to FIG. 10A, in a surface cooling measurement experiment environment 1000, a transparent acrylic plate 1002 is located between wood frames 1001, a polystyrene 1003 is located on the transparent acrylic plate 1002, and a sample 1004 is located on the polystyrene 1003, and the sample 1004 and the polystyrene 1003 are bound to each other by a thermometer 1005.

A thermometer 1006 is present therein, a low-density polystyrene 1007 is covered, and fixed by an aluminum curtain 1008.

The thermometer 1005 measures a temperature under the radiative cooling device, and the thermometer 1006 measures a temperature in the air.

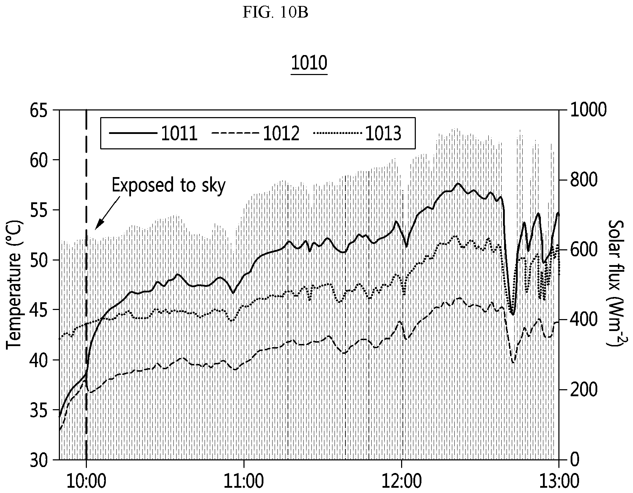

FIG. 10B illustrates changes in temperature in the air and changes in solar flux in a paint for forming the paint coating layer according to an embodiment of the present invention and a conventional white paint.

Referring to a graph 1010 of FIG. 10B, a graph line 1011 representing the conventional white paint and a graph line 1013 representing the air increase in temperature over time, and a temperature increase width of the graph line 1011 is bigger.

On the other hand, a graph line 1012 representing the paint according to an embodiment of the present invention has a relatively small temperature increase width over time, and has a lower temperature than the graph line 1011 and the graph line 1013. That is, the paint according to an embodiment of the present invention has cooling performance.

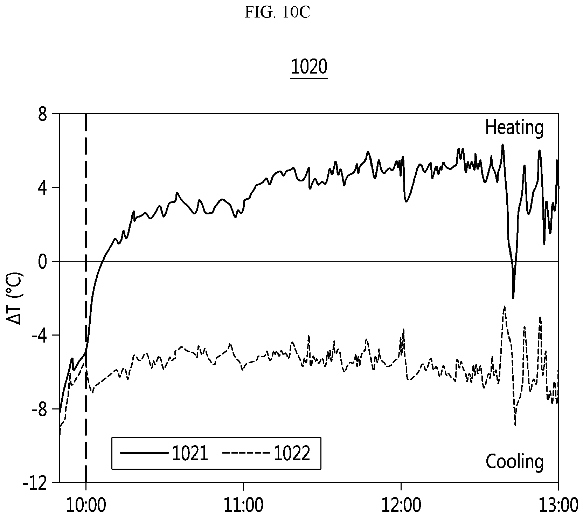

FIG. 10C illustrates a comparison of only changes in temperature between the paint for forming the paint coating layer according to an embodiment of the present invention and the conventional white paint.

Referring to a graph 1020 of FIG. 10C, a graph line 1021 representing the conventional white paint represents a heating effect, and a graph line 1022 representing the paint according to an embodiment of the present invention represents a cooling effect.

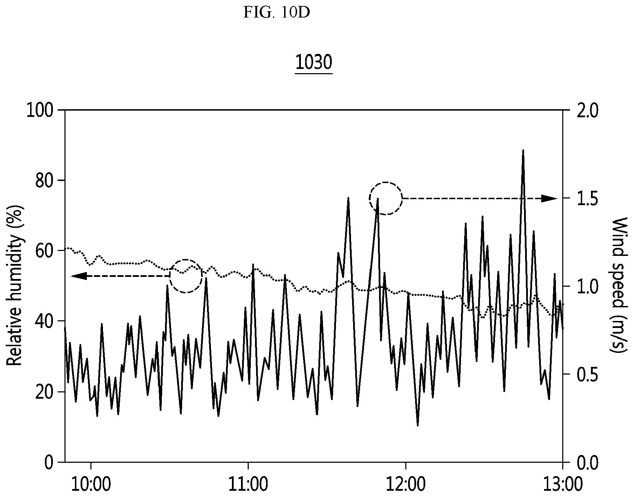

FIG. 10D illustrates humidity and wind strength in a surface cooling measurement experiment of the radiative cooling device including the paint coating layer according to an embodiment of the present invention.

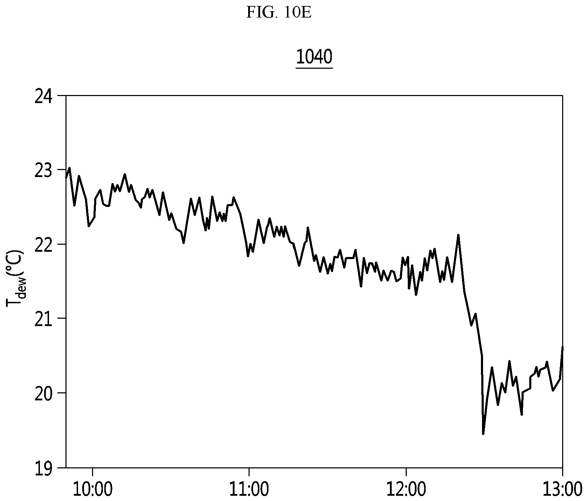

FIG. 10E illustrates changes in dew point temperature in a surface cooling measurement experiment of the radiative cooling device including the paint coating layer according to an embodiment of the present invention.

Referring to a graph 1030 of FIG. 10D, the humidity has a range of 60% to 45%, and the change in wind speed is not large.

Referring to a graph 1040 of FIG. 10E, the dew point temperature decreases over time.

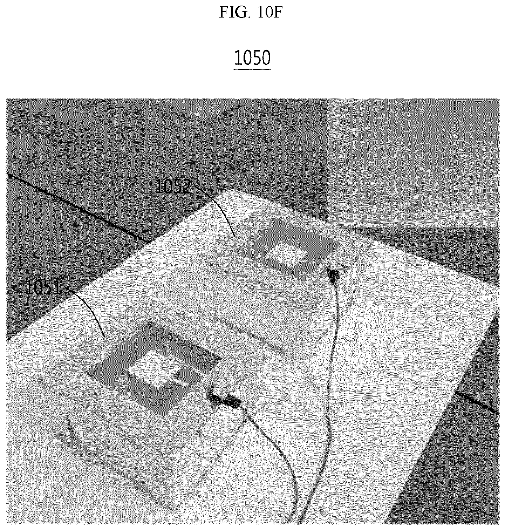

FIG. 10F illustrates a sample 1051 coated with the white paint and a sample 1052 coated with the paint according to an embodiment of the present invention in an external environment 1050 of the surface cooling measurement experiment, and the upper right side illustrates a sky image in the external environment of the experiment.

Specifically, temperature values measured between 11:00 and 13:00 were used to find average and minimum temperature changes because the sample was exposed after 10:00.

A minimum temperature change ($\Delta$T) of the sample 1051 when the cloud covered the solar flux was - 2. 1°C, and the sample 1052 had temperature drops of 5.6°C and 8.8°C with respect to the average and minimum temperature change $\Delta$T by maintaining an ambient temperature or less with a significant PDRC effect even at a high dew point harmful to PDRC, respectively.

Accordingly, the present invention may provide a radiative cooling device which cools below an ambient temperature without energy consumption even in the day time when the sun is shining or the night time when the sun is not shining.

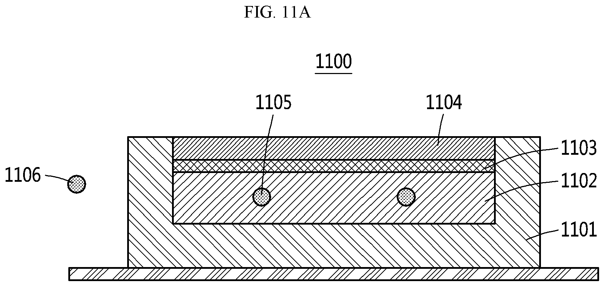

FIGS. 11A to 11F are diagrams illustrating a water cooling measurement experiment of the radiative cooling device including the paint coating layer according to an embodiment of the present invention.

FIG. 11A illustrates a schematic diagram for a water cooling measurement experiment of the radiative cooling device including the paint coating layer according to an embodiment of the present invention.

Referring to FIG. 11A, in a water cooling measurement experiment environment 1100, water 1102 is located inside a polystyrene 1101, an aluminum plate 1103 is located on the water 1102, and a paint 1104 according to an embodiment of the present invention is coated on the aluminum 1103. For example, the paint according to an embodiment of the present invention may be referred to as a radiative cooling paint, and in the following description, will be referred to as a radiative cooling paint.

The water 1102 has a depth of about 10 nm, and a thermometer 1105 is placed.

The aluminum plate 1103 has a thickness of about 1 nm, the radiative cooling paint 1104 is coated with a thickness of microns, and the temperature in the air is measured by a thermometer 1106.

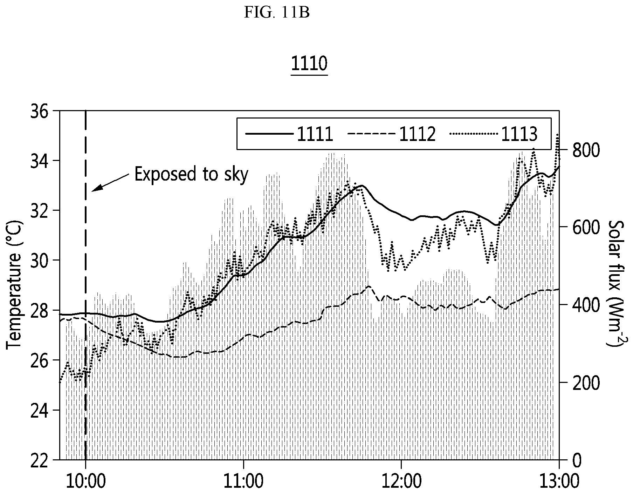

FIG. 11B illustrates changes in temperature in the air and changes in solar flux in a radiative cooling paint according to an embodiment of the present invention and a conventional white paint.

Referring to a graph 1110 of FIG. 11B, a graph line 1111 representing the conventional white paint and a graph line 1113 representing air increase in temperature over time.

On the other hand, a graph line 1112 representing the radiative cooling paint according to an embodiment of the present invention has a relatively small temperature increase width over time, and has a lower temperature than the graph line 1111 and the graph line 1113. That is, the radiative cooling paint according to an embodiment of the present invention has cooling performance.

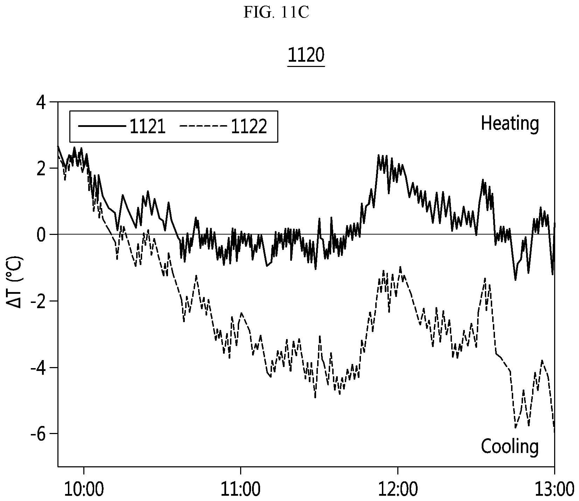

FIG. 11C illustrates a comparison of only changes in temperature between the radiative cooling paint according to an embodiment of the present invention and the conventional white paint.

Referring to a graph 1120 of FIG. 11C, a graph line 1121 representing the conventional white paint represents a heating effect, and a graph line 1122 representing the radiative cooling paint according to an embodiment of the present invention represents a cooling effect.

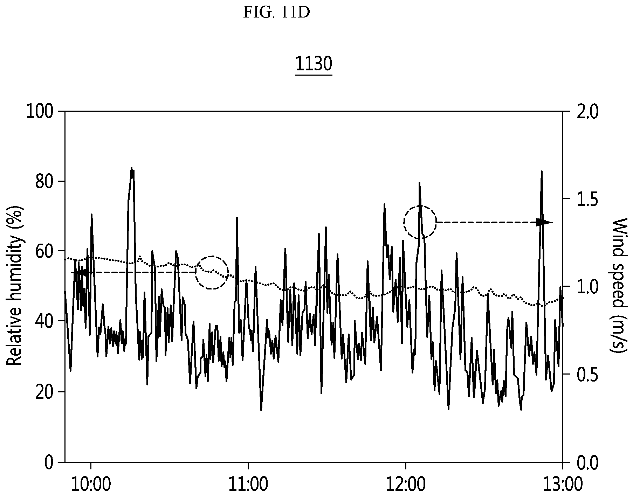

FIG. 11D illustrates humidity and wind strength in a water cooling measurement experiment of a radiative cooling device including a paint coating layer according to an embodiment of the present invention.

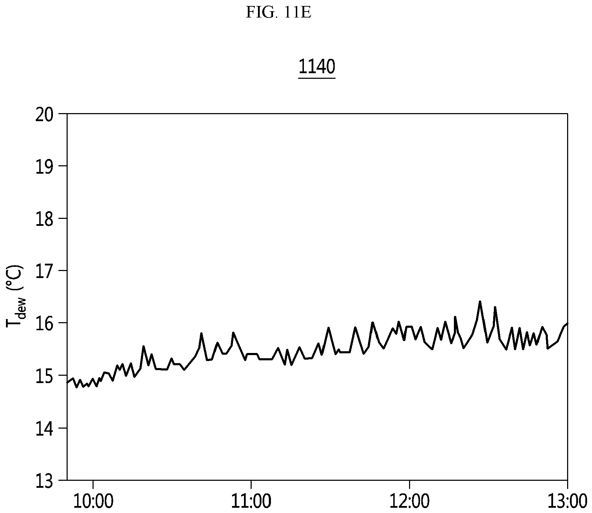

FIG. 11E illustrates changes in dew point temperature in a water cooling measurement experiment of the radiative cooling device including the paint coating layer according to an embodiment of the present invention.

Referring to a graph 1130 of FIG. 11D, the humidity has a range of 60% to 45%, and the change in wind speed is not large.

Referring to a graph 1140 of FIG. 11E, the dew point temperature decreases over time.

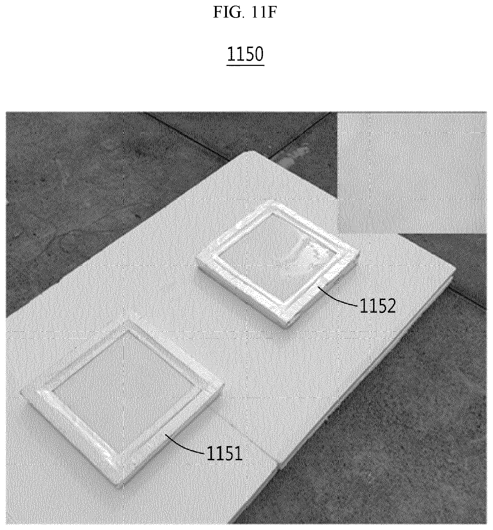

FIG. 11F illustrates a sample 1151 coated with the white paint and a sample 1152 coated with the paint according to an embodiment of the present invention in an external environment 1150 of the water cooling measurement experiment, and the upper right side illustrates a sky image in the external environment of the experiment.

Specifically, in the water cooling measurement experiment, the sample 1151 and the sample 1152 were exposed to the sky at 10:00.

With a cloudy weather and a low solar flux, the white paint according to the related art showed almost a difference in ambient temperature of 0.3°C and -1.3°C for the average and minimum temperature change ($\Delta$T), respectively.

However, the radiative cooling paint according to an embodiment of the present invention was shown to be - 3.4°C and - 6.2°C for average PDRC or less, that is, the average and minimum temperature change ($\Delta$T) even in the cloudy weather.

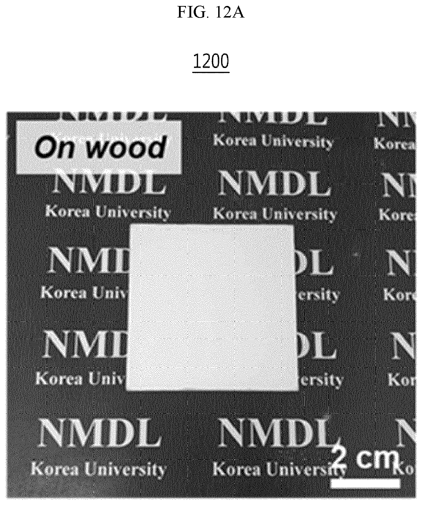

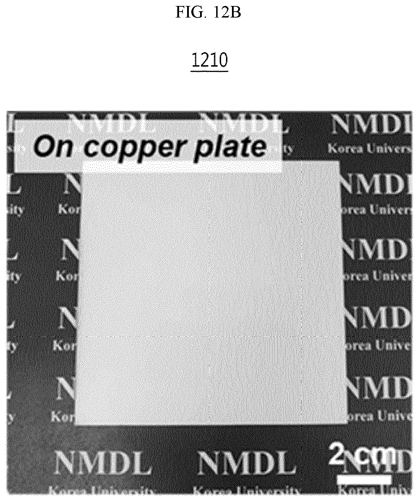

FIGS. 12A and 12B are diagrams illustrating various surfaces formed with the paint coating layer according to an embodiment of the present invention.

FIG. 12A illustrates an image in which the paint coating layer according to an embodiment of the present invention is formed on wood, and FIG. 12B illustrated an image in which the paint coating layer according to an embodiment of the present invention is formed on a copper plate.

Referring to an image 1200 of FIG. 12A and an image 1210 of FIG. 12B, the paint coating layer according to an embodiment of the present invention is well formed on the wood and the metal plate.

That is, the paint coating layer according to an embodiment of the present invention may be coated on various surfaces.

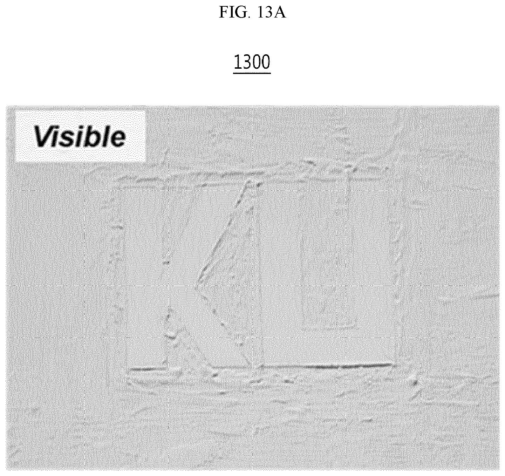

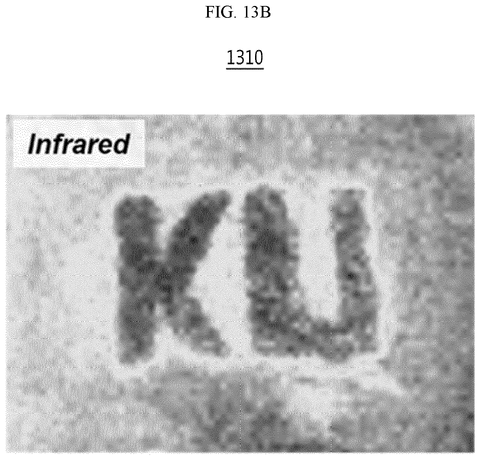

FIGS. 13A and 13B are diagrams illustrating a comparison of a visible image and an infrared image formed with the paint coating layer according to an embodiment of the present invention.

FIG. 13A illustrates a visible image of a paint coating layer formed in a predetermined pattern according to an embodiment of the present invention, and FIG. 13B illustrates an infrared image of a paint coating layer formed in a predetermined pattern according to an embodiment of the present invention.

Referring to an image 1300 of FIG. 13A and an image 1310 of FIG. 13B, KU is clearly seen on a copper plate patterned in a KU shape due to the high emissivity of the radiative cooling paint according to an embodiment of the present invention.

That is, the image 1300 is the visible image, in which the KU shape is not seen well, but the image 1310 is the infrared image, in which the KU shape portion is cooled, so that the KU shape portion is clearly seen as an infrared image through an infrared camera.

Accordingly, in the image 1310, it can be seen that the radiative cooling paint of the present invention has excellent emissivity.

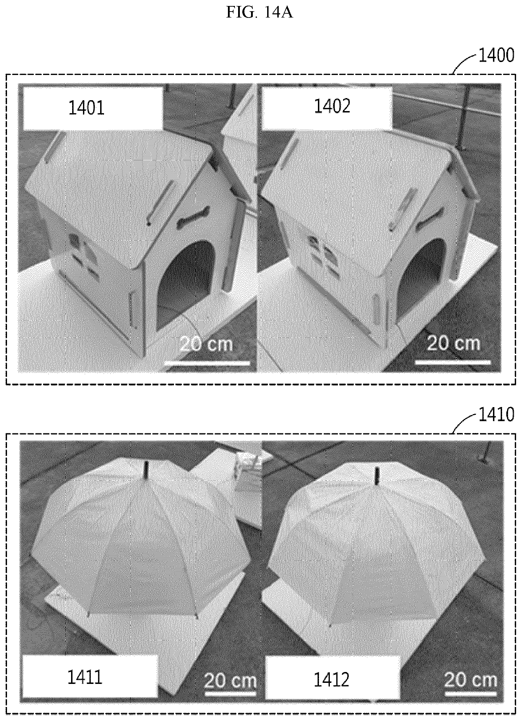

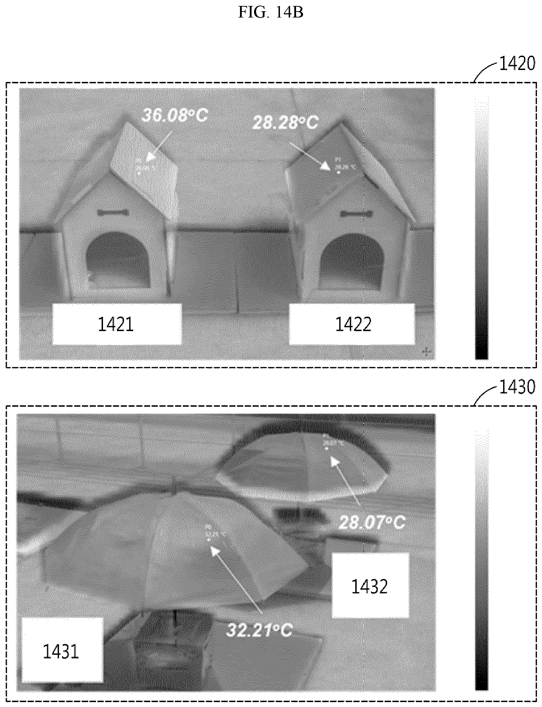

FIGS. 14A and 14B are diagrams illustrating an experiment using various surfaces which may be applied with the paint coating layer according to an embodiment of the present invention.

FIG. 14A illustrates images of a house model and an umbrella after coating or dyeing the radiative cooling paint according to an embodiment of the present invention and the white paint according to the related art on the house model or umbrella.

FIG. 14B illustrates infrared images of the house model and the umbrella after coating the radiative cooling paint according to an embodiment of the present invention and the white paint according to the related art on the house model or umbrella.

Referring to FIG. 14A, a house model image 1400 includes a house model image 1401 coated with the white paint and a house model image 1402 coated with the radiative cooling paint.

Further, an umbrella image 1410 includes an umbrella image 1411 dyed with the white paint and an umbrella image 1412 dyed with the radiative cooling paint.

Referring to the house model image 1400 and the umbrella image 1410, it can be confirmed similarly from the related image.

Referring to FIG. 14B, a house model infrared image 1420 includes a house model infrared image 1421 coated with the white paint and a house model infrared image 1422 coated with the radiative cooling paint.

Further, an umbrella infrared image 1430 includes an umbrella infrared image 1431 dyed with the white paint and an umbrella infrared image 1432 dyed with the radiative cooling paint.

Referring to the house model infrared image 1420, the temperature measured by the house model infrared image 1422 is lower than that of the house model infrared image 1421 by about 8°C.

Meanwhile, referring to the umbrella infrared image 1430, the temperature measured by the umbrella infrared image 1431 is lower than that of the umbrella infrared image 1432 by about 4°C.

That is, according to an embodiment of the present invention, the radiative cooling performance of the paint coating layer of the present invention formed by using the radiative cooling paint according to an embodiment of the present invention is better than that of the white paint according to the related art.

The average temperature change according to the experimental results may be summarized as shown in Table 1 below. Here, the average temperature change may be a value excluding a maximum temperature change from a minimum temperature change.

[Table 1]

|  | White paint (°C) | Radiative cooling paint (°C) |
| --- | --- | --- |
| House model | - 0.6 (- 0.8 to 2.2) | - 1.8 (- 3.2 to 0) |
| Umbrella | 2.3 (- 2.8 to 8.8) | - 1.6 (- 4.8 to 2.25) |

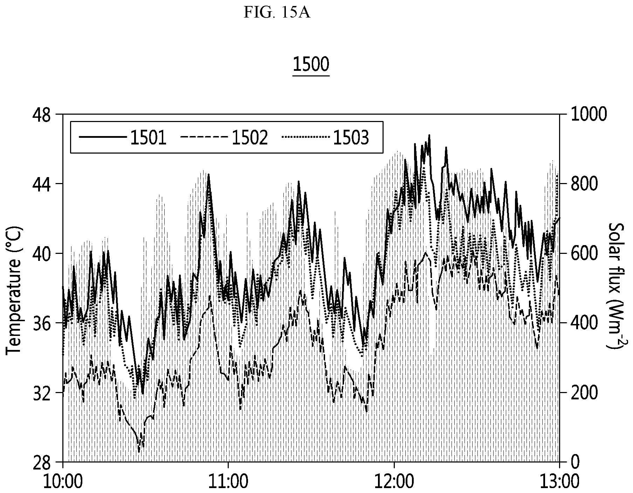

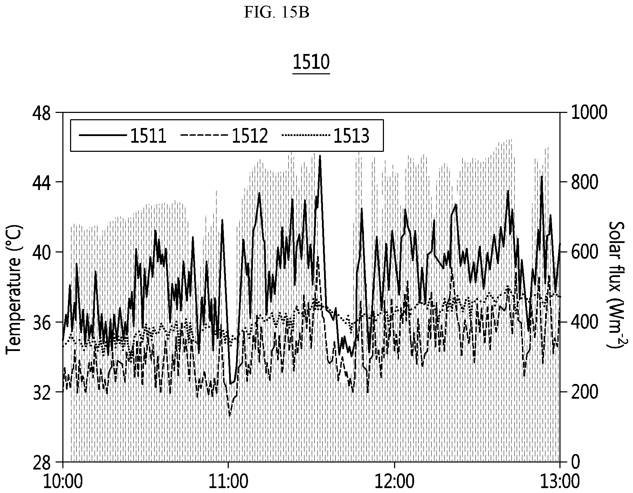

FIGS. 15A and 15B are diagrams illustrating an experiment result using various surfaces which may be applied with the paint coating layer according to an embodiment of the present invention.

FIG. 15A illustrates an experiment result using the house model described in FIG. 14B, and FIG. 15B illustrates an experiment result using the umbrella described in FIG. 14B.

Referring to a graph 1500 of FIG. 15A, a temperature change and a solar flux change are shown over time, a graph line 1501 represents the conventional white paint, a graph line 1502 represents the radiative cooling paint of the present invention, and a graph line 1503 represents the ambient air.

Referring to a graph 1510 of FIG. 15B, a temperature change and a solar flux change are shown over time, a graph line 1511 represents the conventional white paint, a graph line 1512 represents the radiative cooling paint of the present invention, and a graph line 1513 represents the ambient air.

According to the graph 1500 of FIG. 15A and the graph 1510 of FIG. 15B, the radiative cooling paint of the present invention exhibits a cooling effect based on the temperature of the ambient air according to an embodiment of the present invention, whereas the temperature of the white paint of the related art increases.

That is, the radiative cooling paint according to an embodiment of the present invention has excellent radiative cooling performance compared to the white paint of the related art.

Therefore, the present invention may provide a cooling function without energy consumption by being applied to an outer surface of a material requiring cooling, such as construction materials, glass, automotive materials, aviation equipment, energy-saving data centers, electronic devices, solar cells, etc.

Further, the present invention may prevent skin burns by sunlight during the day time by being applied to wearable devices, clothes, shoes, umbrellas, etc.

Further, the present invention may provide a stable radiative cooling function even when being exposed to an external environment for a long time by applying a plate made of a ceramic material with excellent chemical stability and mechanical property.

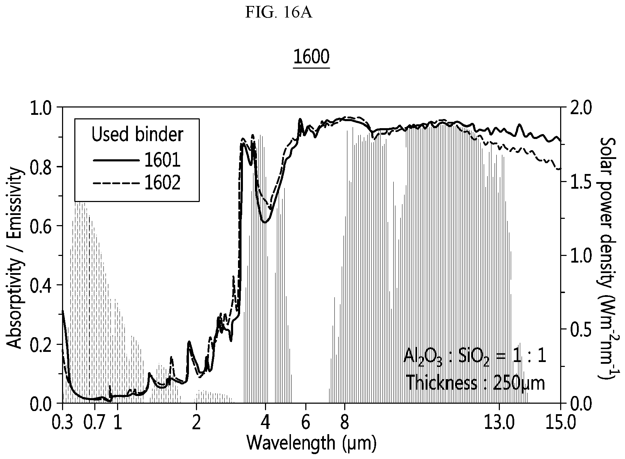

FIGS. 16A to 6E are diagrams illustrating optical properties and cooling properties according to a type of binder to be used for forming the paint coating layer according to an embodiment of the present invention.

FIGS. 16A to 16C show optical properties of a binder used to form a paint coating layer according to an embodiment of the present invention.

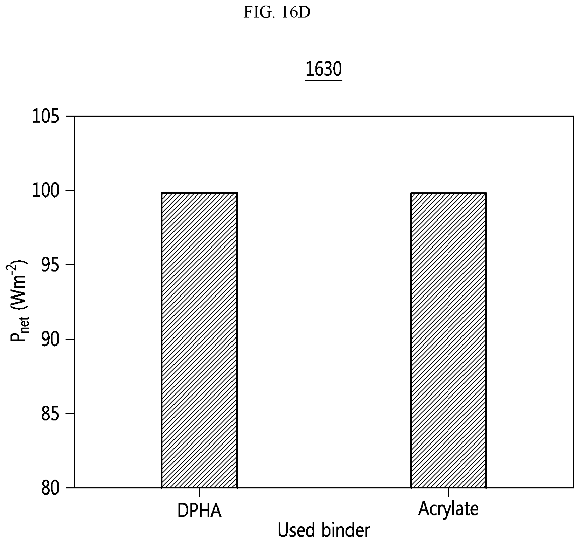

Meanwhile, FIG. 16D shows cooling properties according to the binder used to form the paint coating layer according to an embodiment of the present invention.

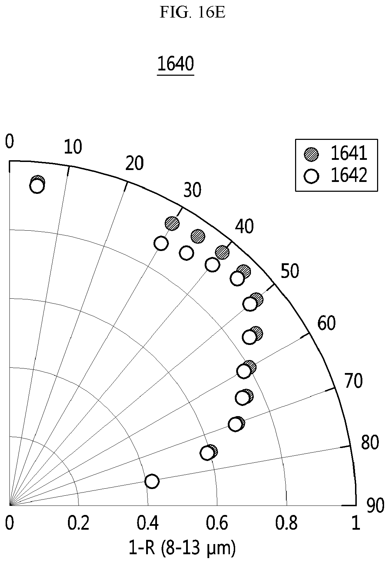

Next, FIG. 16E shows emissivity for each incident angle of sunlight of the binder used to form the paint coating layer according to an embodiment of the present invention. Here, the incident angle may be associated with infrared rays in the sunlight.

In FIGS. 16A to 16E, the paint coating layer according to an embodiment of the present invention has a difference in the type of binder, and a volumetric ratio of nano or microparticles corresponds to a ratio of $Al_2O_3$ and $SiO_2$ of 1:1, and a thickness thereof is 250 $\mu$m.

Referring to a graph 1600 of FIG. 16A, changes in absorptivity/emissivity for each wavelength are illustrated according to a type of the binder used to form the paint coating layer according to an embodiment of the present invention.

A graph line 1601 of the graph 1600 illustrates DPHA among the types of binders, and a graph line 1602 illustrates acrylate among the types of binders.

The graph line 1601 and the graph line 1602 indicate that the binder has absorptivity/emissivity in a wavelength range of the sky window.

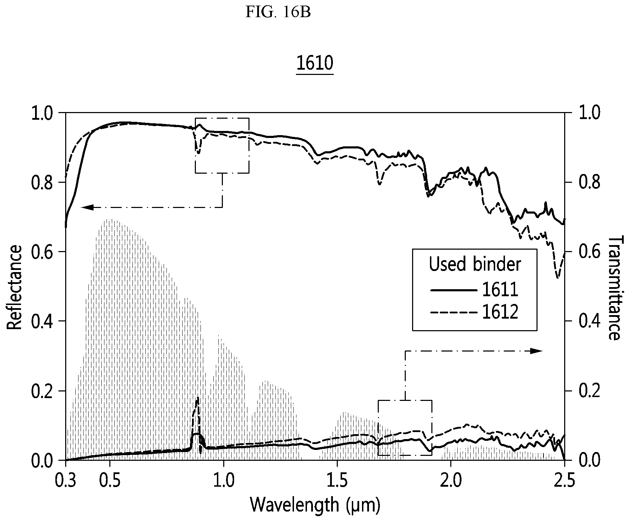

Referring to a graph 1610 of FIG. 16B, changes in reflectance for each wavelength are illustrated according to a type of the binder used to form the paint coating layer according to an embodiment of the present invention.

A graph line 1611 of the graph 1610 illustrates DPHA among the types of binders, and a graph line 1612 illustrates acrylate among the types of binders.

The graph line 1611 and the graph line 1612 indicate that the binder has reflectance in the wavelength range of incident sunlight, and according to the graph 1610, the reflectance of DPHA is relatively excellent.

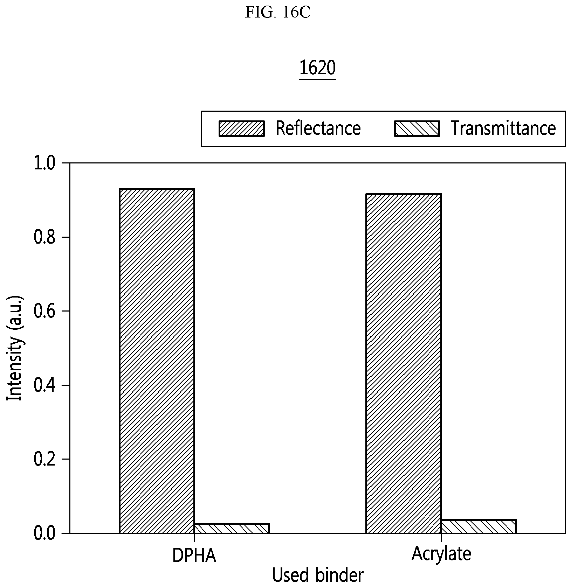

Referring to a graph 1620 of FIG. 16C, changes in reflectance and transmittance are illustrated according to a type of the binder used to form the paint coating layer according to an embodiment of the present invention.

The graph 1620 exemplifies DPHA among the types of binders, and exemplifies acrylate among the types of binders.

According to the graph 1620, the binder has excellent reflectance and low transmittance.

Referring to a graph 1630 of FIG. 16D, cooling power is illustrated according to a type of the binder used to form the paint coating layer according to an embodiment of the present invention.

The graph 1630 shows that the binder has cooling power of about 100 $W/m^2$.

Referring to a graph 1640 of FIG. 16E, among the types of binders, DPHA corresponds to an indicating point 1641, and among the types of binders, acrylate corresponds to an indicating point 1642.

The indicating point 1641 and the indicating point 1642 indicate that the binder has emissivity according to an incident angle in a wavelength range of the sky window. Here, the incident angle may be an incident angle of infrared rays.

Accordingly, the binder for forming the paint coating layer included in the radiative cooling device according to an embodiment of the present invention may also provide an effect of improving the radiative cooling performance by supporting the infrared emissivity in the wavelength range of the sky window.

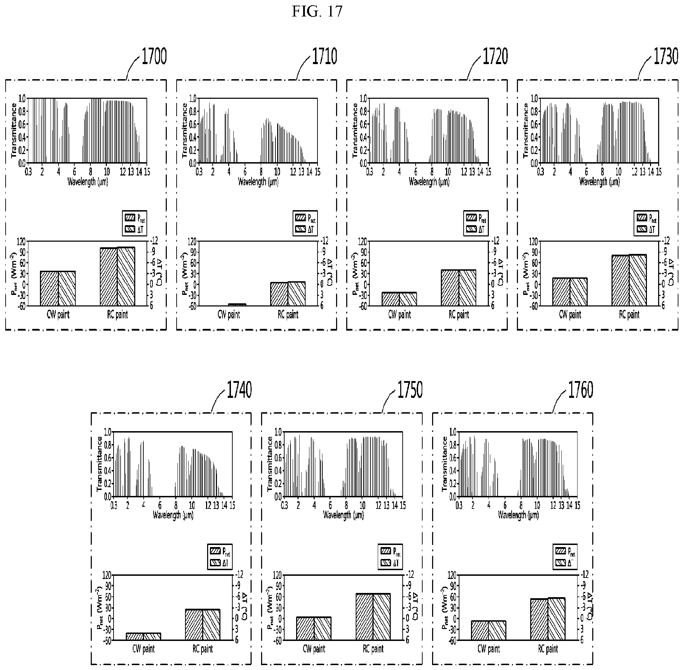

FIG. 17 is a diagram illustrating net cooling power and cooling temperature of the paint coating layer according to the embodiment of the present invention.

FIG. 17 illustrates measurement results for net cooling power and cooling temperature calculated according to seven atmospheric transmittance models with respect to the paint coating layer according to an embodiment of the present invention.

Referring to FIG. 17, a graph 1700 shows the transmittance and net cooling power for each wavelength at an air pressure of 1.5, a graph 1710 shows the transmittance and net cooling power for each wavelength at a tropical night, and a graph 1720 shows the transmittance and net cooling power for each wavelength in the sub-arctic summer. In addition, a graph 1730 shows the transmittance and net cooling power for each wavelength in the sub-arctic winter, a graph 1740 shows the transmittance and net cooling power for each wavelength in the mid-latitude summer, a graph 1750 shows the transmittance and net cooling power for each wavelength in the mid-latitude winter, and a graph 1760 shows the transmittance and net cooling power for each wavelength in the US standard in 1976.

The graphs 1700 to 1760 show that there is a difference in transmittance and net cooling power for each wavelength according to a location and a season.

In the graphs 1700 to 1760, in the graphs showing the transmittance, a horizontal axis represents the wavelength and a vertical axis represents the transmittance, and in the graphs showing the net cooling power and cooling temperature, a horizontal axis represents a type of paint and a vertical axis represents the net cooling power.

In the graphs 1700 to 1760, the net cooling power is similar to the cooling temperature, and the radiative cooling paint according to an embodiment of the present invention has excellent cooling performance compared to the white paint according to the related art regardless of the location and season.

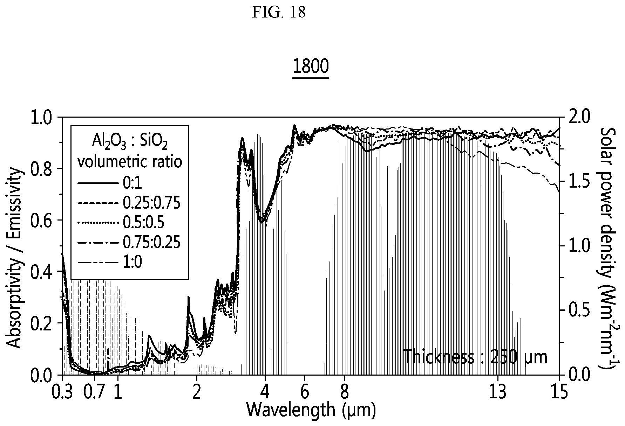

FIG. 18 is a diagram illustrating optical properties according to a volumetric ratio of nano or microparticles forming the paint coating layer according to the embodiment of the present invention.

FIG. 18 illustrates a change in optical properties according to a change in the volumetric ratio of $Al_2O_3$ and $SiO_2$ when the thickness of the paint coating layer according to an embodiment of the present invention is 250 $\mu$m, and illustrates relatively various volumetric ratios compared to FIG. 4A.

Referring to a graph 1800 of FIG. 18B, when the ratios of $Al_2O_3$ and $SiO_2$ in the nano or microparticles forming the paint coating layer according to an embodiment of the present invention are 0.25: 0.75, 0.5:0.5, 0.75:0.25 and 1:0, changes in absorptivity/emissivity for each wavelength are illustrated.

Optical properties according to the ratios of $Al_2O_3$ and $SiO_2$ of 0:1, 0.25:0.75, 0.5:0.5, 0.75:0.25, and 1:0 may be summarized in Table 2 below. For example, in the ratios of $Al_2O_3$ and $SiO_2$, 0.25:0.75 may be 1:3, 0.5:0.5 may be 1: 1, and 0.75:0.25 may be 3:1.

[Table 2]

| $Al_2O_3$:$SiO_2$ | 0:1 | 0.25:0.75 | 0.5:0.5 | 0.75:0.25 | 1:0 |
|---|---|---|---|---|---|
| Average transmittance (%) | 7.38 | 4.09 | 2.73 | 2.21 | 1.96 |
| Average reflectance (%) | 88.75 | 92.1 | 94.1 | 94.3 | 94.6 |
| Average absorptivity (%) | 3.87 | 3.81 | 3.2 | 3.49 | 3.44 |
| Sky window emissivity (%) | 91.2 | 93.2 | 93.5 | 93.6 | 92.4 |
| Total cooling power (Wm$^{-2}$) | 91.68 | 95.01 | 100.31 | 100.58 | 95.79 |

Referring to Table 2, the average transmittance may represent average solar transmittance, the average reflectance may represent average solar reflectance, the average absorptivity may represent average solar absorptivity, and the sky window emissivity may represent infrared emissivity in a wavelength range corresponding to the sky window.

According to Table 2, when the ratios of $Al_2O_3$:$SiO_2$ are 0.5:0.5 and 0.75:0.25, the sky window emissivity and the total cooling power are relatively excellent compared to other ratios.

Therefore, it may be preferred that the paint coating layer according to an embodiment of the present invention is formed by coating or dyeing, on various surfaces, a paint solution in which nano or microparticle powders are mixed in any one volumetric ratio of 3:1 and 1: 1.

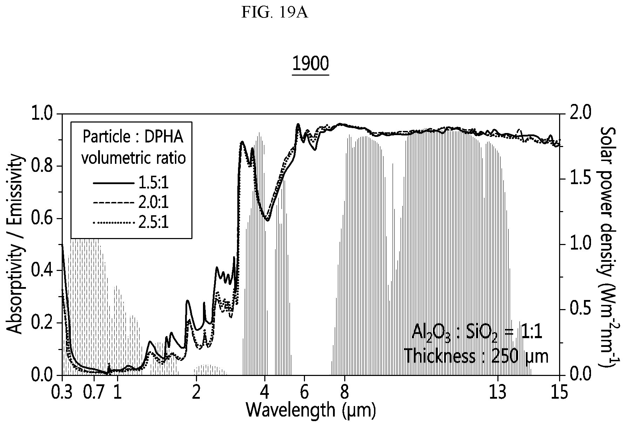

FIGS. 19A to 19D are diagrams illustrating optical properties and cooling power according to a ratio of the binder and the nano or microparticles forming the paint coating layer according to an embodiment of the present invention.

FIGS. 19A to 19D illustrate optical properties according to a ratio of the nano or microparticles and the binder in a paint solution for forming the paint coating layer according to an embodiment of the present invention. Here, the nano or microparticles may have a ratio of $Al_2O_3$:$SiO_2$ of 1:1, and the thickness of the paint coating layer may be 250 $\mu$m.

FIG. 19A illustrates changes in absorptivity/emissivity for each wavelength when the ratios of the nano or microparticles and the binder are 1.5: 1,2:1, and 2.5:1 in the paint solution for forming the paint coating layer according to an embodiment of the present invention.

Referring to a graph 1900 of FIG. 19A, a graph 1900 shows changes in absorptivity/emissivity for each wavelength when the ratios of the nano or microparticles and the binder are 1.5:1, 2:1, and 2.5:1, respectively.

According to an embodiment of the present invention, the ratio of the nano or microparticles to the binder is x:1, wherein x may have a range of 0.2 to 2.5.

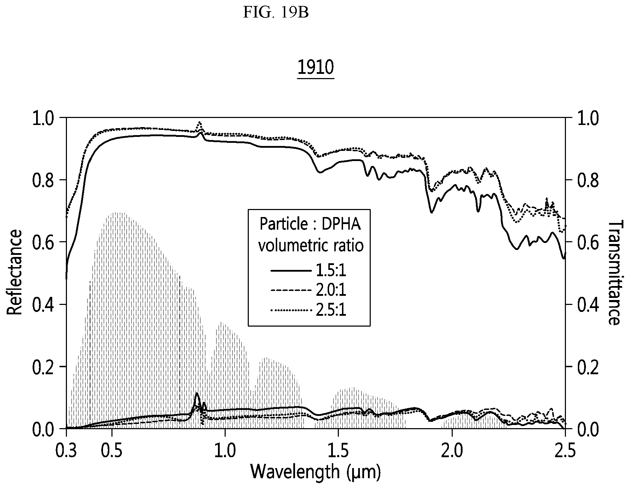

FIG. 19B illustrates changes in reflectance for each wavelength when the ratios of the nano or microparticles and the binder are 1.5:1, 2:1, and 2.5:1 in the paint solution for forming the paint coating layer according to an embodiment of the present invention.

Referring to a graph 1910 of FIG. 19B, when the ratios of the nano or microparticles and the binder are 1.5:1, 2:1, and 2.5:1, there is a difference in reflectance, and as the ratio of the nano or microparticles increases, the reflectance is increased.

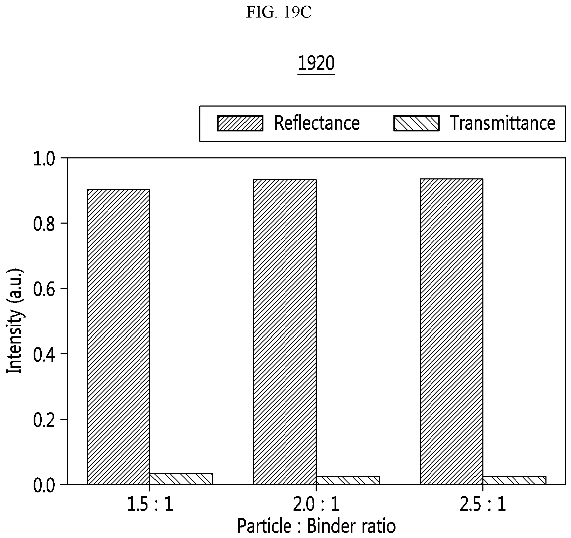

FIG. 19C illustrates reflectance and transmittance when the ratios of the nano or microparticles and the binder are 1.5:1, 2:1, and 2.5:1 in the paint solution for forming the paint coating layer according to an embodiment of the present invention.

Referring to a graph 1920 of FIG. 19C, in the case of the ratios of 1.5:1, 2:1 and 2.5:1, there are differences in reflectance and transmittance, and as the ratio of nano or microparticles increases, the reflectance increases and the transmittance decreases.

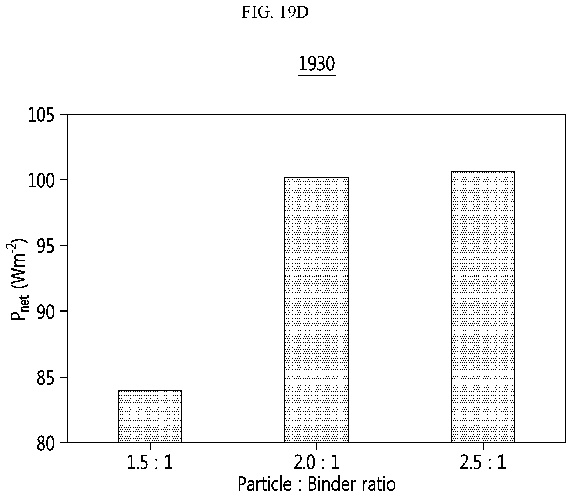

FIG. 19D illustrates cooling power when the ratios of the nano or microparticles and the binder are 1.5:1, 2:1, and 2.5:1 in the paint solution for forming the paint coating layer according to an embodiment of the present invention.

Referring to a graph 1930 of FIG. 19D, in the case of the ratios of 1.5:1, 2:1 and 2.5:1, there are differences in cooling power, and as the ratio of nano or microparticles increases, the cooling power increases.

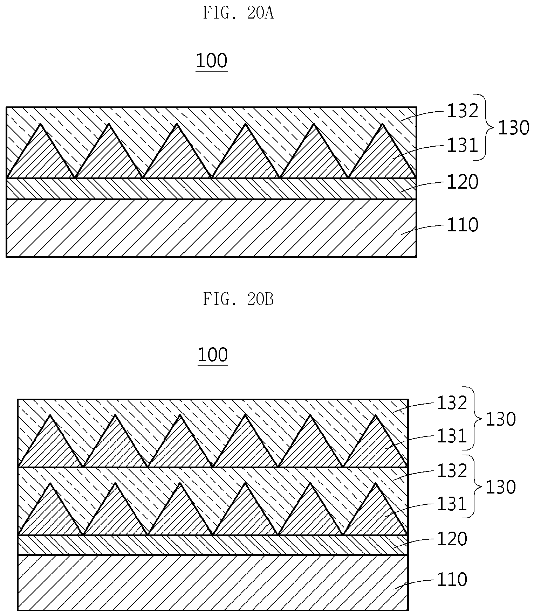

FIGS. 20A and 20B each show a cross-sectional view of a radiative cooling device according to an embodiment of the present invention.

Referring to FIG. 20A, a radiative cooling device 100 according to an embodiment of the present invention includes a reflective layer 120 formed on a substrate 110 and responsible for reflecting sunlight having wavelengths corresponding to ultraviolet, visible, and near-infrared regions and a radiative cooling layer 130 formed on the reflective layer 120 and responsible for absorbing sunlight having a wavelength corresponding to a mid-infrared region and emitting the sunlight as heat.

In general, since the sun has a surface temperature of about 6,000 °C, sunlight has various wavelengths corresponding to ultraviolet, visible, and near-infrared regions.

The reflective layer 120 reflects ultraviolet light, visible light, and near-infrared light of sunlight to prevent the temperature of the radiative cooling device 100 according to an embodiment of the present invention from being increased by sunlight.

That is, the reflective layer 120 may reflect sunlight to minimize sunlight absorbed by the radiative cooling device 100 according to an embodiment of the present invention and maximize reflection of sunlight.

The reflective layer 120 may be formed of a material capable of effectively reflecting sunlight, and in particular, is preferably formed of a material having a reflectance of 90 % or more with respect to visible light.

For example, the reflective layer 120 may be formed of at least one metal material of silver (Ag), aluminum (Al), and platinum (Pt), without being limited thereto.

According to an embodiment, the reflective layer 120 may be formed of a commercially available solar reflective film such as a Solar mirror film manufactured by 3M.

According to an embodiment, the reflective layer 120 may be formed of a multilayer thin film formed of a polymer or an inorganic material.

The multilayer thin film may have a form in which materials having different refractive indexes are repeatedly laminated.

According to an embodiment, the substrate 110 may be formed of any one of a flexible polymer film, glass, quartz, silicon wafer, and metal, without being limited thereto.

For example, the substrate 110 may be formed of any one of polyester-based resins such as polyethylene naphthalate (PEN), acetate-based resins, polyethersulfone-based resins, polycarbonate-based resins, polyamide-based resins, polyimide-based resins, polyolefin-based resins, (meth)acrylic resins, polyvinyl chloride-based resins, polyvinylidene chloride-based resins, polystyrene-based resins, polyvinyl alcohol-based resins, polyarylate-based resins, and polyphenylene sulfide-based resins.

The radiative cooling layer 130 may be formed on the reflective layer 120 to absorb mid-infrared light and emit the mid-infrared light as heat, so that the temperature of an object provided with the radiative cooling device 100 according to an embodiment of the present invention is decreased.

In general, since objects on the earth have a surface temperature of several tens of degrees C, these objects emit mid-infrared light with a wavelength of 8 $\mu$m to 13 $\mu$m.

Such mid-infrared radiation may lower the temperature of an object, and the radiative cooling device 100 according to an embodiment of the present invention includes the radiative cooling layer 130 formed of a material capable of effectively emitting mid-infrared light of the atmospheric window corresponding to a wavelength range of 8 $\mu$m to 13 $\mu$m, so that the temperature of the object is kept lower than external temperature.

The radiative cooling layer 130 according to an embodiment of the present invention may be formed of a material capable of effectively emitting mid-infrared light and may be formed in a single layer.

According to an embodiment, the radiative cooling layer 130 is formed by laminating two thin films formed of two different materials capable of effectively emitting mid-infrared light, and may include a first radiation layer 131 and a second radiation layer 132.

Specifically, the first radiation layer 131 may be formed as a thin film on the reflective layer 120. According to an embodiment, the first radiation layer 131 may include an uneven pattern and may be formed on the reflective layer 120.

When the first radiation layer 131 includes an uneven pattern, the surface area of the first radiation layer 131 may be increased, thereby increasing mid-infrared emissivity.

The uneven pattern may be an uneven pattern including a plurality of cylindrical shapes, prismatic shapes, or line shapes, without being limited thereto.

The second radiation layer 132 may be formed as a thin film on the first radiation layer 131.

According to an embodiment, the second radiation layer 132 may be formed as a thin film on the first radiation layer 131 including an uneven pattern.

The second radiation layer 132 may be formed of a material having a refractive index different from that of the first radiation layer 131 with respect to sunlight having a wavelength corresponding to a mid-infrared region.

That is, since materials forming the first radiation layer 131 and the second radiation layer 132 have different refractive indexes, high mid-infrared emissivity may be achieved by the phonon-polariton resonance effect.

According to an embodiment, with respect to sunlight having a wavelength corresponding to a mid-infrared region, a difference in refractive index between the first radiation layer 131 and the second radiation layer 132 may be 0.7 to 2.

The first radiation layer 131 and the second radiation layer 132 according to an embodiment of the present invention may include at least one of an oxide, a nitride, or a polymer.

In this case, the materials forming the first radiation layer 131 and the second radiation layer 132 may be different.

The oxide may include silica ($SiO_2$), zirconium oxide ($ZrO_2$), alumina ($Al_2O_3$), and titanium dioxide ($TiO_2$), without being limited thereto.

The nitride may be silicon nitride ($Si_3N_4$), without being limited thereto.

According to an embodiment, the polymer may be an acrylic polymer such as polydimethylsiloxane (PDMS) or dipentaerythritol penta/hexa acrylate (DPHA), without being limited thereto.

The acrylic polymer has C-O stretching vibration, and thus has high emissivity in a wavelength corresponding to a mid-infrared region.

In particular, DPHA has high emissivity in a wavelength corresponding to a mid-infrared region due to C-O stretching vibration and C=C bending vibration.

For example, the first radiation layer 131 may be a layer formed by depositing silica, which is an oxide, and the second radiation layer 132 may be a layer formed by depositing alumina, without being limited thereto.

Alternatively, the first radiation layer 131 may be a layer formed by performing spin coating using PDMS, and the second radiation layer 132 may be a layer formed by depositing silicon nitride, without being limited thereto.

The first radiation layer 131 and the second radiation layer 132 according to an embodiment of the present invention may include at least one of fine particles and a polymer.

According to an embodiment, the first radiation layer 131 or the second radiation layer 132 may be formed of a mixture of the fine particles and the polymer.

As the content of the fine particles in the mixture increases, emissivity of mid-infrared light may be increased.

Based on a total weight of the mixture, 1 % by weight to 20 % by weight of the fine particles may be mixed with the polymer.

When the content of the fine particles exceeds 20 % by weight, mid-infrared emissivity no longer increases.

The fine particles may be formed of an oxide or a nitride, and may include, for example, at least one of silica ($SiO_2$), zirconium oxide ($ZrO_2$), alumina ($Al_2O_3$), titanium dioxide ($TiO_2$), and silicon nitride ($Si_3N_4$).

As the size of the fine particles included in the radiative cooling layer 130 decreases, the mid-infrared emissivity of the radiative cooling device 100 according to an embodiment of the present invention may be increased.

According to an embodiment, the fine particles may have a diameter of 10 nm to 20 $\mu$m.

Preferably, the fine particles having a nanometer-scale diameter may have higher mid-infrared emissivity than the fine particles having a micrometer-scale diameter.

For example, the first radiation layer 131 may be formed of a mixture of the fine particles and the polymer, and the second radiation layer 132 may be formed of the polymer.

For example, the first radiation layer 131 may be formed of fine particles made of alumina and PDMS as a polymer and the second radiation layer 132 may be formed of silicon nitride ($Si_3N_4$) as a polymer without being limited thereto.

As another example, the first radiation layer 131 and the second radiation layer 132 may be formed of a mixture of the fine particles and the polymer. In this case, the types of the fine particles and the polymer forming the first radiation layer 131 and the second radiation layer 132 may be different.

For example, the first radiation layer 131 may be formed of a mixture of fine particles made of silica and PDMS as a polymer, and the second radiation layer 132 may be formed of fine particles made of alumina and DPHA as a polymer, without being limited thereto.

The first radiation layer 131 and the second radiation layer 132 may have the same thickness or may have different thicknesses.

According to an embodiment, each of the first radiation layer 131 and the second radiation layer 132 may be formed to have a thickness of 10 nm to 10 um.

In this case, when the first radiation layer 131 includes an uneven pattern, the height from the surface of the reflective layer 120 to the uppermost end of the convex portion (⬚) of the uneven pattern may be set as the thickness of the first radiation layer 131.

According to an embodiment, the radiative cooling layer 130 may include the first radiation layer 131, the second radiation layer 132, and a third radiation layer (not shown).

According to an embodiment, the first radiation layer 131, the second radiation layer 132 and the third radiation layer may emit mid-infrared light, and may be formed of materials having different refractive indexes.

Referring to FIG. 20B, the radiative cooling device 100 according to an embodiment of the present invention may include the radiative cooling layer 130 in which the first radiation layer 131 and the second radiation layer 132 are repeatedly formed.

For example, the radiative cooling layer 130 may be formed by repeatedly laminating the first radiation layer 131 and the second radiation layer 132 on the reflective layer 120 in the order of the first radiation layer 131-the second radiation layer 132-the first radiation layer 131-the second radiation layer 132.

According to an embodiment, although not shown in the drawings, the radiative cooling layer 130 may be formed by repeatedly laminating the first radiation layer 131 and the second radiation layer 132 on the reflective layer 120 in the order of the first radiation layer 131-the second radiation layer 132-the first radiation layer 131-the second radiation layer 132-the first radiation layer 131-the second radiation layer 132-the first radiation layer 131-the second radiation layer 132-....

For example, the radiative cooling layer 130 may be formed by repeatedly laminating, on the reflective layer 120, a unit layer consisting of alumina, silicon nitride, and silica in the order of alumina-silicon nitride-silica.

As another example, the radiative cooling layer 130 may be formed by repeatedly laminating a unit layer consisting of PDMS, silicon nitride, and silica in the order of PDMS-silicon nitride-silica.

The first radiation layer 131 and the second radiation layer 132 have been described with reference to FIG. 20A, and thus repeated description thereof will be omitted.

Since the radiative cooling device 100 according to an embodiment of the present invention includes the reflective layer 120 for reflecting ultraviolet light, visible light, and near-infrared light of sunlight and the radiative cooling layer 130 formed of a material that emits mid-infrared light, the radiative cooling device 100 may efficiently emit mid-infrared light, and thus may efficiently cool an object without energy consumption.

Hereinafter, the structure and properties of the radiative cooling device according to another embodiment of the present invention will be described.

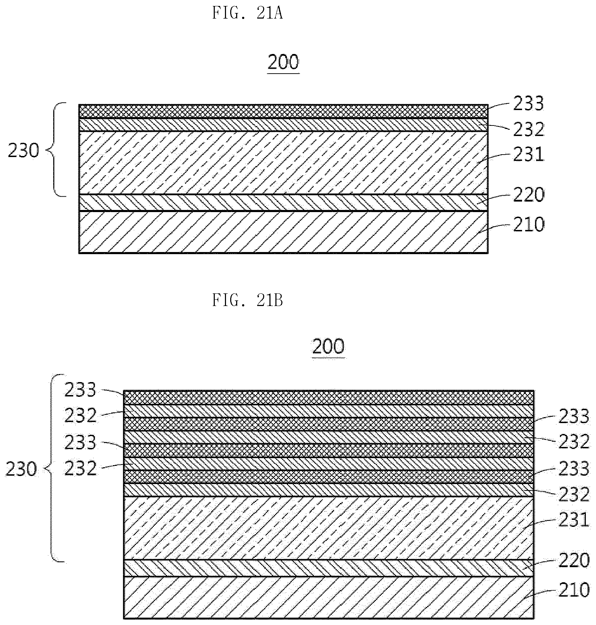

FIGS. 21A and 21B each show a cross-sectional view of a radiative cooling device according to another embodiment of the present invention.

Referring to FIG. 21A, in a radiative cooling device 200 according to another embodiment of the present invention, a radiative cooling layer 230 may include a mid-infrared light absorption layer 231 formed on a reflective layer 220 and responsible for absorbing sunlight having a wavelength corresponding to a mid-infrared region and emitting the sunlight as heat and a coating layer formed on the mid-infrared light absorption layer 231 and responsible for reflecting visible light.

The mid-infrared light absorption layer 231 may be formed on the reflective layer 220 to absorb mid-infrared light and emit the mid-infrared light as heat, so that the temperature of the radiative cooling device 200 according to another embodiment of the present invention may be decreased.

The mid-infrared light absorption layer 231 may be formed of a material capable of effectively emitting mid-infrared light and may be formed in a single layer.

The material forming the mid-infrared light absorption layer 231 may have high emissivity with respect to mid-infrared light, and may be transparent with respect to sunlight having wavelengths corresponding to ultraviolet, visible, and near-infrared regions.

According to an embodiment, the mid-infrared light absorption layer 231 may be formed of a polymer.

For example, the polymer may be polydimethylsiloxane (PDMS) or dipentaerythritol penta/hexa acrylate (DPHA).

According to an embodiment, the mid-infrared light absorption layer 231 may be formed of at least one of an oxide, a nitride, and a polymer.

The oxide may include silica ($SiO_2$), zirconium oxide ($ZrO_2$), alumina ($Al_2O_3$), and titanium dioxide ($TiO_2$), without being limited thereto.

The nitride may be silicon nitride ($Si_3N_4$), without being limited thereto.

According to an embodiment, the polymer may be polydimethylsiloxane (PDMS) or dipentaerythritol penta/hexa acrylate (DPHA).

For example, the mid-infrared light absorption layer 231 may be a layer formed by depositing silica, which is an oxide, without being limited thereto.

As another example, the mid-infrared light absorption layer 231 may be formed by performing spin coating using PDMS as a polymer, without being limited thereto.

According to an embodiment, the mid-infrared light absorption layer 231 may be formed of a mixture of fine particles and a polymer.

The fine particles may be made of an oxide or a nitride. For example, the fine particles may include at least one of silica ($SiO_2$), zirconium oxide ($ZrO_2$), alumina ($Al_2O_3$), titanium dioxide ($TiO_2$), and silicon nitride ($Si_3N_4$).

As the size of the fine particles included in the radiative cooling layer 230 decreases, the mid-infrared emissivity of the radiative cooling device 200 according to an embodiment of the present invention may be increased.

According to an embodiment, the fine particles may have a diameter of 10 nm to 20 $\mu$m.

For example, the mid-infrared light absorption layer 231 may be formed of PDMS or DPHA, and may be a single layer formed by performing spin coating using a mixture of PDMS and DPHA.

Alternatively, the mid-infrared light absorption layer 231 may be a single layer formed by performing spin coating using a mixture of fine particles made of silica and PDMS as a polymer.

The coating layer serves to reflect visible light. For effective reflection of visible light, the coating layer may be formed of a material having a high refractive index with respect to visible light.

In this case, the high refractive index may be a refractive index of 1.5 or more with respect to visible light.

Accordingly, the coating layer may be a layer formed of a material having a refractive index of 1.5 or more with respect to visible light.

Specifically, the coating layer may be a layer formed of a material having a refractive index of 1.6 to 6 with respect to visible light.

The coating layer may be formed of a defect-free single crystal ceramic material, and may be formed of a material that is transparent to visible light and mid-infrared light.

For example, the coating layer may be formed of at least one of yttria ($Y_2O_3$), ALON, spinel-structured Mg, Si, Ge, ZnS, ZnSe, NaCl, $CaF_2$, KBr, PE, and PS, without being limited thereto.

The coating layer may be formed of a material having a high refractive index with respect to visible light, and is preferably formed of at least one of ZnS, Si, and Ge.

The coating layer according to an embodiment of the present invention is formed of a material having a higher refractive index than that of the mid-infrared light absorption layer 231 to efficiently reflect visible light. Accordingly, the heat absorptivity of the radiative cooling device 200 according to another embodiment of the present invention may be reduced, thereby improving cooling efficiency.

According to an embodiment, the coating layer may be formed of multiple layers formed of materials having different refractive indexes with respect to visible light.

Specifically, the coating layer may be formed on the mid-infrared light absorption layer 231, and may include a first coating layer 232 and a second coating layer 233 having different refractive indexes with respect to visible light.

The first coating layer 232 may be formed on the mid-infrared light absorption layer 231, and may be formed of a material having a higher refractive index than that of the second coating layer 233 with respect to visible light.

The second coating layer 233 may be formed on the first coating layer 232, and may be formed of a material having a lower refractive index than that of the first coating layer 232 with respect to visible light.

Specifically, a difference in refractive index between the first coating layer 232 and the second coating layer 233 may be 0.4 to 3.0.

In the radiative cooling device 200 according to another embodiment of the present invention, the second coating layer 233 may be formed on the mid-infrared light absorption layer 231, and the first coating layer 232 may be formed on the second coating layer 233.

According to an embodiment, the first coating layer 232 may be formed of at least one ZnS, Si, Ge, and $ZrO_2$ that have a higher refractive index than that of the second coating layer 233 with respect to visible light, without being limited thereto.

According to an embodiment, the second coating layer 233 may be formed of at least one of $CaF_2$ and $SiO_2$ that have a lower refractive index than that of the first coating layer 232 with respect to visible light, without being limited thereto.

The first coating layer 232 and the second coating layer 233 included in the coating layer have different refractive indexes with respect to visible light. Accordingly, the coating layer may have high reflectance with respect to visible light.

The first coating layer 232 and the second coating layer 233 are formed of materials having high or low refractive indexes with respect to visible light to maximize reflection of visible light and minimize visible light reaching the reflective layer 220. Accordingly, the cooling efficiency of the radiative cooling device 200 according to another embodiment of the present invention may be improved.

Referring to FIG. 21B, a radiative cooling device according to another embodiment of the present invention may include a coating layer in which a first coating layer and a second coating layer are repeatedly formed.

Specifically, the coating layer may be formed by repeatedly laminating the first coating layer and the second coating layer on a mid-infrared light absorption layer in the order of the first coating layer-the second coating layer-the first coating layer-the second coating layer-the first coating layer-the second coating layer-....

According to an embodiment, the repeatedly laminated first and second coating layers may be formed of different materials.

The first coating layer and the second coating layer have been described with reference to FIG. 21A, and thus repeated description thereof will be omitted.

Since the coating layer includes the repeated formed first and second coating layers having a high or low refractive index with respect to visible light, reflection of visible light may be maximized, and thus the cooling efficiency of the radiative cooling device according to another embodiment of the present invention may be improved.

The radiative cooling device according to an embodiment of the present invention may reflect 95 % or more of sunlight and emit 90 % or more of mid-infrared light, and thus may cool an object without energy consumption.

Hereinafter, a method of manufacturing the radiative cooling device according to an embodiment of the present invention will be described.

Since the method of manufacturing the radiative cooling device according to an embodiment of the present invention includes all components of the above-described radiative cooling device, repeated description thereof will be omitted.

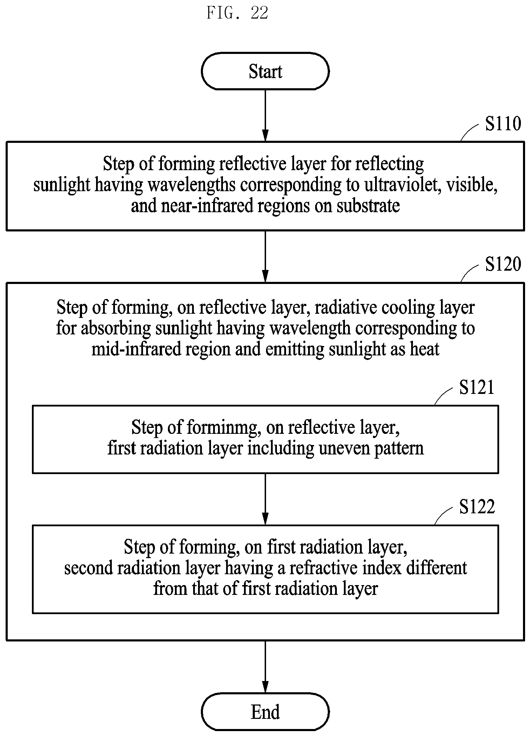

FIG. 22 is a flowchart for explaining a method of manufacturing a radiative cooling device according to an embodiment of the present invention.

Referring to FIG. 22, the method of manufacturing the radiative cooling device according to an embodiment of the present invention includes step S 110 of forming a reflective layer responsible for reflecting sunlight having wavelengths corresponding to ultraviolet, visible, and near-infrared regions on a substrate and step S120 of forming, on the reflective layer, a radiative cooling layer for absorbing sunlight having a wavelength corresponding to a mid-infrared region and emitting the sunlight as heat.

The substrate may be formed of any one of a flexible polymer film, glass, quartz, silicon wafer, and metal, without being limited thereto.

The substrate has been described with reference to FIG. 20A, and thus repeated description thereof will be omitted.

In step S 110, the reflective layer may be formed by depositing a metal material such as silver (Ag), aluminum (Al), and platinum (Pt) on the substrate.

A method of depositing the reflective layer under a reduced pressure, atmospheric pressure, or increased pressure may include sputtering, atomic layer deposition (ALD), chemical vapor deposition (CVD), thermal evaporation, co-evaporation, plasma enhanced chemical vapor deposition (PECVD), e-beam evaporation, radio frequency (RF) sputtering, magnetron sputtering, vacuum deposition, or chemical vapor deposition, without being limited thereto.

In step S120, the reflective layer may be coated with a material that emits mid-infrared light to form the radiative cooling layer.

According to an embodiment, in step S120, the radiative cooling layer having a multilayer form including the first radiation layer and the second radiation layer may be formed on the reflective layer using different materials that emit mid-infrared light.

That is, in step S120, the first radiation layer and the second radiation layer may be formed on the reflective layer using at least one of an oxide, a nitride, and a polymer.

When the first radiation layer and the second radiation layer include an oxide or a nitride, the first radiation layer and the second radiation layer may be formed using a deposition method.

For example, the first radiation layer may be a layer formed by depositing silica, which is an oxide, and the second radiation layer may be a layer formed by depositing alumina.

The deposition method may include, under a reduced pressure, atmospheric pressure, or increased pressure, sputtering, atomic layer deposition (ALD), chemical vapor deposition (CVD), thermal evaporation, co-evaporation, plasma enhanced chemical vapor deposition (PECVD), e-beam evaporation, radio frequency (RF) sputtering, magnetron sputtering, vacuum deposition, or chemical vapor deposition, without being limited thereto.

When the first radiation layer and the second radiation layer include a polymer, the first radiation layer and the second radiation layer may be formed using a coating method.

For example, the first radiation layer may be a layer formed by performing spin coating using PDMS, and the second radiation layer may be a layer formed by depositing silicon nitride, which is a nitride.

The coating method may include any one of spin coating, spray coating, ultra-spray coating, electrospinning coating, slot die coating, gravure coating, bar coating, roll coating, dip coating, shear coating, screen-printing, inkjet printing, and nozzle printing, without being limited thereto.

According to an embodiment, the first radiation layer and the second radiation layer may include at least one of fine particles and a polymer.

For example, the first radiation layer may be formed of a mixture of the fine particles and the polymer, and the second radiation layer may be formed of the polymer.

When the first radiation layer and the second radiation layer include a mixture of the fine particles and the polymer, the first radiation layer and the second radiation layer may be formed using a coating method.

The coating method may be spin coating, or may include any one of spray coating, ultra-spray coating, electrospinning coating, slot die coating, gravure coating, bar coating, roll coating, dip coating, shear coating, screen-printing, inkjet printing, and nozzle printing, without being limited thereto.

According to an embodiment, the first radiation layer may have a large surface area by including an uneven pattern, and thus may improve mid-infrared emissivity.

Specifically, step S120 may include step S 121 of forming, on the reflective layer, a first radiation layer including an uneven pattern and step S 122 of forming, on the first radiation layer, a second radiation layer having a refractive index different from that of the first radiation layer.

In step S 121, using at least one of the fine particles made of an oxide or a nitride and the polymer, the first radiation layer including an uneven pattern may be formed on the reflective layer.

In step S121, using a stamp having a pattern corresponding to the uneven pattern, the first radiation layer including an uneven pattern may be formed on the reflective layer through an optical-based lithography process or a non-optical-based lithography process.

The optical-based lithography process may be any one of photolithography, laser interference lithography, and e-beam lithography, without being limited thereto.

The non-optical-based lithography process may be any one of nanoimprint lithography, nanotransfer printing, and roll imprint lithography, without being limited thereto.

According to an embodiment, in step S121, coating is performed using at least one of the fine particles made of an oxide or a nitride and the polymer, and then an uneven pattern may be formed by performing cutting in a top-down manner.

The uneven pattern may be an uneven pattern including a plurality of cylindrical shapes, prismatic shapes, or line shapes, without being limited thereto.

In step S122, using a material having a refractive index different from that of the first radiation layer, the second radiation layer may be formed on the first radiation layer including an uneven pattern.

Specifically, in step S122, to form the second radiation layer, the first radiation layer may be spin-coated with a material having a refractive index different from that of the first radiation layer.

In step S122, the thickness of the second radiation layer may be determined by adjusting spin coating time.

According to an embodiment, spin coating may be performed for 30 to 40 seconds.

In this case, even when spin coating time exceeds 40 seconds, the thickness of the second radiation layer no longer increases.

According to an embodiment, in the method of manufacturing the radiative cooling device according to an embodiment of the present invention, step S121 and step S122 may be repeatedly performed to form a radiative cooling layer in which the first radiation layer and the second radiation layer are repeatedly formed.

Specifically, the first radiation layer having a layer form or including an uneven pattern may be formed on the reflective layer, the second radiation layer having a layer form may be formed on the first radiation layer, the first radiation layer having a layer form or including an uneven pattern may be formed on the second radiation layer again, and then the second radiation layer may be formed thereon.

According to the method of manufacturing the radiative cooling device according to an embodiment of the present invention, a radiative cooling device having a simple structure including a small number of layers may be manufactured through a simple process.

The radiative cooling device manufactured by the method of manufacturing a radiative cooling device according to an embodiment of the present invention has a large surface area due to an uneven pattern included in the radiative cooling layer. Accordingly, mid-infrared radiation may be increased, and thus cooling efficiency may be improved.

Hereinafter, the method of manufacturing a radiative cooling device according to another embodiment of the present invention will be described.

The method of manufacturing a radiative cooling device according to another embodiment of the present invention includes the components of the radiative cooling device described in FIGS. 21A and 21B, and thus repeated description thereof will be omitted.

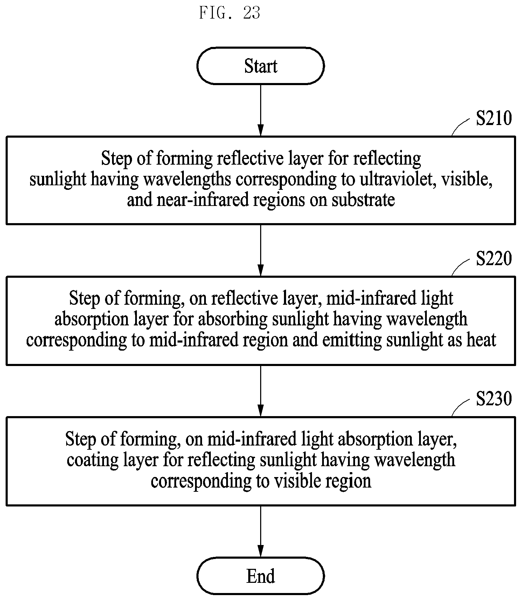

FIG. 23 is a flowchart for explaining a method of manufacturing a radiative cooling device according to another embodiment of the present invention.

Referring to FIG. 23, the method of manufacturing a radiative cooling device according to another embodiment of the present invention include step S210 of forming a reflective layer for reflecting sunlight having wavelengths corresponding to ultraviolet, visible, and near-infrared regions on a substrate, step S220 forming, on the reflective layer, a mid-infrared light absorption layer for absorbing sunlight having a wavelength corresponding to a mid-infrared region and emitting the sunlight as heat, and step S230 of forming, on the mid-infrared light absorption layer, a coating layer for reflecting sunlight having a wavelength corresponding to a visible region.

Step S210 includes the components of step S 110 described in FIG. 22, and thus repeated description thereof will be omitted.

In steps S220 and S230, by forming the coating layer on the mid-infrared light absorption layer, the radiative cooling layer including the mid-infrared light absorption layer and the coating layer may be formed.

First, in step S220, using a material capable of emitting mid-infrared light, the mid-infrared light absorption layer may be formed on the reflective layer.

The mid-infrared light absorption layer may be a single layer including at least one of an oxide, a nitride, or a polymer.

When the mid-infrared light absorption layer includes an oxide or a nitride, the mid-infrared light absorption layer may be formed using a deposition method.

The deposition method may include, under a reduced pressure, atmospheric pressure, or increased pressure, sputtering, atomic layer deposition (ALD), chemical vapor deposition (CVD), thermal evaporation, co-evaporation, plasma enhanced chemical vapor deposition (PECVD), e-beam evaporation, radio frequency (RF) sputtering, magnetron sputtering, vacuum deposition, or chemical vapor deposition, without being limited thereto.

When the mid-infrared light absorption layer includes a polymer, the mid-infrared light absorption layer may be formed using a coating method.

The coating method may include spin coating, spray coating, ultra-spray coating, electrospinning coating, slot die coating, gravure coating, bar coating, roll coating, dip coating, shear coating, screen-printing, inkjet printing, and nozzle printing.

In step S230, to effectively reflect visible light, the coating layer may be formed of a material having a high refractive index with respect to visible light.

Specifically, in step S230, to effectively reflect visible light, the coating layer may be formed by depositing a material having a high refractive index with respect to visible light on the mid-infrared light absorption layer or by coating the mid-infrared light absorption layer with the material.

The deposition method may include, under a reduced pressure, atmospheric pressure, or increased pressure, sputtering, atomic layer deposition (ALD), chemical vapor deposition (CVD), thermal evaporation, co-evaporation, plasma enhanced chemical vapor deposition (PECVD), e-beam evaporation, radio frequency (RF) sputtering, magnetron sputtering, vacuum deposition, or chemical vapor deposition, without being limited thereto.

The coating method may include spin coating, spray coating, ultra-spray coating, electrospinning coating, slot die coating, gravure coating, bar coating, roll coating, dip coating, shear coating, screen-printing, inkjet printing, and nozzle printing, without being limited thereto.

According to an embodiment, the coating layer may be formed of multiple layers formed of materials having different refractive indexes with respect to visible light.

Specifically, in step S230, the first coating layer and the second coating layer having different refractive indexes with respect to visible light may be formed on the mid-infrared light absorption layer.

Specifically, the first coating layer may be formed on the mid-infrared light absorption layer. In this case, the first coating layer may be formed by applying a material having a higher refractive index than that of the second coating layer with respect to visible light.

The second coating layer may be formed on the first coating layer. In this case, the second coating layer may be formed by applying a material having a lower refractive index than that of the first coating layer with respect to visible light.

In this case, the first coating layer and the second coating layer may be formed using a depositing process or a coating process.

The deposition method and the coating method have been described above, and thus repeated description thereof will be omitted.

According to an embodiment, in the method of manufacturing a radiative cooling device according to another embodiment of the present invention, the first coating layer and the second coating layer may be repeatedly formed.

In the method of manufacturing a radiative cooling device according to another embodiment of the present invention, a radiative cooling device having excellent cooling efficiency may be manufactured through a simple process.

Compared to a conventional radiative cooling device, the radiative cooling device manufactured using the method of manufacturing a radiative cooling device according to another embodiment of the present invention may have a simple structure including a small number of layers and may have excellent cooling efficiency due to high mid-infrared emissivity.

Hereinafter, the radiative cooling devices according to two embodiments of the present invention were manufactured according to examples below, and the properties thereof were evaluated. Based the results, the properties and effects of the radiative cooling device of the present invention were demonstrated.

**Examples and Comparative Examples**

**[Example 1-1]**

To manufacture a radiative cooling device, a reflective layer made of silver (Ag) was formed on a glass substrate using an e-beam evaporator.

The reflective layer was spin-coated with silica, a first radiation layer having an uneven pattern was formed using a nano-imprinting process, and then the first radiation layer was spin-coated with alumina to form a second radiation layer.

**[Example 1-2]**

A radiative cooling device was manufactured in the same manner as in Example 1-1, except that the second radiation layer was spin-coated with silica, a first radiation layer having an uneven pattern was formed using a nano-imprinting process, and then the first radiation layer was spin-coated with alumina to form the second radiation layer once more.

**[Example 2]**

To manufacture a radiative cooling device, a reflective layer made of silver (Ag) was formed on a glass substrate using an e-beam evaporator.

Alumina was deposited on the reflective layer to form a first radiation layer, silicon nitride ($Si_3N_4$) was deposited on the first radiation layer to form a second radiation layer, and then silica was deposited on the second radiation layer to form a third radiation layer.

**[Example 3-1]**

To manufacture a radiative cooling device, a reflective layer made of silver (Ag) was formed on a glass substrate using an e-beam evaporator.

The reflective layer was spin-coated with PDMS to form a first radiation layer, silica was deposited on the first radiation layer to form a second radiation layer, and then silicon nitride was deposited on the second radiation layer to form a third radiation layer.

**[Example 3-2]**

To manufacture a radiative cooling device, a reflective layer made of silver (Ag) was formed on a glass substrate using an e-beam evaporator.

The reflective layer was spin-coated with PDMS to form a first radiation layer, and then silica was deposited on the first radiation layer to form a second radiation layer.

**[Example 4]**

To manufacture a radiative cooling device, a reflective layer made of silver (Ag) was formed on a glass substrate using an e-beam evaporator.

10 % by weight of silica fine particles having a diameter of 10 $\mu$m was added to PDMS to obtain a mixture.

The reflective layer was spin-coated with the mixture to form a single-layer radiative cooling layer.

**[Example 4-1]**

To manufacture a radiative cooling device, a reflective layer made of silver (Ag) was formed on a glass substrate using an e-beam evaporator.

The reflective layer was spin-coated with PDMS to form a single-layer radiative cooling layer.

**[Example 5]**

To manufacture three types of radiative cooling devices, a reflective layer made of silver (Ag) was formed on a glass substrate using an e-beam evaporator, and the glass substrate on which the reflective layer was formed was prepared in 3 copies.

The three glass substrates were spin-coated with a solution containing 60 % by weight of DPHA, a solution containing 80 % by weight of DPHA, and a solution containing 90 % by weight of DPHA, respectively. Thereby, a single-layer radiative cooling layer was formed on the reflective layer of each glass substrate.

**[Example 6-1]**

To manufacture three types of radiative cooling devices, a reflective layer made of silver (Ag) was formed on a glass substrate using an e-beam evaporator, and the glass substrate on which the reflective layer was formed was prepared in 3 copies.

Three types of mixtures were prepared by adding 1.9 % by weight of alumina fine particles having a diameter of 20 nm, 3.8 % by weight of alumina fine particles having a diameter of 20 nm, and 7.7 % by weight of alumina fine particles having a diameter of 20 nm to DPHA, respectively.

The three glass substrates were spin-coated with the three mixtures, respectively. Thereby, a single-layer radiative cooling layer was formed on the reflective layer of each glass substrate.

**[Example 6-2]**

To manufacture three types of radiative cooling devices, a reflective layer made of silver (Ag) was formed on a glass substrate using an e-beam evaporator, and the glass substrate on which the reflective layer was formed was prepared in 3 copies.

Three types of mixtures were prepared by adding alumina fine particles having a diameter of 20 nm, alumina fine particles having a diameter of 1 $\mu$m, and alumina fine particles having a diameter of 3 $\mu$m to DPHA, respectively.

The three glass substrates were spin-coated with the three mixtures, respectively, Thereby, a single-layer radiative cooling layer was formed on the reflective layer of each glass substrate.

**[Example 7]**

To manufacture a radiative cooling device, a reflective layer made of silver (Ag) was formed on a glass substrate to have a thickness of 100 nm using an e-beam evaporator.

The reflective layer was spin-coated with silica fine particles to form a second radiation layer having a thickness of 130 nm.

Fine particles made of zirconium oxide were applied to the second radiation layer, and then a first radiation layer including an uneven pattern was formed through a nano-imprinting process.

In this case, the uneven pattern included in the first radiation layer had a width of 24 $\mu$m and a height of 10.2 $\mu$m.

**[Example 8]**

To manufacture a radiative cooling device, a reflective layer made of silver (Ag) was formed on a silicon substrate using an e-beam evaporator.

$ZrO_2$ was deposited on the reflective layer to form a first coating layer, and then $SiO_2$ was deposited on the first coating layer to form a second coating layer.

**[Comparative Example 1-1]**

To manufacture a radiative cooling device, a reflective layer made of silver (Ag) was formed on a glass substrate using an e-beam evaporator.

Silica ($SiO_2$) was deposited on the reflective layer to form a first radiation layer of a layer form, and then alumina

$(Al_2O_3)$ was deposited on the first radiation layer to form a second radiation layer of a layer form.

**[Comparative Example 1-2]**

A radiative cooling device was manufactured in the same manner as in Comparative Example 1-1, except that silica was deposited on the second radiation layer to form a first radiation layer of a layer form, and then alumina was deposited to form a second radiation layer of a layer form.

**[Comparative Example 2]**

A cooling device was manufactured by forming a reflective layer made of silver (Ag) on a glass substrate using an e-beam evaporator.

**[Comparative Example 3]**

A glass substrate.

**[Comparative Example 4]**

A radiative cooling device was manufactured in the same manner as in Example 7, except that zirconium oxide was applied to a second radiation layer to form a first radiation layer having a thickness of 7.33 $\mu$m.

**[Comparative Example 5-1]**

A cooling device was manufactured by forming a reflective layer made of silver (Ag) on a silicon substrate using an e-beam evaporator.

**[Comparative Example 5-2]**

A silicon substrate.

Characteristics evaluation

1. Emissivity of radiative cooling device according to presence or absence of uneven pattern

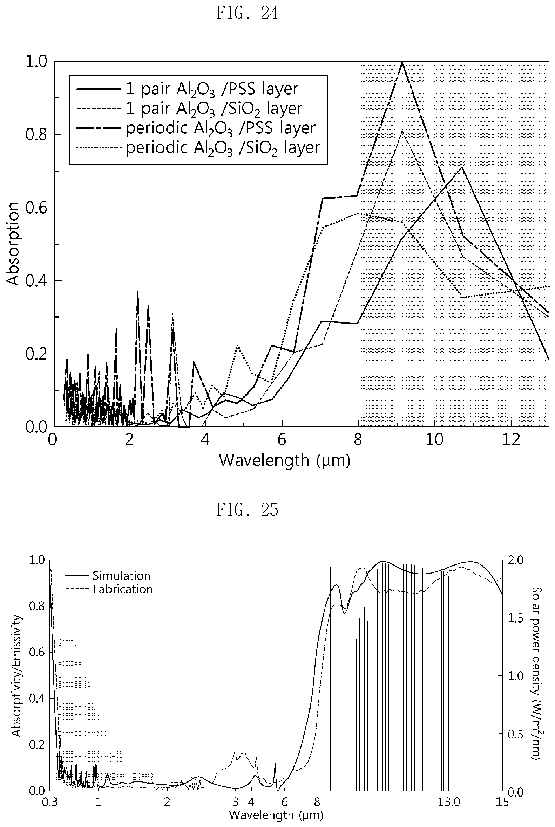

FIG. 24 is a graph showing absorbance according to whether the first radiation layer and the second radiation layer are repeatedly laminated according to examples and comparative examples of the present invention.
Referring to FIG. 24, it can be confirmed that the absorptivity of Example 1-1 (1 pair of $Al_2O_3$/PSS layer) is higher than that of Comparative Example 1-1 (1 pair of $Al_2O_3$/$SiO_2$ layer) with respect to mid-infrared light (yellow region in FIG. 24).
Accordingly, it can be seen that, compared to Comparative Example 1-1 without an uneven pattern, Example 1-1 having an uneven pattern emits mid-infrared light more effectively.
In addition, it can be confirmed that the absorptivity of Example 1-2 (periodic $Al_2O_3$/PSS layer) is higher than that of Comparative Example 1-2 (periodic $Al_2O_3$/$SiO_2$ layer) in a mid-infrared region.
Accordingly, it can be seen that, compared to Comparative Example 1-2 without an uneven pattern, Example 1-2 having an uneven pattern emits mid-infrared light more effectively.
In conclusion, by including an uneven pattern, a radiative cooling device according to an embodiment of the present invention may improve mid-infrared radiation efficiency.

2. Evaluation of cooling efficiency of radiative cooling device according to types of materials

The cooling efficiency of the radiative cooling device of Example 2 was evaluated through simulation, and the results are described below.

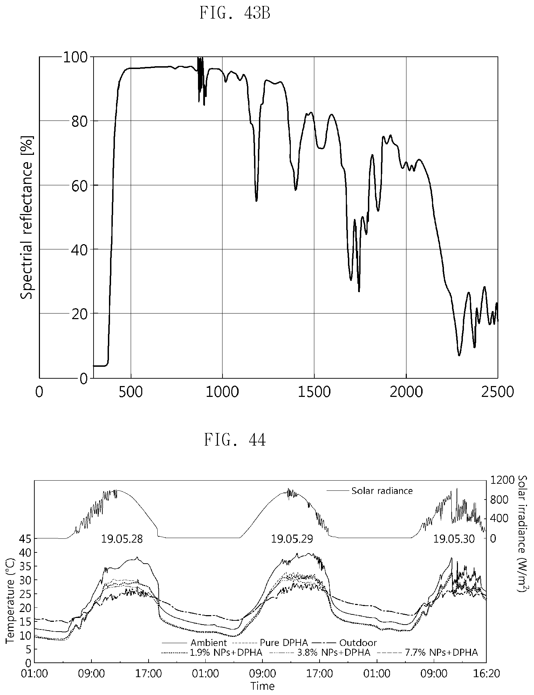

FIG. 44 is a graph showing the absorptivity and emissivity of the radiative cooling device according to Example 2 of the present invention.
In this case, the yellow region of FIG. 44 means incident sunlight.
Referring to FIG. 44, simulation results show that the radiative cooling device has a degree of temperature change of -8.18 °C and a cooling efficiency of 81.8 W/m$^2$.

In this case, the degree of temperature change refers to change in temperature after cooling from the initial temperature of a radiative cooling device. When the degree of temperature change is -8.18 °C, this means that the temperature of the radiative cooling device is 8.18 °C lower than the initial temperature.

In addition, it can be confirmed that there is no significant difference between the simulation (Simulation) and the emissivity of Example 2 (Fabrication) for average sunlight absorptivity and the mid-infrared region (blue region in FIG. 44).

That is, it can be seen that Example 2 was manufactured in good accordance with the simulation result.

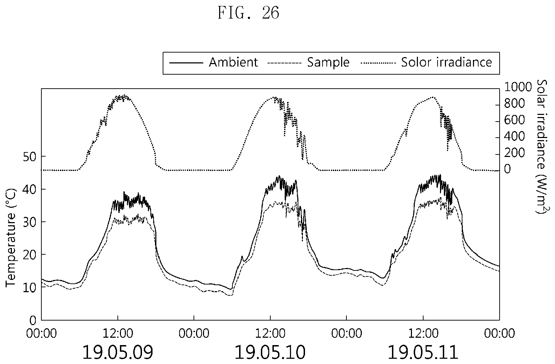

FIG. 26 is a graph showing the temperature of a radiative cooling device according to Example 2 of the present invention during the daytime for each day according to solar radiation quantity.

Referring to FIG. 26, for Example 2, the temperature of the radiative cooling device was measured for 3 days from midnight on May 9, 2019 to midnight on May 11, 2019.

As a result, it can be confirmed that, in Example 2, temperature rises and falls according to the intensity of sunlight, and the degree of temperature change is -8 °C at maximum during the day and -2 °C at night.

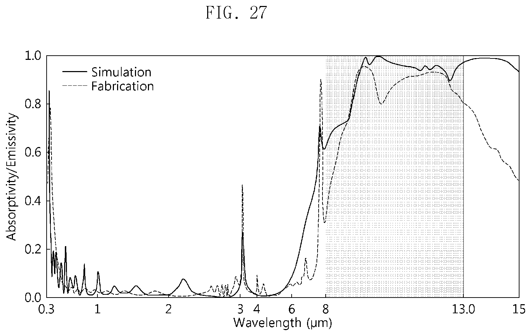

FIG. 27 is a graph showing the absorptivity and emissivity of a radiative cooling device according to Example 3-1 of the present invention.

Referring to FIG. 27, as a result of simulation, the radiative cooling device of Example 3-1 is predicted to have a degree of temperature change of -9.132 °C and a cooling efficiency of 80.44 W/m$^2$.

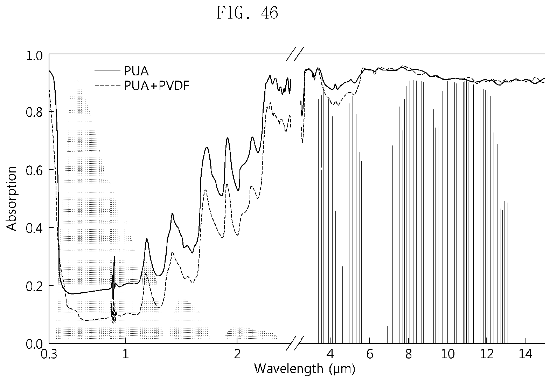

As a result of measuring the actual absorptivity for Example 3-1, it can be confirmed that a solar region has a minimum emission rate and a maximum reflectance. It can be seen that the device has a maximum emission rate in a mid-infrared region (blue region in FIG. 46).

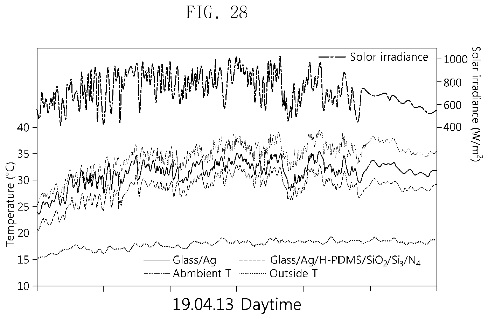

FIG. 28 is a graph showing the external temperature of radiative cooling devices according to Example 3-1 and Comparative Example 2 of the present invention during daytime according to solar radiation quantity.

Referring to FIG. 28, as a result of observing the temperatures of Example 3-1 and Comparative Example 2 in the daytime (10 am to 4 pm) on April 13, 2019, it can be seen that the degree of temperature change of Comparative Example 2 is -3 °C and the degree of temperature change of Example 3-1 is -5.95 °C compared to the ambient temperature (Ambient T).

At this time, external temperature (Outside T) is lower than the temperatures of Example 3-1 and Comparative Example 2 due to heat loss due to air.

Accordingly, the radiative cooling device of the present invention may have excellent cooling efficiency due to a radiative cooling layer formed of a material capable of emitting mid-infrared light.

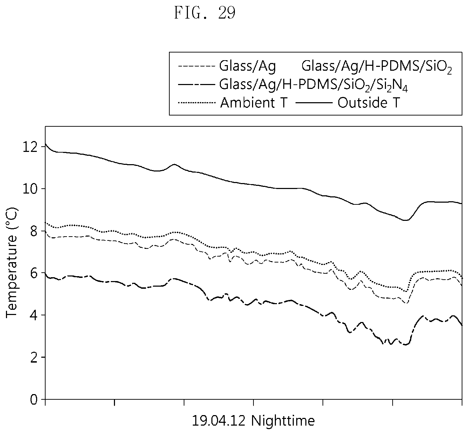

FIG. 29 is a graph showing the temperature of radiative cooling devices according to Example 3-1, Example 3-2, and Comparative Example 2 of the present invention during nighttime.

Referring to FIG. 29, as a result of observing the temperatures of Example 3-1, Example 3-2, and Comparative Example 2 during the night (10 pm to 4 am) of April 13, 2019, it can be confirmed that, compared to atmospheric temperature (Ambient T), Comparative Example 2 has a degree of temperature change of -0.5 °C, and Example 3-1 and Example 3-2 have a degree of temperature change of -2.5 °C.

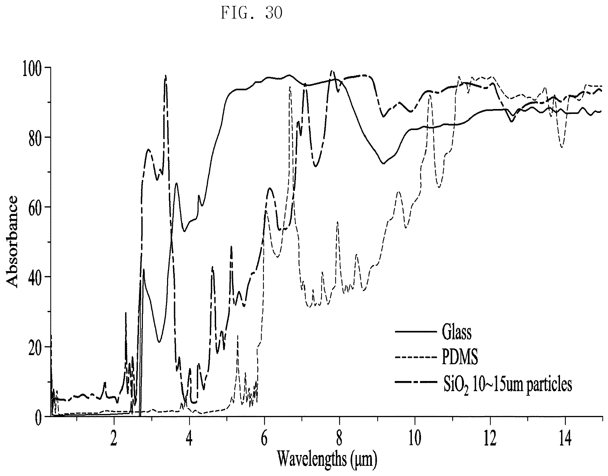

FIG. 30 is a graph showing the absorbance of radiative cooling devices according to Example 4-1, Example 4-2, and Comparative Example 3 of the present invention.

Referring to FIG. 30, it can be confirmed that, compared to Comparative Example 3, Example 4-1 and Example 4-2 exhibit high emissivity in a mid-infrared region.

In particular, it can be seen that Example 4-1 hardly absorbs visible light and exhibits high absorptivity in a long-wavelength region.

Accordingly, Example 4-1 has a degree of temperature change of -9.5 °C and a cooling efficiency of 99.16 W/m$^2$.

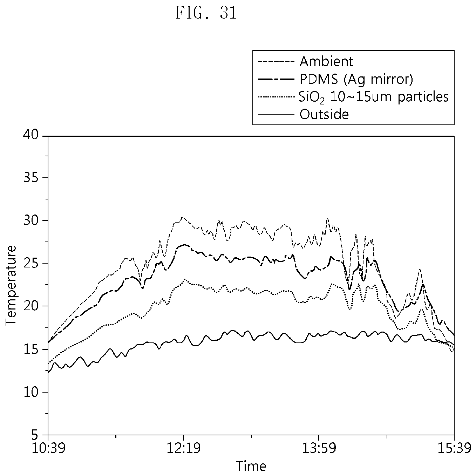

FIG. 31 is a graph showing the temperature and external temperature of radiative cooling devices according to Example 4-1, Example 4-2, and Comparative Example 3 of the present invention during daytime.

Referring to FIG. 31, as a result of observing the temperatures of Example 4-1 and Example 4-2 for 5 hours from 10:39 am to 3:39 pm on April 25, 2019, it can be confirmed that the devices have low temperature compared to atmospheric temperature (Ambient).

In particular, it can be confirmed that Example 4-1 has a maximum degree of temperature change of -8 °C.

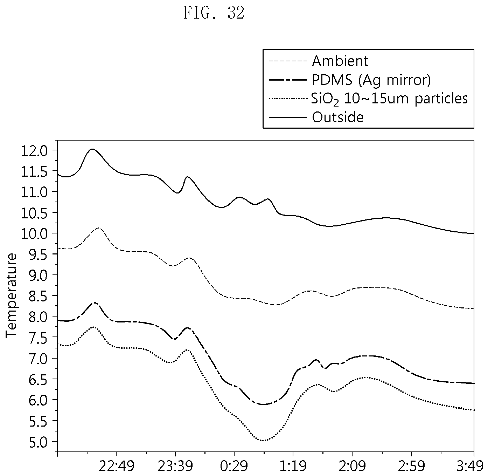

FIG. 32 is a graph showing the temperature and external temperature of radiative cooling devices according to Example 4-1 and Example 4-2 of the present invention during the night.

Referring to FIG. 32, as a result of observing the temperatures of Example 4-1 and Example 4-2 for 5 hours from 10:49 pm to 3:49 am on April 25, 2019, it can be confirmed that the temperatures of the radiative cooling devices are reduced compared to atmospheric temperature (Ambient).

In particular, it can be confirmed that Example 4-1 has a maximum degree of temperature change of -3 °C.

Accordingly, by including a radiative cooling layer formed of fine particles or a polymer capable of emitting mid-infrared light, the radiative cooling device of the present invention may have excellent cooling efficiency during both day and night.

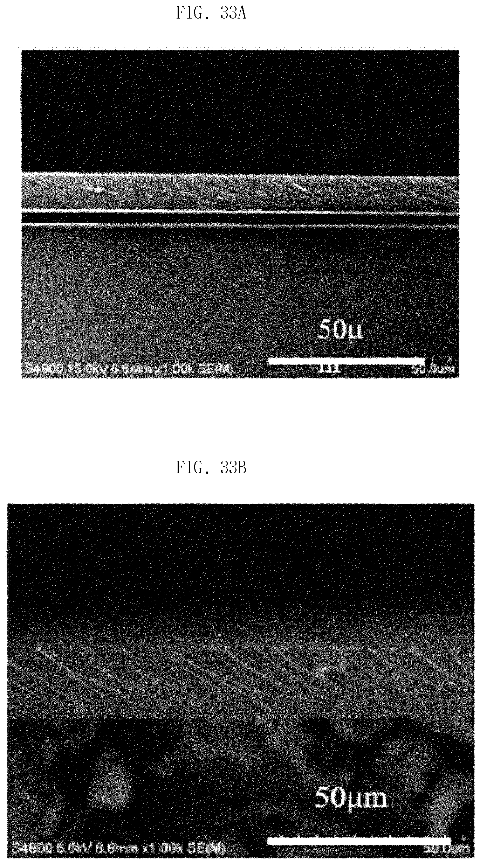

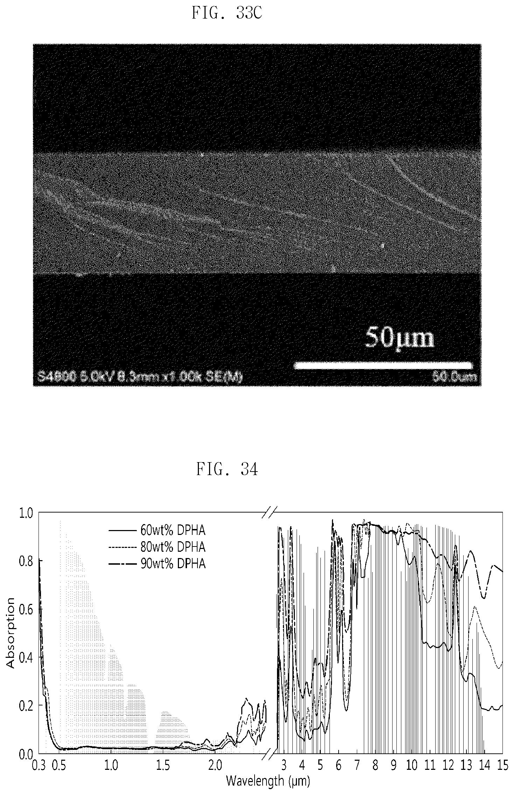

FIGS. 33A to 33C are scanning electron microscope (SEM) images showing the cross section of a radiative cooling device according to Example 5 of the present invention.

Referring to FIGS. 33A to 33C, when the content of DPHA included in the radiative cooling layer of Example 5 is 60 % by weight, 80 % by weight, or 90 % by weight, the thickness of the radiative cooling layer is 10.5 $\mu$m, 16.5 $\mu$m, or 25.7 $\mu$m, respectively. It can be confirmed that the thickness of the radiative cooling layer is proportional to the amount of DPHA.

As the content of DPHA applied on the reflective layer through spin coating increases, viscosity increases. As a result, the thickness of the radiative cooling layer increases even under the same spin coating conditions.

FIG. 34 is a graph showing the absorbance of a radiative cooling device according to Example 5 of the present invention according to the content of DPHA.

Referring to FIG. 34, it can be confirmed that, when the content of DPHA included in the radiative cooling layer of Example 5 increases, the device has high emissivity in a wavelength region of 10 $\mu$m to 12 $\mu$m.

Accordingly, as the content of DPHA included in the radiative cooling layer increases, mid-infrared emissivity increases in a mid-infrared region, thereby improving the cooling efficiency of the radiative cooling device.

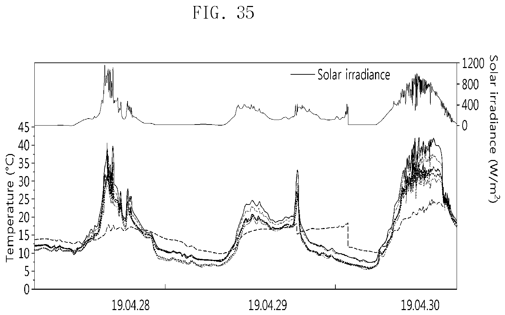

FIG. 35 is a graph showing the temperature of a radiative cooling device according to Example 5 of the present invention by observation period according to solar radiation quantity.

Referring to FIG. 35, as a result of observing the temperature of Example 5 for 3 days from April 28, 2019 to April 30, 2019, it can be confirmed that, as the content of DPHA increases, mid-infrared emissivity increases and the degree of temperature change increases.

In particular, it can be confirmed that, in Example 5, when the content of DPHA is 90 % by weight, the degree of temperature change is -10.1 °C.

Accordingly, by including a radiative cooling layer formed of a polymer having resonance effect due to chemical bonding of molecules, the radiative cooling device of the present invention may have excellent radiative cooling efficiency due to high mid-infrared emissivity.

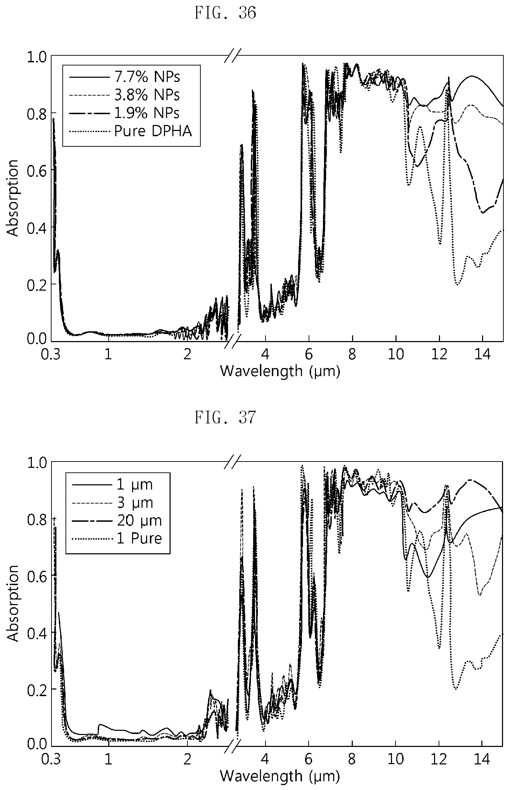

FIG. 36 is a graph showing the absorptivity of a radiative cooling device according to Example 6-1 of the present invention according to the content of fine particles.

Referring to FIG. 36, it can be confirmed that, as the content of alumina fine particles of Example 6-1 increases, emissivity in a mid-infrared region increases.

FIG. 37 is a graph showing the absorptivity of a radiative cooling device according to Example 6-2 of the present invention according to the diameter of fine particles.

Referring to 18, it can be confirmed that, as the diameter of alumina fine particles of Example 6-2 increases, emissivity in a mid-infrared region decreases.

Accordingly, it can be seen that, when the radiative cooling device according to an embodiment of the present invention contains nanometer-scale fine particles in a high content, the radiative cooling device has excellent cooling efficiency.

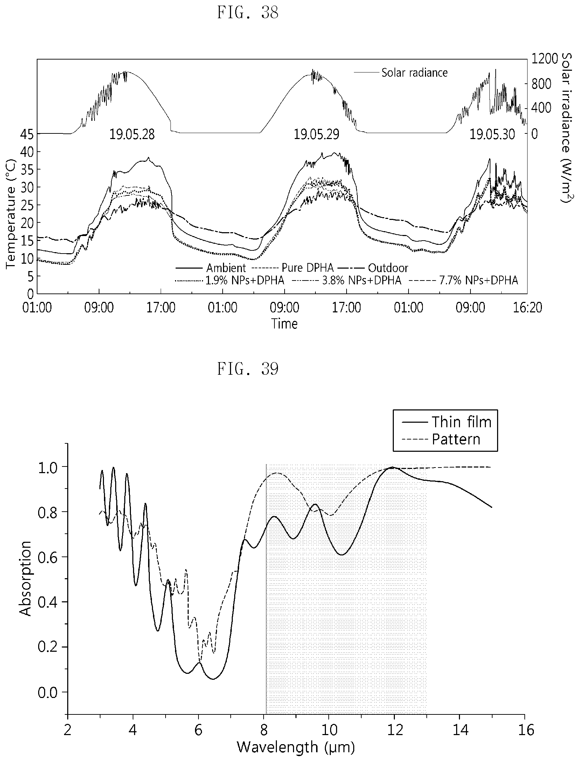

FIG. 38 is a graph showing the temperature of a radiative cooling device according to Example 5 of the present invention according to the content of fine particles according to solar radiation quantity.

Referring to FIG. 38, as a result of observing the temperature of Example 6-1 from May 28, 2019 to May 30, 2019, it can be confirmed that, as the content of alumina fine particles increases, mid-infrared emissivity increases and cooling efficiency is improved.

In particular, it can be confirmed that, when the content of alumina fine particles is 7.7 % by weight, the maximum degree of temperature change of Example 6-1 is - 11.9 °C.

Accordingly, by including fine particles capable of emitting mid-infrared light, the mid-infrared emissivity of the radiative cooling device according to an embodiment of the present invention may be increased, thereby increasing radiative cooling efficiency.

### 3. Evaluation of efficiency of radiative cooling device according to presence or absence of uneven pattern

FIG. 39 is a graph showing absorptivity according to the presence or absence of an uneven pattern according to Example 7 and Comparative Example 4 of the present invention.

The first radiation layers of Example 7 and Comparative Example 4 are formed of oxide semiconductors having the same volume.

Referring to FIG. 39, it can be confirmed that Example 7 (Pattern) has higher absorptivity than Comparative Example 4 (Thin film) in the red region corresponding to a mid-infrared region.

That is, it can be confirmed that, since the first radiation layer of Example 7 includes an uneven pattern, absorption of mid-infrared light is increased by resonance of an electric field and a magnetic field at a specific wavelength.

Accordingly, when the uneven pattern is formed at the micrometer scale, the radiative cooling device according to an embodiment of the present invention may selectively increase mid-infrared light absorptivity in a wavelength corresponding to a mid-infrared region, and thus radiation of mid-infrared light may be promoted, thereby achieving excellent cooling effect.

**4. Evaluation of efficiency of radiative cooling device according to presence or absence of coating layers having different refractive indexes**

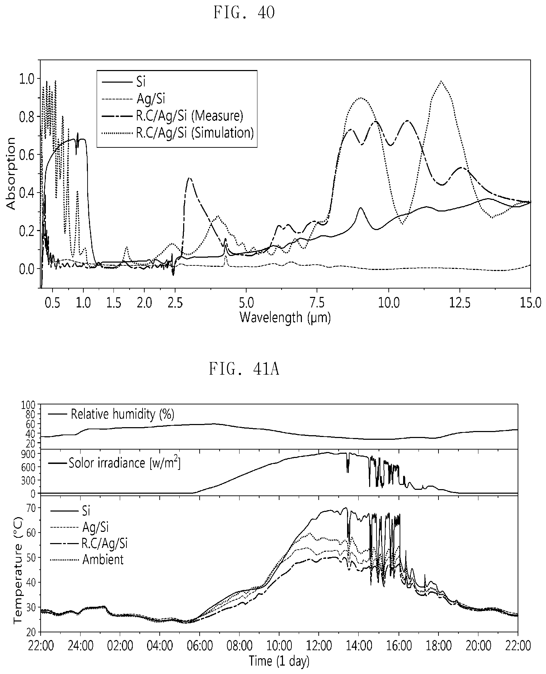

FIG. 40 is a graph showing the mid-infrared emissivity of radiative cooling devices according to Example 8, Comparative Example 5-1, and Comparative Example 5-2 of the present invention.

Referring to FIG. 40, it can be confirmed that, compared to Comparative Example 5-1 (Ag/Si) and Comparative Example 5-2 (Si), Example 8 (R.C. (radiative cooling)/Ag/Si) exhibits increased emissivity in a wavelength range of 8 $\mu$m to 13 $\mu$m corresponding to a mid-infrared region.

FIGS. 41A to 41C are graphs showing the temperature and the temperature change of radiative cooling devices according to Example 8, Comparative Example 5-1, and Comparative Example 5-2 of the present invention over time.

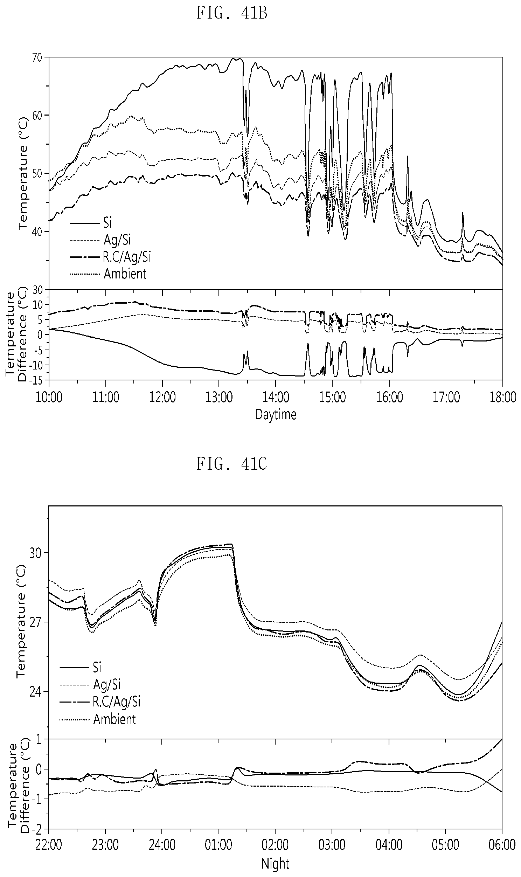

FIG. 41A shows the result of observing the temperature and the degree of temperature change of the radiative cooling devices of Example 8, Comparative Example 5-1, and Comparative Example 5-2 during the day, FIG. 41B shows the result of observing the temperature and the degree of temperature change of the radiative cooling devices of Example 8, Comparative Example 5-1, and Comparative Example 5-2 during the daytime (10:00 to 18:00), and FIG. 41C shows the result of observing the temperature and the degree of temperature change of the radiative cooling devices of Example 8, Comparative Example 5-1, and Comparative Example 5-2 during the night (22:00 to 06:00).

Referring to FIG. 41A, it can be confirmed that, compared to Comparative Example 5-1 (Ag/Si) and Comparative Example 5-2 (Si), Example 8 (R.C/Ag/Si) exhibits low temperature. In addition, considering that Example 8 exhibits lower temperature than external temperature (Ambient), Example 8 has excellent cooling efficiency.

Referring to FIGS. 221B and 22C, it can be confirmed that, compared to Comparative Example 5-1 (Ag/Si) and Comparative Example 5-2 (Si), Example 8 (R.C/Ag/Si) exhibits low temperature in both daytime and nighttime.

In particular, it can be confirmed that, considering that the degree of temperature change of Example 8 (R.C./Ag/Si) is higher than that of Comparative Example 5-1 (Ag/Si) and Comparative Example 5-2 (Si), Example 8 has excellent cooling efficiency.

Accordingly, by including coating layers including materials having different refractive indexes, the radiative cooling device according to another embodiment of the present invention may have excellent cooling efficiency.

A white radiative cooling device according to an embodiment of the present invention absorbs mid-infrared light and emits the mid-infrared light as heat while reflecting or scattering visible light. The white radiative cooling device is formed on the surface of an object. The white radiative cooling device serves to lower the temperature of the object located under the white radiative cooling device below external temperature.

For example, when the white radiative cooling device according to an embodiment of the present invention is provided on the surface of an automobile, the white radiative cooling device emits mid-infrared light while reflecting or scattering visible light so that the temperature of the white radiative cooling device decreases. Accordingly, the temperature of the automobile frame becomes lower than external temperature, or the temperature inside the automobile becomes lower than external temperature.

In this case, the object is an object equipped with the white radiative cooling device, and may be an automobile or a building such as an apartment, a shopping mall, or an office building, and any objects that may be equipped with the white radiative cooling device according to an embodiment of the present invention may be used without particular limitation.

In this case, external temperature means atmospheric temperature, and may be the external temperature of the white radiative cooling device according to an embodiment of the present invention.

The white radiative cooling device according to an embodiment of the present invention may include fine particles or polymers having different refractive indexes to reflect and scatter visible light. Accordingly, the white radiative cooling device may appear white.

Hereinafter, the configuration of the white radiative cooling device according to an embodiment of the present invention will be described with reference to drawings.

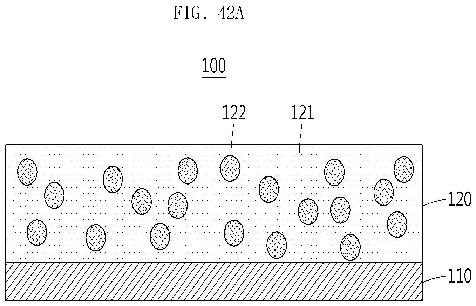

FIGS. 42A to 42C each show a cross-sectional view of a white radiative cooling device according to an embodiment of the present invention.

Referring to FIG. 42A, the white radiative cooling device 100 according to the first embodiment of the present invention includes the substrate 110; and a white radiative cooling layer 120 formed on the substrate 110 and including a polymer matrix 121 that absorbs sunlight having a wavelength corresponding to a mid-infrared region and emits the sunlight as heat and fine particles 122 that reflect and scatter sunlight having a wavelength corresponding to a visible region, wherein the fine particles 122 are embedded in the polymer matrix 121.

The substrate 110 may be formed of any one of a flexible polymer film, glass, quartz, silicon wafer, and a metal material, without being limited thereto.

For example, the substrate 110 may be a polymer film formed of any one of polyester-based resins such as polyethylene naphthalate (PEN), acetate-based resins, polyethersulfone-based resins, polycarbonate-based resins, polyamide-based resins, polyimide-based resins, polyolefin-based resins, (meth)acrylic resins, polyvinyl chloride-based resins, polyvinylidene chloride-based resins, polystyrene-based resins, polyvinyl alcohol-based resins, polyarylate-based resins, and polyphenylene sulfide-based resins, without being limited thereto.

The white radiative cooling layer 120 may be formed on the substrate 110. In the white radiative cooling layer 120, the fine particles 122 that reflect and scatter visible light may be embedded in the polymer matrix 121 that absorbs mid-infrared light or long-wavelength infrared light and emits the light as heat. Thus, the temperature of an object may be lower than external temperature by the white radiative cooling device 100 according to the first embodiment of the present invention.

In general, since objects on the earth have a surface temperature of several tens of degrees C, these objects emit mid-infrared light with a wavelength of 8 $\mu$m to 13 $\mu$m.

Such mid-infrared radiation may lower the temperature of an object, and the white radiative cooling layer 120 includes the polymer matrix 121 made of a material capable of effectively emitting mid-infrared light of the atmospheric window corresponding to a wavelength range of 8 $\mu$m to 13 $\mu$m, thereby reducing the temperature of the white radiative cooling device 100 according to the first embodiment of the present invention. As a result, the temperature of the object may be kept lower than external temperature.

The polymer matrix 121 may absorb sunlight having a wavelength corresponding to a mid-infrared region and emit the sunlight as heat.

According to an embodiment, the polymer matrix 121 may include an acrylic polymer.

The acrylic polymer has C-O stretching vibration, and thus has high emissivity in a wavelength corresponding to a mid-infrared region.

For example, the polymer matrix 121 may include at least one of polydimethylsiloxane (PDMS), polymethyl methacrylate (PMMA), and dipentaerythritol penta/hexa acrylate (DPHA), without being limited thereto.

In particular, DPHA has high emissivity in a wavelength corresponding to a mid-infrared region due to C-O stretching vibration and C=C bending vibration.

According to an embodiment, the polymer matrix 121 may be formed of polyvinylidene fluoride (PVDF) or polyurethane acrylate (PUA).

In the white radiative cooling layer 120, the fine particles 122 including a metal oxide or a polymer may be embedded in the polymer matrix 121.

The fine particles 122 including the metal oxide may reflect and scatter sunlight having a wavelength corresponding to a visible region. Due to reflection and scattering of visible light by the fine particles 122, the white radiative cooling device 100 according to the first embodiment of the present invention may appear white.

Specifically, the fine particles 122 including a metal oxide that does not absorb visible light may reflect visible light in various directions (diffusive reflection). Thus, the white radiative cooling device 100 according to the first embodiment of the present invention may appear white without having a mirror-like appearance like a conventional radiative cooling device.

In addition, when the fine particles 122 include a polymer, the polymer matrix 121 and the fine particles 122 including the polymer may have different refractive indexes. Due to different refractive indexes, the white radiative cooling device 100 according to the first embodiment of the present invention may promote scattering and reflection of visible light.

According to an embodiment, the polymer matrix 121 and the fine particles 122 may be formed of materials having a refractive index of 1.4 to 1.7. As difference in refractive indexes increases, scattering or reflection of visible light may be promoted.

According to an embodiment, the polymer may include at least one of polyvinylidene fluoride (PVDF) and polyurethane acrylate (PUA).

For example, in the white radiative cooling layer 120, the fine particles 122 including PUA (refractive index of about 1.55) may be embedded in the polymer matrix 121 made of PVDF (refractive index of about 1.426).

As another example, in the white radiative cooling layer 120, the fine particles 122 including PVDF may be embedded in the polymer matrix 121 made of PUA.

When the polymer matrix 121 and the fine particles 122 including a polymer have different refractive indexes, when visible light is incident on the interface between the fine particles 122 and the polymer matrix 121, visible light may be scattered and reflected, thereby improving cooling performance without energy consumption.

According to an embodiment, based on the total weight of the polymer matrix 121, 1 % by weight to 50 % by weight of the fine particles 122 may be embedded in the polymer matrix 121.

According to an embodiment, the metal oxide may include at least one of titanium dioxide ($TiO_2$), zirconium oxide ($ZrO_2$), alumina ($Al_2O_3$), zinc oxide (ZnO), silicon oxide ($SiO_2$), and silicon nitride ($Si_3N_4$), without being limited thereto.

As the diameter of the fine particles 122 decreases, reflectance and scattering rate with respect to visible light may be increased.

According to an embodiment, the fine particles 122 may have a diameter of 10 nm to 20 $\mu$m.

When the fine particles 122 have a nanometer-scale diameter, all incident sunlight may be reflected or scattered.

When the diameter of the fine particles 122 exceeds 3 $\mu$m, absorption of light corresponding to a long-wavelength region is increased, so that heat emission may be improved.

Preferably, the fine particles 122 having a nanometer-scale diameter may have higher visible light reflectance (or scattering rate) than the fine particles 122 having a micrometer-scale diameter.

By including the white radiative cooling layer 120 including the polymer matrix 121 that emits mid-infrared light or long-wavelength infrared light and the fine particles 122 that reflect and scatter visible light, the white radiative cooling device 100 according to the first embodiment of the present invention may have excellent cooling performance.

In addition, the white radiative cooling device 100 according to the first embodiment of the present invention may appear white due to the fine particles 122 that reflect and scatter visible light, thereby improving aesthetics.

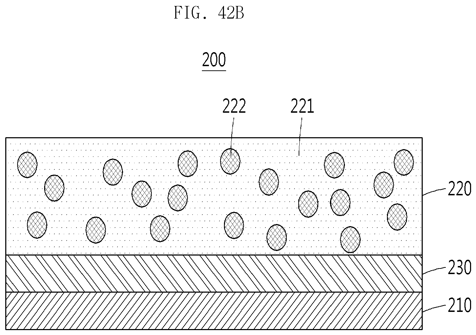

Referring to FIG. 42B, a white radiative cooling device 200 according to the second embodiment of the present invention may further include, on the lower surface of a white radiative cooling layer 220, a reflection enhancement layer 230 for additionally reflecting sunlight having a wavelength corresponding to a visible region.

Accordingly, the white radiative cooling device 200 according to the second embodiment of the present invention may include a substrate 210, the reflection enhancement layer 230, and the white radiative cooling layer 220 including fine particles 222 embedded in a polymer matrix 221.

In this case, the white radiative cooling device 200 according to the second embodiment of the present invention includes the components of the white radiative cooling device 200 according to the first embodiment, and thus repeated description thereof will be omitted.

The reflection enhancement layer 230 may additionally reflect ultraviolet light, visible light, and near-infrared light of sunlight to prevent the temperature of the white radiative cooling device 200 according to the second embodiment of the present invention from being increased by sunlight.

The reflection enhancement layer 230 may be formed of a material capable of effectively reflecting sunlight, and in particular, is preferably formed of a material having a reflectance of 90 % or more with respect to visible light.

The reflection enhancement layer 230 may be a layer formed by depositing a metal material on the substrate 210.

According to an embodiment, the reflection enhancement layer 230 may be formed by depositing a metal material on the substrate 210 using any one method of sputtering, atomic layer deposition (ALD), chemical vapor deposition (CVD), thermal evaporation, co-evaporation, plasma enhanced chemical vapor deposition (PECVD), e-beam evaporation, radio frequency (RF) sputtering, magnetron sputtering, vacuum deposition, and chemical vapor deposition.

According to an embodiment, the reflection enhancement layer 230 may be formed of at least one metal material of silver (Ag), aluminum (Al), and platinum (Pt), without being limited thereto.

According to an embodiment, the reflection enhancement layer 230 may be formed of a commercially available solar reflective film such as a Solar mirror film manufactured by 3M.

According to an embodiment, in the white radiative cooling device 200 according to the second embodiment of the present invention, the reflection enhancement layer 230 and the white radiative cooling layer 220 may be repeatedly formed.

Specifically, in the white radiative cooling device 200 according to the second embodiment of the present invention, the reflection enhancement layer 230 and the white radiative cooling layer 220 may be repeatedly laminated on the substrate 210 in the order of the reflection enhancement layer 230-the white radiative cooling layer 220-the reflection enhancement layer 230-the white radiative cooling layer 220-....

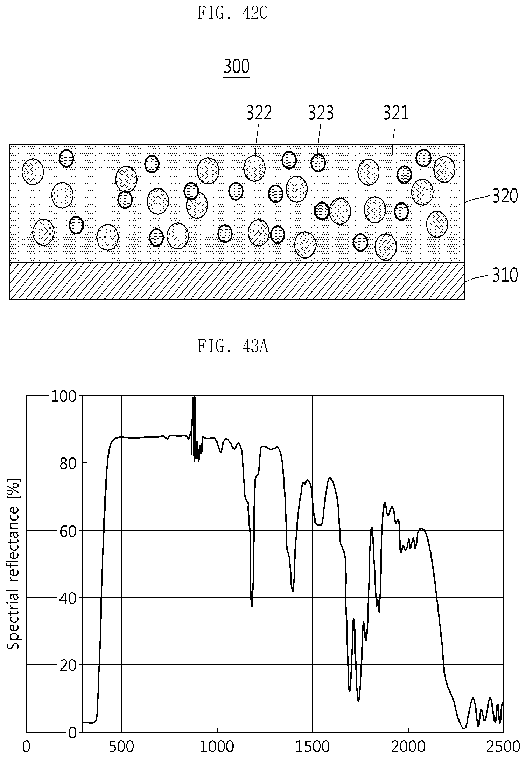

Referring to FIG. 42C, in a white radiative cooling device 300 according to the third embodiment of the present invention, fluorescent particles 323 for emitting fluorescence may be further embedded in a white radiative cooling layer 320.

Accordingly, the white radiative cooling device 300 according to the third embodiment of the present invention may include a substrate 310; and the white radiative cooling layer 320 formed on the substrate 310 and including a polymer matrix 321 that absorbs mid-infrared light and emits the light as heat, fine particles 322 that reflect and scatter sunlight having a wavelength corresponding to a visible region, and the fluorescent particles 323 for emitting fluorescence, wherein the fine particles 322 and the fluorescent particles 323 are embedded in the polymer matrix 321.

The white radiative cooling device 300 according to the third embodiment of the present invention includes all components of the white radiative cooling device 300 according to the first embodiment or the second embodiment, and thus repeated description thereof will be omitted.

The fluorescent particles 323 included in the white radiative cooling layer 320 serve to absorb sunlight and emit visible light. According to an embodiment, at least one color of visible light may be emitted.

Accordingly, due to color mixing by the fluorescent particles 323 having at least one color, the white radiative cooling device 300 according to the third embodiment of the present invention may appear a variety of colors in addition to white.

According to an embodiment, the fluorescent particles 323 may be made of manganese (Mn) emitting red fluorescence and antimony (Sb) emitting blue fluorescence.

According to an embodiment, the fluorescent particles 323 may be made of a lutetium aluminum garnet (LuAG), a yttrium aluminum garnet (YAG), a nitride, a sulfide, a silicate, or a mixture thereof.

According to an embodiment, in the white radiative cooling device 300 according to the third embodiment of the present invention, the fine particles 322 and a coloring agent 323 may be contained in the polymer matrix 321.

The coloring agent 323 may include metamaterials or dyes, without being limited thereto.

Accordingly, by further including the fluorescent particles 323, the white radiative cooling device 300 according to the third embodiment of the present invention may appear various colors without having a mirror-like appearance, thereby improving aesthetics.

Hereinafter, the white radiative cooling devices were manufactured according to Examples below, and the properties of the white radiative cooling devices were evaluated. Based on the evaluation results, the properties and effects of the white radiative cooling device of the present invention were demonstrated.

**[Example 1-1]**

Based on a total weight of PDMS as a polymer, 30 % by weight of zinc oxide (ZnO) particles having a diameter of 20 nm as fine particles was mixed with PDMS to prepare a mixed solution.

Then, a glass substrate was coated with silver (Ag) using an e-beam evaporator to form a reflection enhancement layer.

Then, the reflection enhancement layer was spin-coated with the mixed solution to manufacture a white radiative cooling device.

**[Example 1-2]**

A white radiative cooling device was manufactured in the same manner as in Example 1-1, except that 50 % by weight of zinc oxide particles was mixed.

**[Example 2-1]**

Based on a total weight of PDMS as a polymer, 1.9 % by weight of alumina (Al$_2$O$_3$) particles having a diameter of 20 nm as fine particles was mixed with PDMS to prepare a mixed solution.

Then, a glass substrate was coated with silver (Ag) using an e-beam evaporator to form a reflection enhancement layer.

Then, the reflection enhancement layer was spin-coated with the mixed solution to manufacture a white radiative cooling device.

**[Example 2-2]**

A white radiative cooling device was manufactured in the same manner as in Example 1-1, except that 3.8 % by weight of alumina particles was mixed based on a total weight of DPHA to prepare a mixed solution.

**[Example 2-3]**

A white radiative cooling device was manufactured in the same manner as in Example 1-1, except that 7.7 % by weight of alumina particles was mixed based on a total weight of DPHA to prepare a mixed solution.

**[Comparative Example 1]**

A glass substrate was coated with silver (Ag) using an e-beam evaporator to form a reflective layer made of silver (Ag), and then the reflective layer was spin-coated with DPHA to manufacture a radiative cooling device.

**[Example 3]**

Based on a total weight of PUA as a polymer, 33 % by weight of PVDF particles having a diameter of 20 nm as fine particles was mixed to prepare a mixed solution.

A glass substrate was spin-coated with the mixed solution to manufacture a white radiative cooling device.

**[Comparative Example 2-1]**

A glass substrate was spin-coated with PUA to manufacture a radiative cooling device.

**[Comparative Example 2-2]**

Silver substrate.

**Characteristics evaluation**

**1. White radiative cooling device including metal oxide fine particles**

FIGS. 43A and 43B are graphs showing the absorptivity of a white radiative cooling device according to an embodiment of the present invention according to the content of fine particles.

Referring to FIGS. 43A and 43B, it can be confirmed that Example 1-1 (Sample 1) and Example 1-2 have high reflectance with respect to visible light.

In addition, as a result of measuring the reflectance of Example 1-1 and Example 1-2, it can be confirmed that Example 1-2 with a higher content of zinc oxide particles has higher reflectance with respect to visible light than Example 1-1.

That is, as the content of fine particles increases, the transmittance of the white radiative cooling device according to an embodiment of the present invention with respect to visible light decreases, that is the reflectance of the white radiative cooling device increases.

FIG. 44 is a graph showing the temperature of a white radiative cooling device including fine particles according to an embodiment of the present invention over time.

Referring to FIG. 44, in sunny weather on May 28, 2019, Example 2-3 exhibits - 11.9 °C, Example 2-2 exhibits -11.3 °C, Example 2-1 exhibits -9.2 °C, and Comparative Example 1 exhibits -8.8 °C.

In addition, in sunny weather on May 29, 2019, Example 2-3 exhibits -11.6 °C, Example 2-2 exhibits -11.1 °C, Example 2-1 exhibits -9.21 °C, and Comparative Example 1 exhibits -8.7 °C.

In addition, in cloudy weather on May 30, 2019, Example 2-3 exhibits -7.2 °C, Example 2-2 exhibits -6.6 °C, Example 2-1 exhibits -5.9 °C, and Comparative Example 1 exhibits -5.4 °C.

That is, the degree of temperature change decreases in the order of Example 2-3, Example 2-2, Example 2-1, and Comparative Example 1. Accordingly, as the content of fine particles increases, mid-infrared emissivity and the reflectance/scattering rate of visible light are increased, thereby improving the cooling efficiency of a white radiative cooling device.

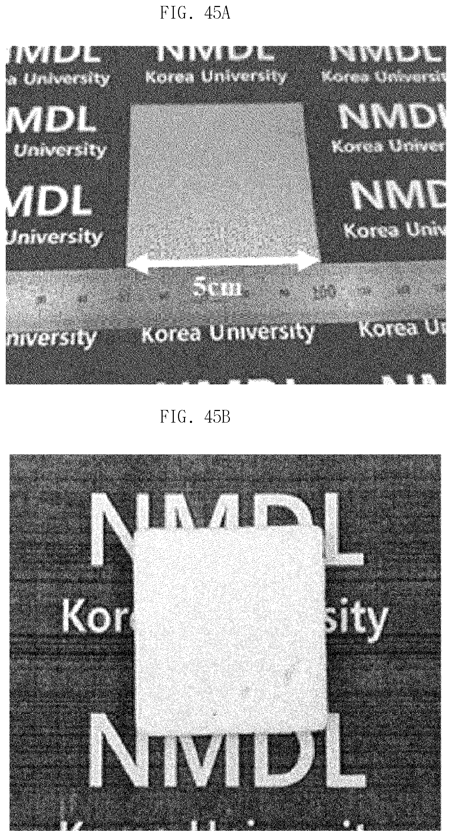

FIG. 45A is an image showing the appearance of a conventional radiative cooling device, and FIG. 45B is an image showing the appearance of a white radiative cooling device according to an embodiment of the present invention.

Referring to FIG. 45A, it can be confirmed that the conventional radiative cooling device in which a polymer layer is formed on a reflective layer has a metallic mirror-like color.

However, referring to FIG. 45B, it can be confirmed that the white radiative cooling device of Example 3 appears white.

Accordingly, it can be confirmed that, in the case of the white radiative cooling device of Example 2, since PUA particles reflect and scatter visible light, the white radiative cooling device appears white.

FIG. 46 is a graph showing the absorptivity of the white radiative cooling device according to the types of polymers included in the white radiative cooling layer according to an embodiment of the present invention.

Referring to FIG. 46, it can be confirmed that Example 3 (PUA+PVDF) exhibits high reflectance with respect to visible light and exhibits high emissivity in a mid-infrared region.

In addition, as a result of observing the absorptivity of Example 3 (PUA+PVDF) and Comparative Example 2-1 (PUA) with respect to visible light, near-infrared light, and mid-infrared light, it can be seen that a cooling power efficiency of 35.42 W/m$^2$ is observed at an ambient temperature of 40 °C.

In the yellow region corresponding to a visible region, the absorptivity of Example 3 is lower than that of Comparative Example 2-1. This result indicates that the visible light reflectance of Example 3 is higher than that of Comparative Example 2-1.

In addition, in the blue region corresponding to near-infrared and mid-infrared regions, Example 3 and Comparative Example 2-1 show almost similar emissivity. This results indicates that mid-infrared emissivity is not affected by the presence or absence of PUA particles.

In addition, in the white radiative cooling device including polymer fine particles according to an embodiment of the present invention, when the white radiative cooling device has the maximum emissivity in a mid-infrared region, even when the content of fine particles is further increased, the emissivity of the white radiative cooling device hardly changes.

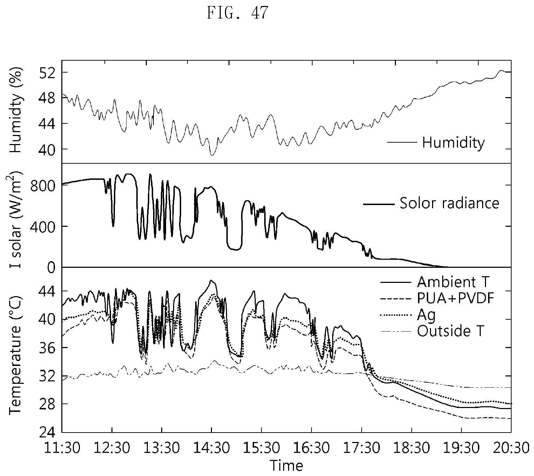

FIG. 47 is a graph showing the temperature of a white radiative cooling device including polymer fine particles according to an embodiment of the present invention over time.

In this case, Ambient T shown in FIG. 47 is temperature inside of a chamber equipped with the radiative cooling device of Example 3 or Comparative Example 2-2, and is used to compare the degree of cooling of Example 3 and Comparative Example 2-2.

In addition, Outside T is temperature outside of the chamber and is lower than Ambient T due to convection.

Referring to FIG. 47, as a result of comparing changes in the temperature of Example 3 (PUA+PVDF) and atmospheric temperature (Ambient T), it can be confirmed that Example 3 is cooled by about 5.7 °C more than the atmospheric temperature.

In addition, when comparing the temperatures of Example 3 and Comparative Example 2-2, Example 3 is cooled by about 1.6 °C more than Comparative Example 2-2.

Accordingly, by including fine particles that reflect and scatter visible light and a polymer matrix that emits mid-infrared light, the white radiative cooling device according to an embodiment of the present invention may have excellent cooling performance compared to a conventional radiative cooling device.

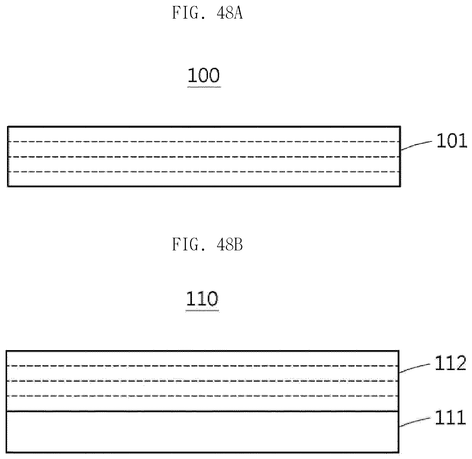

FIGS. 48A and 48B are drawings for explaining radiative cooling devices having a multilayer structure according to one embodiment of the present disclosure.

FIG. 48A illustrates a radiative cooling device having a multilayer structure without a solar reflective layer according to one embodiment of the present disclosure. Hereinafter, for convenience of description, a radiative cooling device 100 having a multilayer structure will be denoted as a radiative cooling device 100. Referring to FIG. 48A, the radiative cooling device 100 includes a radiative cooling layer 101.

The radiative cooling layer 101 according to one embodiment of the present disclosure has a multilayer structure including at least one pair of at least one of an inorganic layer, a polymer layer, a composite inorganic layer, a composite polymer layer, and an inorganic material-polymer composite layer. Accordingly, based on the multilayer structure, the radiative cooling layer 101 may absorb and emit infrared light in a wavelength range corresponding to the atmospheric window while reflecting sunlight.

For example, the radiative cooling layer 101 is composed of a plurality of layers of a plurality of materials, and thus may exhibit high infrared light emissivity in a wavelength range corresponding to the atmospheric window while reflecting sunlight.

The radiative cooling layer 101 according to one embodiment of the present disclosure may reflect sunlight based on differences in the refractive indexes of materials forming the multilayer structure, and thus, may absorb and emit long-wavelength infrared light in a wavelength range corresponding to the atmospheric window while serving as a solar reflective layer.

For example, the multilayer structure including at least one pair of an inorganic layer, a polymer layer, a composite inorganic layer, a composite polymer layer, and an inorganic material-polymer composite layer of the radiative cooling layer 101 will be further explained with reference to FIGS. 2A to 5F.

According to an embodiment of the present disclosure, the multilayer structure of the radiative cooling layer 101 may include at least one of a first structure in which the inorganic layer is laminated on the polymer layer, a second structure in which the inorganic layer is laminated on the polymer layer and the polymer layer is laminated thereon, a third structure in which the polymer layer is laminated on the inorganic layer, and a fourth structure in which the polymer layer is laminated on the inorganic layer and the inorganic layer is laminated thereon.

For example, the multilayer structure of the radiative cooling layer 101 may include at least one of a first repeat structure in which the first structure is repeatedly laminated at least once, a second repeat structure in which the second structure is repeatedly laminated at least once, a third repeat structure in which the third structure is repeatedly laminated at least once, and a fourth repeat structure in which the fourth structure is repeatedly laminated at least once.

The multilayer structure of the radiative cooling layer 101 according to one embodiment of the present disclosure may include at least one of a fifth structure in which the inorganic layer is laminated on the polymer layer and a polymer layer based on a polymer different from a polymer forming the polymer layer is laminated thereon and a sixth structure in which the polymer layer is laminated on the inorganic layer and an inorganic layer based on an inorganic material different from an inorganic material forming the inorganic layer is laminated thereon.

For example, the multilayer structure of the radiative cooling layer 101 may include at least one of a fifth repeat structure in which the fifth structure is repeatedly laminated at least once and a sixth repeat structure in which the sixth structure is repeatedly laminated at least once.

According to an embodiment of the present disclosure, the multilayer structure of the radiative cooling layer 101 may include at least one of a seventh structure in which the inorganic layer is laminated on the inorganic material-polymer composite layer and the inorganic material-polymer composite layer is laminated thereon, an eighth structure in which the inorganic layer is laminated on the inorganic material-polymer composite layer and an inorganic material-polymer composite layer including inorganic particles different from inorganic particles included in the inorganic material-polymer composite layer is laminated thereon, a ninth structure in which the inorganic layer is laminated on the inorganic material-polymer composite layer and an inorganic material-polymer composite layer based on a polymer different from a polymer forming the inorganic material-polymer composite layer is laminated thereon, a tenth structure in which the polymer layer is laminated on the composite inorganic layer and the inorganic material-polymer composite layer is laminated thereon, an eleventh structure in which the composite inorganic layer is laminated on the polymer layer and the polymer layer is laminated thereon, and a twelfth structure in which the inorganic layer is laminated on the composite polymer layer and the composite polymer layer is laminated thereon.

For example, the multilayer structure of the radiative cooling layer 101 may include at least one of a seventh repeat structure in which the seventh structure is repeatedly laminated at least once, an eighth repeat structure in which the eighth structure is repeatedly laminated at least once, a ninth repeat structure in which the ninth structure is repeatedly laminated at least once, a tenth repeat structure in which the tenth structure is repeatedly laminated at least once, an eleventh repeat structure in which the eleventh structure is repeatedly laminated at least once, and a twelfth repeat structure in which the twelfth structure is repeatedly laminated at least once.

In the above description, the multilayer structure of the radiative cooling layer 101 is exemplified as having the first or twelfth structure and the first or twelfth repeat structure in which the first or twelfth structure is repeated laminated, but the multilayer structure may have various structures without being limited thereto.

For example, in the multilayer structure, functions of sunlight reflection and selective emission may be performed in consideration of the refractive index of a polymer or an inorganic material configured to increase sunlight reflection.

For example, the multilayer structure may be formed so that the refractive index of each layer of the multilayer structure is adjusted according to a material forming each layer. Thereby, a radiative cooling device having a high selective emission function and having low absorption and high reflectivity for sunlight may be manufactured.

For example, the selective emission function may be a function of absorbing and emitting long-wavelength infrared light in a wavelength range corresponding to the atmospheric window.

In addition, based on differences in the refractive indexes of a polymer or an inorganic material included in each layer of the multilayer structure, the multilayer structure may be changed to a structure that is advantageous for reflecting sunlight and emitting and absorbing infrared light in a wavelength range corresponding to the atmospheric window.

According to an embodiment of the present disclosure, the inorganic layer constituting the radiative cooling layer 101 may be formed of at least one inorganic material of Al2O3, SiO2, BaSO4, LiF, CaSO4, ZnO, TiO2, ZrO2, CaF2, MgF2, HfO2, CaCO3, AlN, MgPHO4, and Si3N4.

For example, the inorganic layer may be formed using spin coating, bar coating, dip-coating, spray coating, or vacuum evaporation.

For example, the polymer layer constituting the radiative cooling layer 101 may be formed of at least one polymer of polydimethyl siloxane (PDMS), polyurethane acrylate (PUA), polyvinylidene fluoride (PVDF), polyethylene terephthalate (PET), polyvinyl chloride (PVC), polyvinylidene fluoride (PVDF), dipentaerythritol hexaacrylate (DPHA), polymethyl methacrylate (PMMA), polybutyl methacrylate (PBMA), perfluoropolyether (PFPE), polycarbonate (PC), PTFE(Polytetrafluoroethylene), Spectralon, ETFE(Ethylene Tetra fluoro Ethylene), and polyethylene (PE).

For example, the polymer layer may be formed by mixing a polymer and a solvent and subjecting the mixture to spin coating, bar coating, dip-coating, or spray coating.

According to an embodiment of the present disclosure, the inorganic material-polymer composite layer constituting the radiative cooling layer 101 may be formed of a mixture including at least one polymer of polydimethyl siloxane (PDMS), polyurethane acrylate (PUA), polyvinylidene fluoride (PVDF), polyethylene terephthalate (PET), polyvinyl chloride (PVC), polyvinylidene fluoride (PVDF), dipentaerythritol hexaacrylate (DPHA), polymethyl methacrylate (PMMA), polybutyl methacrylate (PBMA), perfluoropolyether (PFPE), polycarbonate (PC), PTFE(Polytetrafluoroethylene), Spectralon, ETFE(Ethylene Tetra fluoro Ethylene), and polyethylene (PE) and at least one inorganic material of Al2O3, SiO2, BaSO4, LiF, CaSO4, ZnO, TiO2, ZrO2, CaF2, MgF2, HfO2, CaCO3, AlN, MgPHO4, and Si3N4.

For example, the composite inorganic layer of the radiative cooling layer 101 may be formed by mixing any one first inorganic material selected from Al2O3, SiO2, BaSO4, LiF, CaSO4, ZnO, TiO2, ZrO2, CaF2, MgF2, HfO2, CaCO3, AlN, MgPHO4, and Si3N4 and a second inorganic material selected from Al2O3, SiO2, BaSO4, LiF, CaSO4, ZnO, TiO2, ZrO2, CaF2, MgF2, HfO2, CaCO3, AlN, MgPHO4, and Si3N4. In this case, the second inorganic material is different from the first inorganic material.

According to an embodiment of the present disclosure, the composite polymer layer constituting the radiative cooling layer 101 may be formed by mixing a first polymer selected from polydimethyl siloxane (PDMS), polyurethane acrylate (PUA), polyvinylidene fluoride (PVDF), polyethylene terephthalate (PET), polyvinyl chloride (PVC), polyvinylidene fluoride (PVDF), dipentaerythritol hexaacrylate (DPHA), polymethyl methacrylate (PMMA), polybutyl methacrylate (PBMA), perfluoropolyether (PFPE), polycarbonate (PC), and polyethylene (PE) and a second polymer selected from polydimethyl siloxane (PDMS), polyurethane acrylate (PUA), polyvinylidene fluoride (PVDF), polyethylene terephthalate (PET), polyvinyl chloride (PVC), polyvinylidene fluoride (PVDF), dipentaerythritol hexaacrylate (DPHA), polymethyl methacrylate (PMMA), polybutyl methacrylate (PBMA), perfluoropolyether (PFPE), polycarbonate (PC), PTFE(Polytetrafluoroethylene), Spectralon, ETFE(Ethylene Tetra fluoro Ethylene), and polyethylene (PE). In this case, the second polymer is different from the first polymer.

The present disclosure may provide a radiative cooling device capable of realizing high reflectance by using only a multilayer structure without a solar reflective layer, wherein the multilayer structure serves as a solar reflective layer.

FIG. 48B illustrates a radiative cooling device having a multilayer structure including a solar reflective layer according to one embodiment of the present disclosure.

Referring to FIG. 48B, a radiative cooling device 110 having a multilayer structure according to one embodiment of the present disclosure includes a solar reflective layer 111 and a radiative cooling layer 112. Hereinafter, for convenience of description, the radiative cooling device 110 having a multilayer structure will be denoted as the radiative cooling device 110.

The solar reflective layer 111 according to one embodiment of the present disclosure may be formed of any one of a metal material, at least one inorganic particle, and a polymer including the inorganic particle, and may reflect sunlight.

For example, the solar reflective layer 111 may be formed of at least one metal material selected from silver (Ag), aluminum (Al), gold (Au), copper (Cu), titanium (Ti), chromium (Cr), manganese (Mn), iron (Fe), and platinum (Pt) or an alloy material prepared by combining two or more metal materials selected therefrom.

In addition, the solar reflective layer 111 is formed of at least one inorganic particle of $MgF_2$, $Al_2O_3$, $SiO_2$, MgO, ZnO, $CaCO_3$, AlN, $MgPHO_4$, and $TiO_2$ or a polymer including the inorganic particle, wherein the polymer includes at least one polymer of polydimethyl siloxane (PDMS), polyurethane acrylate (PUA), polyvinylidene fluoride (PVDF), polyethylene terephthalate (PET), polyvinyl chloride (PVC), polyvinylidene fluoride (PVDF), dipentaerythritol hexaacrylate (DPHA), polymethyl methacrylate (PMMA), polybutyl methacrylate (PBMA), perfluoropolyether (PFPE), polycarbonate (PC), PTFE(Polytetrafluoroethylene), Spectralon, ETFE(Ethylene Tetra fluoro Ethylene), and polyethylene (PE). Accordingly, the solar reflective layer 111 may reflect sunlight based on differences in the refractive indexes of the inorganic particle.

That is, the solar reflective layer 111 may be formed in any one of a white reflective film formed of inorganic particles that are advantageous for scattering and reflecting sunlight, a reflective film formed of at least one polymer particle, and a reflective film formed based on a mixture prepared by including at least one inorganic particle in a thin film polymer.

Accordingly, the present disclosure may improve the radiative cooling performance of a radiative cooling device by improving reflectance using a metal or an alloy material that has high reflectance for sunlight and constituting a solar reflective layer having excellent chemical stability.

According to an embodiment of the present disclosure, the radiative cooling layer 112 is formed on a solar reflective layer and is formed to have a multilayer structure including at least one pair of at least one of an inorganic layer, a polymer layer, a composite inorganic layer, a composite polymer layer, and an inorganic material-polymer composite layer. Accordingly, based on the multilayer structure, the radiative cooling layer 112 may absorb and emit infrared light in a wavelength range corresponding to the atmospheric window.

That is, the radiative cooling layer 112 is composed of a plurality of layers of a plurality of materials. Accordingly, the radiative cooling layer 112 may exhibit high infrared light emissivity in a wavelength range corresponding to the atmospheric window. For example, the radiative cooling layer 112 may be referred to as infrared light emission layers.

For example, the radiative cooling layer 112 having a multilayer structure in which an inorganic layer and a polymer layer form a pair will be further explained with reference to FIGS. 2A to 5F.

According to an embodiment of the present disclosure, the multilayer structure may include at least one of a first structure in which the inorganic layer is laminated on the polymer layer, a second structure in which the inorganic layer is laminated on the polymer layer and the polymer layer is laminated thereon, a third structure in which the polymer layer is laminated on the inorganic layer, and a fourth structure in which the polymer layer is laminated on the inorganic layer and the inorganic layer is laminated thereon.

For example, the multilayer structure of the radiative cooling layer 112 may include at least one of a first repeat structure in which the first structure is repeatedly laminated at least once, a second repeat structure in which the second structure is repeatedly laminated at least once, a third repeat structure in which the third structure is repeatedly laminated at least once, and a fourth repeat structure in which the fourth structure is repeatedly laminated at least once.

The multilayer structure of the radiative cooling layer 112 according to one embodiment of the present disclosure may include at least one of a fifth structure in which the inorganic layer is laminated on the polymer layer and a polymer layer based on a polymer different from a polymer forming the polymer layer is laminated thereon and a sixth structure in which the polymer layer is laminated on the inorganic layer and an inorganic layer based on an inorganic material different from an inorganic material forming the inorganic layer is laminated thereon.

For example, the multilayer structure of the radiative cooling layer 112 may include at least one of a fifth repeat structure in which the fifth structure is repeatedly laminated at least once and a sixth repeat structure in which the sixth structure is repeatedly laminated at least once.

According to an embodiment of the present disclosure, the multilayer structure of the radiative cooling layer 112 may include at least one of a seventh structure in which the inorganic layer is laminated on the inorganic material-polymer composite layer and the inorganic material-polymer composite layer is laminated thereon, an eighth structure in which the inorganic layer is laminated on the inorganic material-polymer composite layer and an inorganic material-polymer composite layer including inorganic particles different from inorganic particles included in the inorganic material-polymer composite layer is laminated thereon, a ninth structure in which the inorganic layer is laminated on the inorganic material-polymer composite layer and an inorganic material-polymer composite layer based on a polymer different from a polymer forming the inorganic material-polymer composite layer is laminated thereon, a tenth structure in which the polymer layer is laminated on the composite inorganic layer and the inorganic material-polymer composite layer is laminated thereon, an eleventh structure in which the composite inorganic layer is laminated on the polymer layer and the polymer layer is laminated thereon, and a twelfth structure in which the inorganic layer is laminated on the composite polymer layer and the composite polymer layer is laminated thereon.

For example, the multilayer structure of the radiative cooling layer 112 may include at least one of a seventh repeat structure in which the seventh structure is repeatedly laminated at least once, an eighth repeat structure in which the eighth structure is repeatedly laminated at least once, a ninth repeat structure in which the ninth structure is repeatedly laminated at least once, a tenth repeat structure in which the tenth structure is repeatedly laminated at least once, an eleventh repeat structure in which the eleventh structure is repeatedly laminated at least once, and a twelfth repeat structure in which the twelfth structure is repeatedly laminated at least once.

In the above description, the multilayer structure of the radiative cooling layer 112 is exemplified as having the first or twelfth structure and the first or twelfth repeat structure in which the first or twelfth structure is repeated laminated, but the multilayer structure may have various structures without being limited thereto.

For example, in the multilayer structure, functions of sunlight reflection and selective emission may be performed in consideration of the refractive index of a polymer or an inorganic material configured to increase sunlight reflection.

For example, the multilayer structure may be formed so that the refractive index of each layer of the multilayer structure is adjusted according to a material forming each layer. Thereby, a radiative cooling device having a high selective emission function and having low absorption and high reflectivity for sunlight may be manufactured.

For example, the selective emission function may be a function of absorbing and emitting long-wavelength infrared light in a wavelength range corresponding to the atmospheric window.

In addition, based on differences in the refractive indexes of a polymer or an inorganic material included in each layer of the multilayer structure, the multilayer structure may be changed to a structure that is advantageous for reflecting sunlight and emitting and absorbing infrared light in a wavelength range corresponding to the atmospheric window.

According to an embodiment of the present disclosure, the inorganic layer constituting the radiative cooling layer 112 may be formed of at least one inorganic material of $Al_2O_3$, $SiO_2$, $BaSO_4$, LiF, $CaSO_4$, ZnO, $TiO_2$, $ZrO_2$, $CaF_2$, $MgF_2$, $HfO_2$, $CaCO_3$, AlN, $MgPHO_4$, and $Si_3N_4$.

For example, the inorganic layer may be formed using spin coating, bar coating, dip-coating, spray coating, or vacuum evaporation.

For example, the polymer layer constituting the radiative cooling layer 112 may be formed of at least one polymer of polydimethyl siloxane (PDMS), polyurethane acrylate (PUA), polyvinylidene fluoride (PVDF), polyethylene terephthalate (PET), polyvinyl chloride (PVC), polyvinylidene fluoride (PVDF), dipentaerythritol hexaacrylate (DPHA), polymethyl methacrylate (PMMA), polybutyl methacrylate (PBMA), perfluoropolyether (PFPE), polycarbonate (PC), PTFE(Polytetrafluoroethylene), Spectralon, ETFE(Ethylene Tetra fluoro Ethylene), and polyethylene (PE).

For example, the polymer layer may be formed by mixing a polymer and a solvent and subjecting the mixture to spin coating, bar coating, dip-coating, or spray coating.

According to an embodiment of the present disclosure, the inorganic material-polymer composite layer constituting the radiative cooling layer 112 may be formed of a mixture including at least one polymer of polydimethyl siloxane (PDMS), polyurethane acrylate (PUA), polyvinylidene fluoride (PVDF), polyethylene terephthalate (PET), polyvinyl chloride (PVC), polyvinylidene fluoride (PVDF), dipentaerythritol hexaacrylate (DPHA), polymethyl methacrylate (PMMA), polybutyl methacrylate (PBMA), perfluoropolyether (PFPE), polycarbonate (PC), PTFE(Polytetrafluoroethylene), Spectralon, ETFE(Ethylene Tetra fluoro Ethylene), and polyethylene (PE) and at least one inorganic material of $Al_2O_3$, $SiO_2$, $BaSO_4$, LiF, $CaSO_4$, ZnO, $TiO_2$, $ZrO_2$, $CaF_2$, $MgF_2$, $HfO_2$, $CaCO_3$, AlN, $MgPHO_4$, and $Si_3N_4$.

For example, the composite inorganic layer of the radiative cooling layer 112 may be formed by mixing any one first inorganic material selected from $Al_2O_3$, $SiO_2$, $BaSO_4$, LiF, $CaSO_4$, ZnO, $TiO_2$, $ZrO_2$, $CaF_2$, $MgF_2$, $HfO_2$, $CaCO_3$, AlN, $MgPHO_4$, and $Si_3N_4$ and a second inorganic material selected from $Al_2O_3$, $SiO_2$, $BaSO_4$, LiF, $CaSO_4$, ZnO, $TiO_2$, $ZrO_2$, $CaF_2$, $MgF_2$, $HfO_2$, $CaCO_3$, AlN, $MgPHO_4$, and $Si_3N_4$. In this case, the second inorganic material is different from the first inorganic material.

According to an embodiment of the present disclosure, the composite polymer layer constituting the radiative cooling layer 112 may be formed by mixing a first polymer selected from polydimethyl siloxane (PDMS), polyurethane acrylate (PUA), polyvinylidene fluoride (PVDF), polyethylene terephthalate (PET), polyvinyl chloride (PVC), polyvinylidene fluoride (PVDF), dipentaerythritol hexaacrylate (DPHA), polymethyl methacrylate (PMMA), polybutyl methacrylate (PBMA), perfluoropolyether (PFPE), polycarbonate (PC), and polyethylene (PE) and a second polymer selected from polydimethyl siloxane (PDMS), polyurethane acrylate (PUA), polyvinylidene fluoride (PVDF), polyethylene terephthalate (PET), polyvinyl chloride (PVC), polyvinylidene fluoride (PVDF), dipentaerythritol hexaacrylate (DPHA), polymethyl methacrylate (PMMA), polybutyl methacrylate (PBMA), perfluoropolyether (PFPE), polycarbonate (PC), PTFE(Polytetrafluoroethylene), Spectralon, ETFE(Ethylene Tetra fluoro Ethylene), and polyethylene (PE). In this case, the second polymer is different from the first polymer.

Accordingly, the present disclosure may improve the radiative cooling performance of a radiative cooling device by providing a radiative cooling device having maximum emissivity in a wavelength range corresponding to the atmospheric window through a radiative cooling layer having a multilayer structure based on polymers and inorganic materials.

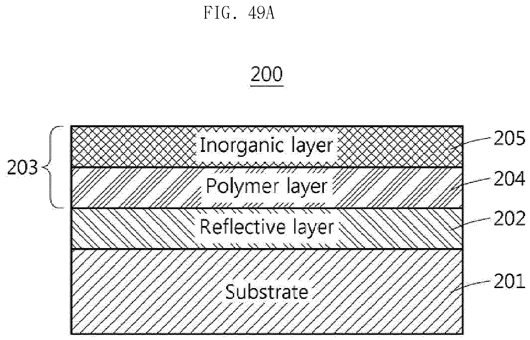

FIGS. 49A to 49D are drawings for explaining radiative cooling devices having a multilayer structure based on polymer layers and inorganic layers according to one embodiment of the present disclosure.

FIGS. 49A to 49D illustrate radiative cooling devices, in which a radiative cooling layer is composed of a multilayer structure including polymer layers and inorganic layers according to one embodiment of the present disclosure.

Referring to FIG. 49A, a radiative cooling device 200 includes a substrate 201, a solar reflective layer 202, and a radiative cooling layer 203.

The radiative cooling layer 203 according to one embodiment of the present disclosure has a multilayer structure in which a polymer layer 204 is laminated on the solar reflective layer 202 and an inorganic layer 205 is laminated on the polymer layer 204.

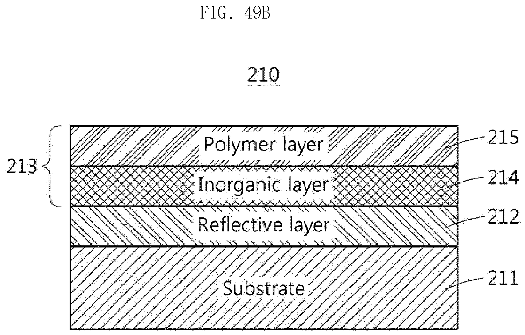

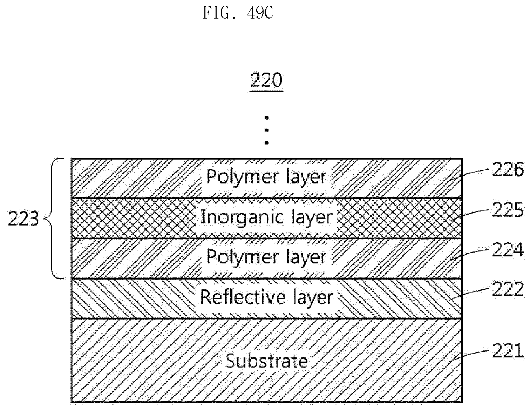

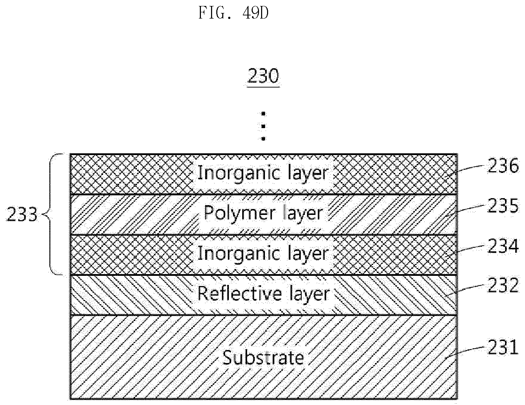

For example, the radiative cooling layer 203 may correspond to the first structure described in FIG. 49.

According to an embodiment of the present disclosure, the radiative cooling layer 203 may have a multilayer structure of a first repeat structure in which the first structure is repeatedly laminated at least once.

Referring to FIG. 49B, a radiative cooling device 210 includes a substrate 211, a solar reflective layer 212, and a radiative cooling layer 213.

The radiative cooling layer 213 according to one embodiment of the present disclosure has a multilayer structure in which an inorganic layer 214 is laminated on the solar reflective layer 212 and a polymer layer 215 is laminated on the inorganic layer 214.

For example, the radiative cooling layer 213 may correspond to the second structure described in FIG. 49.

According to an embodiment of the present disclosure, the radiative cooling layer 213 may have a multilayer structure of a second repeat structure in which the second structure is repeatedly laminated at least once.

Referring to FIG. 49C, a radiative cooling device 220 includes a substrate 221, a solar reflective layer 222, and a radiative cooling layer 223.

The radiative cooling layer 223 according to one embodiment of the present disclosure has a multilayer structure in which a polymer layer 224 is laminated on the solar reflective layer 222, an inorganic layer 225 is laminated on the polymer layer 224, and a polymer layer 226 is laminated on the inorganic layer 225.

In this case, the polymer layer 224 and the polymer layer 226 may be formed using the same polymer.

For example, the radiative cooling layer 223 may correspond to the third structure described in FIG. 49.

According to an embodiment of the present disclosure, the radiative cooling layer 223 may have a multilayer structure of a third repeat structure in which the third structure is repeatedly laminated at least once.

Referring to FIG. 49D, a radiative cooling device 230 includes a substrate 231, a solar reflective layer 232, and a radiative cooling layer 233.

The radiative cooling layer 233 according to one embodiment of the present disclosure has a multilayer structure in which an inorganic layer 234 is laminated on the solar reflective layer 232, a polymer layer 235 is laminated on the inorganic layer 234, and an inorganic layer 236 is laminated on the polymer layer 235.

In this case, the inorganic layer 234 and the inorganic layer 236 may be formed using the same inorganic material or inorganic particles.

For example, the radiative cooling layer 233 may correspond to the fourth structure described in FIG. 49.

According to an embodiment of the present disclosure, the radiative cooling layer 233 may have a multilayer structure of a fourth repeat structure in which the fourth structure is repeatedly laminated at least once.

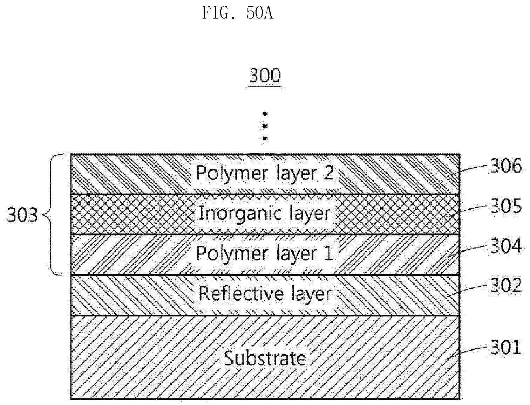

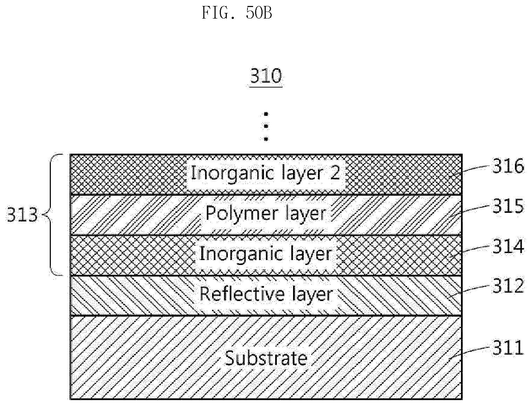

FIGS. 50A and 50B are drawings for explaining radiative cooling devices having a multilayer structure based on one or more polymer layers and one or more inorganic layers according to one embodiment of the present disclosure.

FIGS. 50A and 50B illustrate radiative cooling devices having a multilayer structure based on one or more polymer layers formed using one or more different types of polymers and one or more inorganic layers formed using one or more different types of inorganic materials or inorganic particles according to one embodiment of the present disclosure.

Referring to FIG. 50A, a radiative cooling device 300 includes a substrate 301, a solar reflective layer 302, and a radiative cooling layer 303.

The radiative cooling layer 303 according to one embodiment of the present disclosure has a multilayer structure in which a polymer layer 304 is laminated on the solar reflective layer 302, an inorganic layer 305 is laminated on the polymer layer 304, and a polymer layer 306 is laminated on the inorganic layer 305.

In this case, the polymer layer 304 and the polymer layer 306 may be formed using different polymers.

For example, the radiative cooling layer 303 may correspond to the fifth structure described in FIG. 49.

According to an embodiment of the present disclosure, the radiative cooling layer 303 may have a multilayer structure of a fifth repeat structure in which the fifth structure is repeatedly laminated at least once.

Referring to FIG. 50B, a radiative cooling device 310 includes a substrate 311, a solar reflective layer 312, and a radiative cooling layer 313.

The radiative cooling layer 313 according to one embodiment of the present disclosure has a multilayer structure in which an inorganic layer 314 is laminated on the solar reflective layer 312, a polymer layer 315 is laminated on the inorganic layer 314, and an inorganic layer 316 is laminated on the polymer layer 315.

In this case, the inorganic layer 314 and the inorganic layer 316 may be formed using different inorganic materials or inorganic particles.

For example, the radiative cooling layer 313 may correspond to the sixth structure described in FIG. 49.

According to an embodiment of the present disclosure, the radiative cooling layer 313 may have a multilayer structure of a sixth repeat structure in which the sixth structure is repeatedly laminated at least once.

FIGS. 50A and 50C are drawings for explaining radiative cooling devices having a multilayer structure based on a polymer layer, an inorganic layer, a composite polymer layer, a composite inorganic layer, and an inorganic material-polymer composite layer according to one embodiment of the present disclosure.

Referring to FIG. 50A, a radiative cooling device 400 includes a substrate 401, a solar reflective layer 402, and a radiative cooling layer 403.

The radiative cooling layer 403 according to one embodiment of the present disclosure has a multilayer structure in which an inorganic material-polymer composite layer 404 is laminated on the solar reflective layer 402, an inorganic layer 405 is laminated on the inorganic material-polymer composite layer 404, and an inorganic material-polymer composite layer 406 is laminated on the inorganic layer 405.

In this case, the inorganic material-polymer composite layer 404 and the inorganic material-polymer composite layer 406 may be formed based on different polymers.

For example, the radiative cooling layer 403 may correspond to the seventh structure described in FIG. 49.

According to an embodiment of the present disclosure, the radiative cooling layer 403 may have a multilayer structure of a seventh repeat structure in which the seventh structure is repeatedly laminated at least once.

For example, the inorganic material-polymer composite layer 404 and the inorganic material-polymer composite layer 406 may be formed using different inorganic particles. In this case, the radiative cooling layer 403 may correspond to the eighth structure described in FIG. 49.

In addition, the radiative cooling layer 403 may have a multilayer structure of an eighth repeat structure in which the eighth structure is repeatedly laminated at least once.

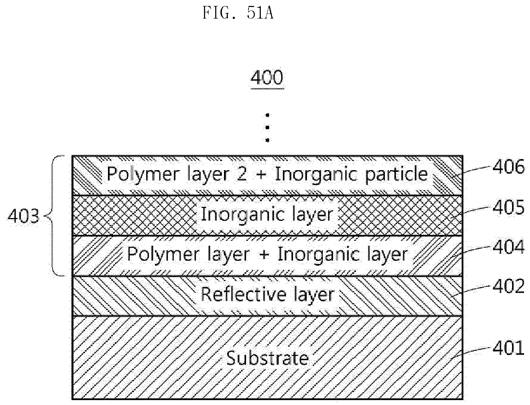

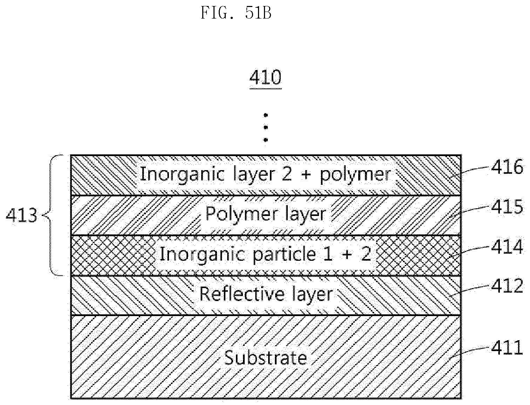

Referring to FIG. 51B a radiative cooling device 410 includes a substrate 411, a solar reflective layer 412, and a radiative cooling layer 413.

The radiative cooling layer 413 according to one embodiment of the present disclosure has a multilayer structure in which a composite inorganic layer 414 is laminated on the solar reflective layer 412, a polymer layer 415 is laminated on the composite inorganic layer 414, and an inorganic material-polymer composite layer 416 is laminated on the polymer layer 415.

In this case, the composite inorganic layer 414 may be formed using a first inorganic material and a second inorganic material that are different from each other, or using first inorganic particles and second inorganic particles.

In addition, the inorganic material-polymer composite layer 416 may be formed using a polymer forming the polymer layer 415 and the second inorganic material or the second inorganic particles forming the composite inorganic layer 414.

According to an embodiment of the present disclosure, the radiative cooling layer 413 may correspond to the tenth structure described in FIG. 49.

In addition, the radiative cooling layer 413 may have a multilayer structure of a tenth repeat structure in which the tenth structure is repeatedly laminated at least once.

According to an embodiment of the present disclosure, the radiative cooling layer 413 may have the ninth structure or the eleventh structure described in FIG. 49 depending on the composition of the composite inorganic layer, the inorganic material-polymer composite layer, the inorganic layer, and the polymer layer.

In addition, the radiative cooling layer 413 may have a multilayer structure of a ninth repeat structure in which the ninth structure is repeatedly laminated at least once, or may have a multilayer structure of an eleventh repeat structure in which the eleventh structure is repeatedly laminated at least once.

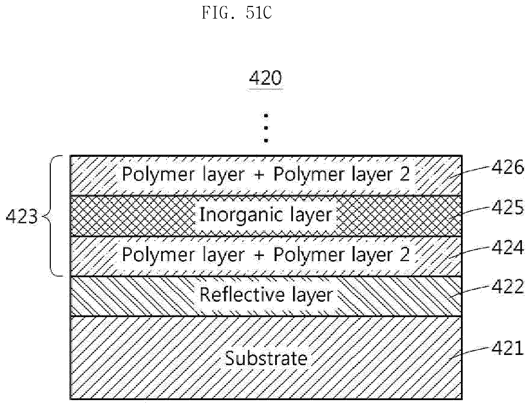

Referring to FIG. 51C, the radiative cooling device 210 includes a substrate 421, a solar reflective layer 422, and a radiative cooling layer 423.

The radiative cooling layer 423 according to one embodiment of the present disclosure has a multilayer structure in which a composite polymer layer 424 is laminated on the solar reflective layer 422, an inorganic layer 425 is laminated on the composite polymer layer 424, and a composite polymer layer 426 is laminated on the inorganic layer 425.

In this case, the composite polymer layer 424 may be formed using a first polymer and a second polymer that are different from each other.

According to an embodiment of the present disclosure, the radiative cooling layer 423 may correspond to the twelfth structure described in FIG. 49.

In addition, the radiative cooling layer 423 may have a multilayer structure of a twelfth repeat structure in which the twelfth structure is repeatedly laminated at least once.

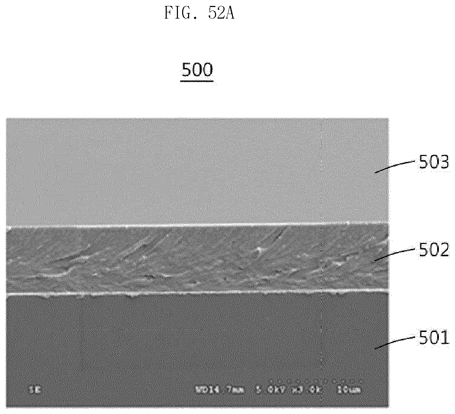

FIGS. 52A to 52F show electron microscope images of a radiative cooling device having a multilayer structure according to one embodiment of the present disclosure.

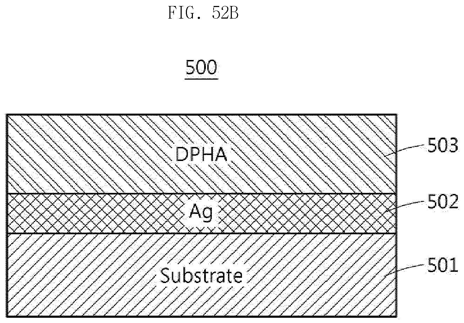

FIGS. 52A and 52B show an electron microscope image and a laminated structure for explaining a radiative cooling device including a single polymer layer.

Referring to FIGS. 52A and 52B, a radiative cooling device 500 includes a substrate 501, a solar reflective layer 502, and a polymer layer 503.

For example, the solar reflective layer 502 may be formed of silver (Ag), which is a metal material, and the polymer layer 503 may be formed of DPHA, which is a polymer.

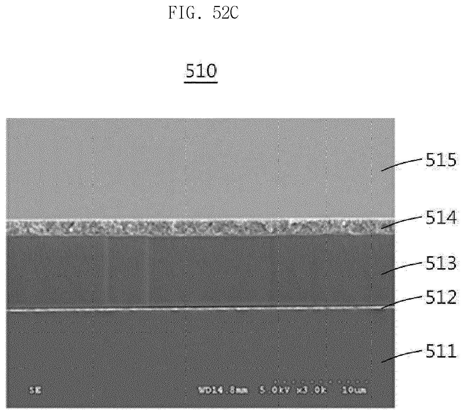

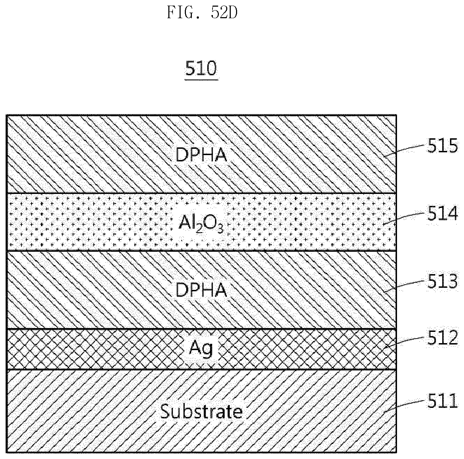

FIGS. 52C and 52D show an electron microscope image and a laminated structure for explaining a radiative cooling device including two polymer layers and one inorganic layer.

Referring to FIGS. 52C and 52D, a radiative cooling device 510 includes a substrate 511, a solar reflective layer 512, a polymer layer 513, an inorganic layer 514, and a polymer layer 515.

For example, the solar reflective layer 512 may be formed of silver (Ag), which is a metal material, the polymer layer 513 and the polymer layer 515 may be formed of DPHA, which is a polymer, and the inorganic layer 514 may be formed of $Al_2O_3$, which is an inorganic material or inorganic particles.

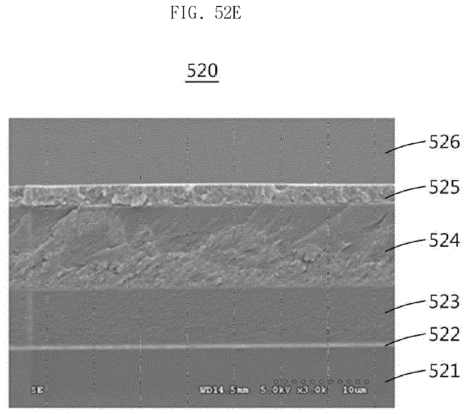

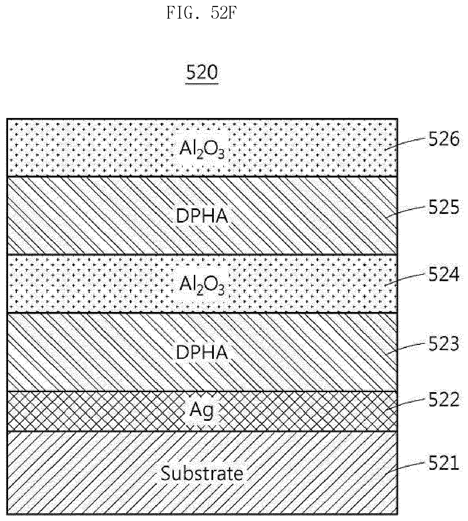

FIGS. 52E and 52F show an electron microscope image and a laminated structure for explaining a radiative cooling device including two polymer layers and two inorganic layers.

Referring to FIGS. 52E and 52F, a radiative cooling device 520 includes a substrate 521, a solar reflective layer 522, a polymer layer 523, an inorganic layer 524, a polymer layer 525, and an inorganic layer 526.

For example, the solar reflective layer 522 may be formed of silver (Ag), which is a metal material, the polymer layer 523 and the polymer layer 525 may be formed of DPHA, which is a polymer, and the inorganic layer 524 and the inorganic layer 526 may be formed of $Al_2O_3$, which is an inorganic material or inorganic particles.

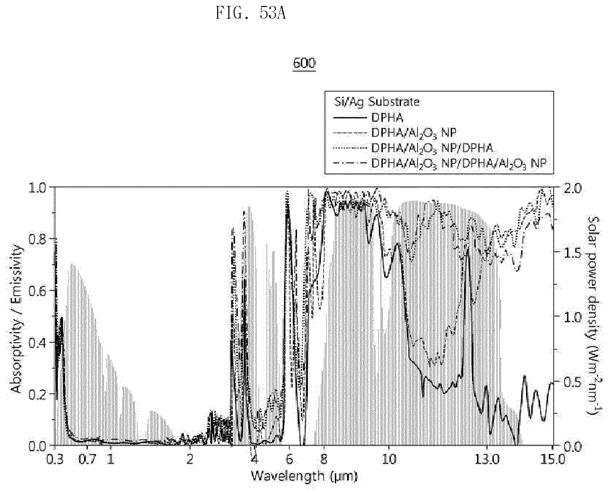

FIGS. 53A to 53C are graphs for explaining the optical properties of a radiative cooling device having a multilayer structure according to one embodiment of the present disclosure.

FIGS. 53A to 53C show the simulation results of a radiative cooling device having a multilayer structure according to one embodiment of the present disclosure in various examples.

Referring to FIG. 53A, a graph 600 shows, depending on change in a sunlight wavelength range, the absorptivity and emissivity of a first radiative cooling device including a DPHA-based polymer layer; a second radiative cooling device having the same configuration as the first radiative cooling device, except that an $Al_2O_3$ nanoparticle (NP)-based inorganic layer is additionally laminated; a third radiative cooling device having the same configuration as the second radiative cooling device, except that a DPHA-based polymer layer is additionally laminated; and a fourth radiative cooling device having the same configuration as the third radiative cooling device, except that an $Al_2O_3$ nanoparticle (NP)-based inorganic layer is additionally laminated.

The first radiative cooling device to the fourth radiative cooling device include a substrate composed of silicon and silver.

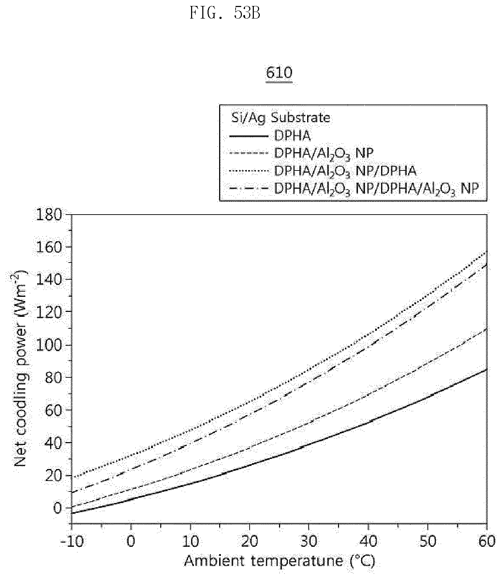

Referring to FIG. 53B, a graph 610 shows the net cooling power of the first radiative cooling device to the fourth radiative cooling device depending on ambient temperature change.

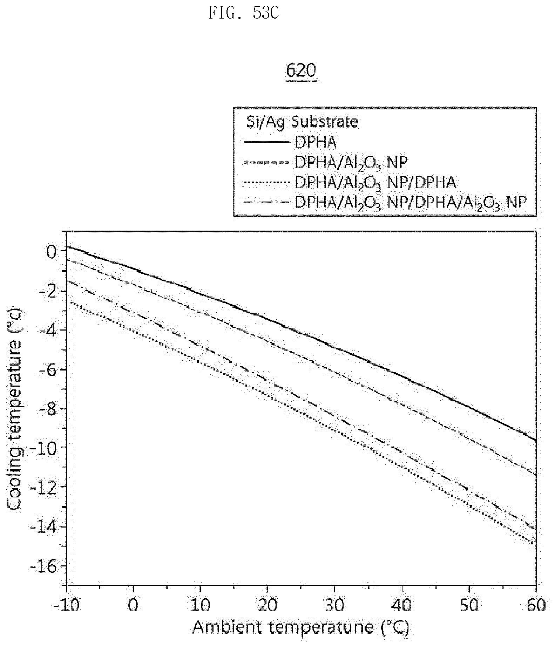

Referring to FIG. 53C, a graph 620 shows the cooling temperature of the first radiative cooling device to the fourth radiative cooling device depending on ambient temperature change.

The average absorptivity, average emissivity, total cooling power, and cooling temperature of the first radiative cooling device to the fourth radiative cooling device are summarized in Table 3 below.

[Table 3]

| Temperature (T) = 30 °C Heat transfer coefficient (h) = 6 Wm$^{-2}$K | First radiative cooling device | Second radiative cooling device | Third radiative cooling device | Fourth radiative cooling device |
|---|---|---|---|---|
| Average absorptivity (0.3 to 2.5 $\mu$m) | 0.040 | 0.044 | 0.053 | 0.057 |
| Average emissivity (8 to 13 $\mu$m) | 0.548 | 0.675 | 0.875 | 0.882 |
| Total cooling power (Wm$^{-2}$) | 40.1 | 54.4 | 87.2 | 79.0 |
| Cooling temperature (°C) | -4.89 | -6.16 | -9.22 | -8.32 |

Referring to Table 3, when a radiative cooling layer is designed to have a multilayer structure in which a polymer layer and an inorganic layer are additionally laminated, average emissivity may be increased, and the radiative cooling layer may be excellent in terms of cooling power and cooling temperature.

Accordingly, the present disclosure may improve the radiative cooling performance of a radiative cooling device by providing a radiative cooling device having maximum emissivity in a wavelength range corresponding to the atmospheric window through a radiative cooling layer having a multilayer structure based on polymers and inorganic materials.

In addition, the present disclosure may improve the radiative cooling performance of a radiative cooling device by improving reflectance using a metal or an alloy material that has high reflectance for sunlight and constituting a solar reflective layer having excellent chemical stability.

The present disclosure can improve the radiative cooling performance of a radiative cooling device by providing a radiative cooling device having maximum emissivity in a wavelength range corresponding to the atmospheric window through a radiative cooling layer having a multilayer structure based on polymers and inorganic materials.

The present disclosure can improve the radiative cooling performance of a radiative cooling device by improving reflectance using a metal or an alloy material that has high reflectance for sunlight and constituting a solar reflective layer having excellent chemical stability.

The present disclosure can improve the radiative cooling performance of a radiative cooling device by providing a radiative cooling device that has maximum emissivity in a wavelength range corresponding to the atmospheric window by including a multilayer structure consisting of various layers such as an inorganic layer, a polymer layer, a composite inorganic layer, and an inorganic material-polymer composite layer.

The present disclosure can provide a radiative cooling device capable of realizing high reflectance by using only a multilayer structure without a solar reflective layer, wherein the multilayer structure serves as a solar reflective layer.

The present disclosure can provide a radiative cooling device capable of cooling the surface temperature of materials used in automobiles and buildings to below the ambient temperature without consuming energy during day time when sunlight is incident or even during night time when sunlight is not incident.

**Claims**

1. A radiative cooling device (100, 200), comprising:

a sunlight reflective layer (120, 220) formed on a substrate and responsible for reflecting sunlight having wavelengths corresponding to ultraviolet, visible, and near-infrared regions; and

a heat emission layer (130, 230) formed on the sunlight reflective layer (120, 220) and responsible for absorbing sunlight having a wavelength corresponding to a mid-infrared region and emitting the sunlight as heat,

wherein the heat emission layer (130) comprises a first radiation layer (131) comprising an uneven pattern; and

a second radiation layer (132) formed on the first radiation layer (131) and having a refractive index different from that of the first radiation layer (131),

wherein the heat emission layer (230) comprises a mid-infrared light absorption layer (231) formed on the sunlight reflective layer (220) and responsible for absorbing sunlight having a wavelength corresponding to a mid-infrared region and emitting the sunlight as heat; and

a coating layer formed on the mid-infrared light absorption layer (231) and comprising a first coating layer (232) and a second coating layer (233) having different refractive indexes with respect to sunlight having a wavelength corresponding to a visible region.

**2.** The radiative cooling device (100) according to claim 1, wherein, in the heat emission layer (130), the first radiation layer (131) and the second radiation layer (132) are repeatedly formed.

**3.** The radiative cooling device (100, 200) according to claim 1 or 2, wherein the sunlight reflective layer (120, 220) comprises at least one of silver (Ag), aluminum (Al), nickel (Ni), chromium (Cr), lithium (Li), Aurum (Au), and platinum (Pt).

**4.** The radiative cooling device (100, 200) according to one of claims 1 to 3, wherein each of the first radiation layer (131) and the second radiation layer (132) comprises at least one of fine particles made of an oxide or a nitride and a polymer,

the fine particles have a diameter of 10 nm to 20 $\mu$m,
the fine particles comprise at least one of $Al_2O_3$, SiOz, $BaSO_4$, LiF, $CaSO_4$, ZnO, $TiO_2$, ZrOz, $CaF_2$, $MgF_2$, $HfO_2$, and $Si_3N_4$, Si, Ge, ZnS, and ZnSe and
the polymer is polydimethyl siloxane (PDMS), polyurethane acrylate (PUA), polyvinylidene fluoride (PVDF), polyethylene terephthalate (PET), polyvinyl chloride (PVC), polyvinylidene fluoride (PVDF), dipentaerythritol hexaacrylate (DPHA), polymethyl methacrylate (PMMA), polybutyl methacrylate (PBMA), perfluoropolyether (PFPE), polycarbonate (PC), polyethylene (PE), Polytetrafluoroethylene (PTFE), Spectralon or Ethylene Tetra fluoro Ethylene (ETFE).

**5.** The radiative cooling device (100) according to one of claims 1 to 4, wherein each of the first radiation layer (131) and the second radiation layer (132) has a thickness of 10 nm to 10um.

**6.** The radiative cooling device (200) according to claim 5, wherein the coating layer reflects sunlight having a wavelength corresponding to a visible region, the first coating layer (232) and the second coating layer (233) are repeatedly formed in the coating layer, and a difference in refractive index between the first coating layer and the second coating layer is 0.4 to 3.0,
wherein the first coating layer (232) comprises at least one of ZnS, Si, ZnSe and Ge, and the second coating layer comprises $CaF_2$.

**7.** A method of manufacturing a radiative cooling device, the method comprising:

a step of forming a sunlight reflective layer for reflecting sunlight having wavelengths corresponding to ultraviolet, visible, and near-infrared regions on a substrate; and
a step of forming, on the sunlight reflective layer, a heat emission layer for absorbing sunlight having a wavelength corresponding to a mid-infrared region and emitting the sunlight as heat
wherein the step of forming the radiative cooling layer comprises a step of forming, on the sunlight reflective layer, a first radiation layer comprising an uneven pattern; and
a step of forming, on the first radiation layer, a second radiation layer having a refractive index different from that of the first radiation layer,
wherein the step of forming the heat emission layer comprises a step of forming, on the sunlight reflective layer, a mid-infrared light absorption layer for absorbing sunlight having a wavelength corresponding to a mid-infrared region and emitting the sunlight as heat; and
a step of forming, on the mid-infrared light absorption layer, a coating layer for reflecting sunlight having a wavelength corresponding to a visible region,
wherein, in the step of forming the coating layer, a first coating layer and a second coating layer having different refractive indexes with respect to sunlight having a wavelength corresponding to a visible region are formed on the mid-infrared light absorption layer, and
the first coating layer has a greater refractive index than the second coating layer with respect to sunlight having a wavelength corresponding to a visible region.

**8.** The method according to claim 7, wherein the first radiation layer is formed to have an uneven pattern after the sunlight reflective layer is coated with at least one of fine particles made of an oxide or a nitride and a polymer.

**9.** A white radiative cooling device (100), comprising:

a substrate (110); and
a white radiative cooling layer (120) formed on the substrate (110), wherein, in the white radiative cooling layer (120), fine particles (121) comprising a metal oxide, metal nitride, metal fluoride, metal sulfate, or metal carbonate and a polymer that reflects and scatters sunlight having a wavelength corresponding to a visible region are embedded in a polymer matrix (122) that absorbs sunlight having a wavelength corresponding to a mid-infrared region and emits the sunlight as heat,

wherein the polymer matrix (122) and the fine particles (121) comprising the polymer have different refractive indexes.

wherein the white radiative cooling layer (120) absorbs sunlight having a wavelength corresponding to a mid-infrared region and emits the sunlight as heat while reflecting and scattering sunlight having a wavelength corresponding to a visible region using a refractive index difference between the polymer matrix (122) and the fine particles (121) comprising the polymer.

10. The white radiative cooling device (100) according to claim 9, wherein the white radiative cooling device (100) becomes white due to reflection and scattering of sunlight having a wavelength corresponding to a visible region by the fine particles (121) comprised in the white radiative cooling layer (120).

11. The white radiative cooling device according to claim 9 or 10, wherein the white radiative cooling device (100) becomes white due to reflection and scattering of sunlight having a wavelength corresponding to a visible region by the polymer-containing fine particles comprised in the white radiative cooling layer.

12. The white radiative cooling device (100) according to one of claims 9 to 11, wherein the polymer matrix (122) comprises at least one of polydimethyl siloxane (PDMS), polyurethane acrylate (PUA), polyvinylidene fluoride (PVDF), polyethylene terephthalate (PET), polyvinyl chloride (PVC), polyvinylidene fluoride (PVDF), dipentaerythritol hexaacrylate (DPHA), polymethyl methacrylate (PMMA), polybutyl methacrylate (PBMA), perfluoropolyether (PFPE), polycarbonate (PC), polyethylene (PE), Polytetrafluoroethylene (PTFE), Spectralon and Ethylene Tetra fluoro Ethylene (ETFE),
wherein the metal oxide comprises at least one of titanium dioxide $Al_2O_3$, $SiO_2$, $BaSO_4$, LiF, $CaSO_4$, ZnO, $TiO_2$, ZrOz, $CaF_2$, $MgF_2$, $HfO_2$, and $Si_3N_4$, and the polymer comprises at least one of polydimethyl siloxane (PDMS), polyurethane acrylate (PUA), polyvinylidene fluoride (PVDF), polyethylene terephthalate (PET), polyvinyl chloride (PVC), polyvinylidene fluoride (PVDF), dipentaerythritol hexaacrylate (DPHA), polymethyl methacrylate (PMMA), polybutyl methacrylate (PBMA), perfluoropolyether (PFPE), polycarbonate (PC), polyethylene (PE), Polytetrafluoroethylene (PTFE), Spectralon and Ethylene Tetra fluoro Ethylene (ETFE),

13. The white radiative cooling device (100) according to one of claims 9 to 12, wherein the white radiative cooling device (100) further comprises, on a lower surface of the white radiative cooling layer (120), a reflection enhancement layer (230) for additionally reflecting sunlight having a wavelength corresponding to a visible region, and

the reflection enhancement layer (230) comprises at least one of silver (Ag), aluminum (Al), nickel (Ni), chromium (Cr), lithium (Li), Aurum (Au), and platinum (Pt),
wherein, in the white radiative cooling device (100), the reflection enhancement layer (230) and the white radiative cooling layer (110) are repeatedly formed,
wherein, in the white radiative cooling layer (120), the fine particles (121) for reflecting and scattering sunlight having a wavelength corresponding to a visible region and fluorescent particles for emitting fluorescence are embedded in the polymer matrix (122) or are dopped in the white radiative cooling layer (120).

**Patentansprüche**

1. Strahlungskühlvorrichtung (100, 200), umfassend:

eine Sonnenlichtreflexionsschicht (120, 220), die auf einem Substrat ausgebildet ist und dafür verantwortlich ist, Sonnenlicht mit Wellenlängen zu reflektieren, die ultravioletten, sichtbaren und Nahinfrarot-Bereichen entsprechen; und
eine Wärmeemissionsschicht (130, 230), die auf der Sonnenlichtreflexionsschicht (120, 220) ausgebildet ist und dafür verantwortlich ist, Sonnenlicht mit einer Wellenlänge zu absorbieren, die einem Mittelinfrarot-Bereich entspricht, und das Sonnenlicht als Wärme zu emittieren,
wobei die Wärmeemissionsschicht (130) eine erste Strahlungsschicht (131) umfasst, die ein unebenes Muster umfasst; und
eine zweite Strahlungsschicht (132), die auf der ersten Strahlungsschicht (131) ausgebildet ist und einen Brechungsindex aufweist, der sich von dem der ersten Strahlungsschicht (131) unterscheidet, wobei die Wärmeemissionsschicht (230) eine Mittelinfrarot-Lichtabsorptionsschicht (231) umfasst, die auf der Sonnenlichtreflexionsschicht (220) ausgebildet ist und dafür verantwortlich ist, Sonnenlicht mit einer Wellenlänge zu absorbieren, die einem Mittelinfrarot-Bereich entspricht, und das Sonnenlicht als Wärme zu emittieren; und

eine Beschichtungsschicht, die auf der Mittelinfrarot-Lichtabsorptionsschicht (231) ausgebildet ist und eine erste Beschichtungsschicht (232) und eine zweite Beschichtungsschicht (233) umfasst, die unterschiedliche Brechungsindizes in Bezug auf Sonnenlicht mit einer Wellenlänge aufweisen, die einem sichtbaren Bereich entspricht.

2.  Strahlungskühlvorrichtung (100) nach Anspruch 1, wobei in der Wärmeemissionsschicht (130) die erste Strahlungsschicht (131) und die zweite Strahlungsschicht (132) wiederholt ausgebildet sind.

3.  Strahlungskühlvorrichtung (100, 200) nach Anspruch 1 oder 2, wobei die Sonnenlichtreflexionsschicht (120, 220) mindestens eines von Silber (Ag), Aluminium (Al), Nickel (Ni), Chrom (Cr), Lithium (Li), Gold (Au) und Platin (Pt) umfasst.

4.  Strahlungskühlvorrichtung (100, 200) nach einem der Ansprüche 1 bis 3, wobei jede der ersten Strahlungsschicht (131) und der zweiten Strahlungsschicht (132) mindestens eines von Feinpartikeln umfasst, die aus einem Oxid oder einem Nitrid und einem Polymer hergestellt sind,

    die Feinpartikel einen Durchmesser von 10 nm bis 20 $\mu$m aufweisen,
    die Feinpartikel mindestens eines von $Al_2O_3$, $SiO_2$, $BaSO_4$, LiF, $CaSO_4$, ZnO, $TiO_2$, $ZrO_2$, $CaF_2$, $MgF_2$, $HfO_2$ und $Si_3N_4$, Si, Ge, ZnS und ZnSe umfassen und
    das Polymer Polydimethylsiloxan (PDMS), Polyurethanacrylat (PUA), Polyvinylidenfluorid (PVDF), Polyethylenterephthalat (PET), Polyvinylchlorid (PVC), Polyvinylidenfluorid (PVDF), Dipentaerythritolhexaacrylat (DPHA), Polymethylmethacrylat (PMMA), Polybutylmethacrylat (PBMA), Perfluorpolyether (PFPE), Polycarbonat (PC), Polyethylen (PE), Polytetrafluorethylen (PTFE), Spectralon oder Ethylentetrafluorethylen (ETFE) ist.

5.  Strahlungskühlvorrichtung (100) nach einem der Ansprüche 1 bis 4, wobei jede der ersten Strahlungsschicht (131) und der zweiten Strahlungsschicht (132) eine Dicke von 10 nm bis 10 $\mu$m aufweist.

6.  Strahlungskühlvorrichtung (200) nach Anspruch 5, wobei die Beschichtungsschicht Sonnenlicht mit einer Wellenlänge reflektiert, die einem sichtbaren Bereich entspricht, die erste Beschichtungsschicht (232) und die zweite Beschichtungsschicht (233) wiederholt in der Beschichtungsschicht ausgebildet sind und ein Unterschied im Brechungsindex zwischen der ersten Beschichtungsschicht und der zweiten Beschichtungsschicht 0,4 bis 3,0 beträgt, wobei die erste Beschichtungsschicht (232) mindestens eines von ZnS, Si, ZnSe und Ge umfasst und die zweite Beschichtungsschicht $CaF_2$ umfasst.

7.  Verfahren zur Herstellung einer Strahlungskühlvorrichtung, wobei das Verfahren umfasst:

    einen Schritt des Ausbildens einer Sonnenlichtreflexionsschicht zum Reflektieren von Sonnenlicht mit Wellenlängen, die ultravioletten, sichtbaren und Nahinfrarot-Bereichen entsprechen, auf einem Substrat; und
    einen Schritt des Ausbildens einer Wärmeemissionsschicht auf der Sonnenlichtreflexionsschicht zum Absorbieren von Sonnenlicht mit einer Wellenlänge, die einem Mittelinfrarot-Bereich entspricht, und Emittieren des Sonnenlichts als Wärme,
    wobei der Schritt des Ausbildens der Strahlungskühlschicht einen Schritt des Ausbildens einer ersten Strahlungsschicht, die ein unebenes Muster umfasst, auf der Sonnenlichtreflexionsschicht umfasst; und
    einen Schritt des Ausbildens einer zweiten Strahlungsschicht mit einem Brechungsindex, der sich von dem der ersten Strahlungsschicht unterscheidet, auf der ersten Strahlungsschicht,
    wobei der Schritt des Ausbildens der Wärmeemissionsschicht einen Schritt des Ausbildens einer Mittelinfrarot-Lichtabsorptionsschicht auf der Sonnenlichtreflexionsschicht zum Absorbieren von Sonnenlicht mit einer Wellenlänge, die einem Mittelinfrarot-Bereich entspricht, und Emittieren des Sonnenlichts als Wärme umfasst; und
    einen Schritt des Ausbildens einer Beschichtungsschicht auf der Mittelinfrarot-Lichtabsorptionsschicht zum Reflektieren von Sonnenlicht mit einer Wellenlänge, die einem sichtbaren Bereich entspricht,
    wobei im Schritt des Ausbildens der Beschichtungsschicht eine erste Beschichtungsschicht und eine zweite Beschichtungsschicht, die unterschiedliche Brechungsindizes in Bezug auf Sonnenlicht mit einer Wellenlänge aufweisen, die einem sichtbaren Bereich entspricht, auf der Mittelinfrarot-Lichtabsorptionsschicht ausgebildet werden, und
die erste Beschichtungsschicht einen größeren Brechungsindex als die zweite Beschichtungsschicht in Bezug auf Sonnenlicht mit einer Wellenlänge, die einem sichtbaren Bereich entspricht, aufweist.

8. Verfahren nach Anspruch 7, wobei die erste Strahlungsschicht so ausgebildet wird, dass sie ein unebenes Muster aufweist, nachdem die Sonnenlichtreflexionsschicht mit mindestens einem von Feinpartikeln beschichtet ist, die aus einem Oxid oder einem Nitrid und einem Polymer hergestellt sind.

9. Weiße Strahlungskühlvorrichtung (100), umfassend:

ein Substrat (110); und
eine weiße Strahlungskühlschicht (120), die auf dem Substrat (110) ausgebildet ist, wobei in der weißen Strahlungskühlschicht (120) Feinpartikel (121), die ein Metalloxid, Metallnitrid, Metallfluorid, Metallsulfat oder Metallcarbonat und ein Polymer umfassen, das Sonnenlicht mit einer Wellenlänge reflektiert und streut, die einem sichtbaren Bereich entspricht, in eine Polymermatrix (122) eingebettet sind, die Sonnenlicht mit einer Wellenlänge absorbiert, die einem Mittelinfrarot-Bereich entspricht, und das Sonnenlicht als Wärme emittiert,
wobei die Polymermatrix (122) und die Feinpartikel (121), die das Polymer umfassen, unterschiedliche Brechungsindizes aufweisen,
wobei die weiße Strahlungskühlschicht (120) Sonnenlicht mit einer Wellenlänge absorbiert, die einem Mittelinfrarot-Bereich entspricht, und das Sonnenlicht als Wärme emittiert, während sie Sonnenlicht mit einer Wellenlänge reflektiert und streut, die einem sichtbaren Bereich entspricht, unter Verwendung eines Brechungsindexunterschieds zwischen der Polymermatrix (122) und den Feinpartikeln (121), die das Polymer umfassen.

10. Weiße Strahlungskühlvorrichtung (100) nach Anspruch 9, wobei die weiße Strahlungskühlvorrichtung (100) durch Reflexion und Streuung von Sonnenlicht mit einer Wellenlänge, die einem sichtbaren Bereich entspricht, durch die Feinpartikel (121), die in der weißen Strahlungskühlschicht (120) enthalten sind, weiß wird.

11. Weiße Strahlungskühlvorrichtung nach Anspruch 9 oder 10, wobei die weiße Strahlungskühlvorrichtung (100) durch Reflexion und Streuung von Sonnenlicht mit einer Wellenlänge, die einem sichtbaren Bereich entspricht, durch die polymerhaltigen Feinpartikel, die in der weißen Strahlungskühlschicht enthalten sind, weiß wird.

12. Weiße Strahlungskühlvorrichtung (100) nach einem der Ansprüche 9 bis 11, wobei die Polymermatrix (122) mindestens eines von Polydimethylsiloxan (PDMS), Polyurethanacrylat (PUA), Polyvinylidenfluorid (PVDF), Polyethylenterephthalat (PET), Polyvinylchlorid (PVC), Polyvinylidenfluorid (PVDF), Dipentaerythritolhexaacrylat (DPHA), Polymethylmethacrylat (PMMA), Polybutylmethacrylat (PBMA), Perfluorpolyether (PFPE), Polycarbonat (PC), Polyethylen (PE), Polytetrafluorethylen (PTFE), Spectralon und Ethylentetrafluorethylen (ETFE) umfasst,
wobei das Metalloxid mindestens eines von Titandioxid $Al_2O_3$, $SiO_2$, $BaSO_4$, LiF, $CaSO_4$, ZnO, $TiO_2$, $ZrO_2$, $CaF_2$, $MgF_2$, $HfO_2$ und $Si_3N_4$ umfasst und das Polymer mindestens eines von Polydimethylsiloxan (PDMS), Polyurethanacrylat (PUA), Polyvinylidenfluorid (PVDF), Polyethylenterephthalat (PET), Polyvinylchlorid (PVC), Polyvinylidenfluorid (PVDF), Dipentaerythritolhexaacrylat (DPHA), Polymethylmethacrylat (PMMA), Polybutylmethacrylat (PBMA), Perfluorpolyether (PFPE), Polycarbonat (PC), Polyethylen (PE), Polytetrafluorethylen (PTFE), Spectralon und Ethylentetrafluorethylen (ETFE) umfasst.

13. Weiße Strahlungskühlvorrichtung (100) nach einem der Ansprüche 9 bis 12, wobei die weiße Strahlungskühlvorrichtung (100) weiter auf einer unteren Oberfläche der weißen Strahlungskühlschicht (120) eine Reflexionsverstärkungsschicht (230) zum zusätzlichen Reflektieren von Sonnenlicht mit einer Wellenlänge, die einem sichtbaren Bereich entspricht, umfasst und

die Reflexionsverstärkungsschicht (230) mindestens eines von Silber (Ag), Aluminium (Al), Nickel (Ni), Chrom (Cr), Lithium (Li), Gold (Au) und Platin (Pt) umfasst,
wobei in der weißen Strahlungskühlvorrichtung (100) die Reflexionsverstärkungsschicht (230) und die weiße Strahlungskühlschicht (110) wiederholt ausgebildet sind,
wobei in der weißen Strahlungskühlschicht (120) die Feinpartikel (121) zum Reflektieren und Streuen von Sonnenlicht mit einer Wellenlänge, die einem sichtbaren Bereich entspricht, und Fluoreszenzpartikel zum Emittieren von Fluoreszenz in die Polymermatrix (122) eingebettet sind oder in der weißen Strahlungskühlschicht (120) dotiert sind.

**Revendications**

1. Un dispositif de refroidissement radiatif (100, 200), comprenant :

   une couche réfléchissant la lumière du soleil (120, 220) formée sur un substrat et responsable de la réflexion de la lumière du soleil ayant des longueurs d'onde correspondent à des régions ultraviolette, visible et proche infrarouge ; et
   une couche d'émission de chaleur (130, 230) formée sur la couche réfléchissant la lumière du soleil (120, 220) et responsable de l'absorption de la lumière du soleil ayant une longueur d'onde correspondent à une région infrarouge moyen, et de l'émission de la lumière du soleil en tant que chaleur,
   dans lequel la couche d'émission de chaleur (130) comprend une première couche de rayonnement (131) comprenant un motif irrégulier; et
   une deuxième couche de rayonnement (132) formée sur la première couche de rayonnement (131) et ayant un indice de réfraction différent de celui de la première couche de rayonnement (131),
   dans lequel la couche d'émission de chaleur (230) comprend une couche d'absorption de lumière infrarouge moyen (231) formée sur la couche réfléchissant la lumière du soleil (220) et responsable de l'absorption de la lumière du soleil ayant une longueur d'onde correspondent à une région infrarouge moyen et de l'émission de la lumière du soleil en tant que chaleur; et
   une couche de revêtement formée sur la couche d'absorption de lumière infrarouge moyen (231) et comprenant une première couche de revêtement (232) et une deuxième couche de revêtement (233) ayant des indices de réfraction différents par rapport à la lumière du soleil ayant une longueur d'onde correspondent à une région visible.

2. Le dispositif de refroidissement radiatif (100) selon la revendication 1, dans lequel, dans la couche d'émission de chaleur (130), la première couche de rayonnement (131) et la deuxième couche de rayonnement (132) sont formées de manière répétée.

3. Le dispositif de refroidissement radiatif (100, 200) selon la revendication 1 ou 2, dans lequel la couche réfléchissant la lumière du soleil (120, 220) comprend au moins un élément parmi l'argent (Ag), l'aluminium (Al), le nickel (Ni), le chrome (Cr), le lithium (Li), l'aurum (Au) et le platine (Pt).

4. Le dispositif de refroidissement radiatif (100, 200) selon l'une des revendications 1 à 3, dans lequel chacune de la première couche de rayonnement (131) et de la deuxième couche de rayonnement (132) comprend au moins l'une de particules fines constituées d'un oxyde ou d'un nitrure et d'un polymère,

   les particules fines ont un diamètre de 10 nm à 20 $\mu$m,
   les particules fines comprennent au moins l'un parmi $Al_2O_3$, $SiO_2$, $BaSO_4$, LiF, $CaSO_4$, ZnO, $TiO_2$, $ZrO_2$, $CaF_2$, $MgF_2$, $HfO_2$ et $Si_3N_4$, Si, Ge, ZnS et ZnSe, et
   le polymère est le polydiméthylsiloxane (PDMS), l'acrylate de polyuréthane (PUA), le fluorure de polyvinylidène (PVDF), le téréphtalate de polyéthylène (PET), le chlorure de polyvinyle (PVC), le fluorure de polyvinylidène (PVDF), l'hexaacrylate de dipentaérythritol (DPHA), le polyméthacrylate de méthyle (PMMA), le polyméthacrylate de butyle (PBMA), le perfluoropolyéther (PFPE), le polycarbonate (PC), le polyéthylène (PE), le polytétrafluoroéthylène (PTFE), Spectralon ou l'éthylène tétrafluoroéthylène (ETFE).

5. Le dispositif de refroidissement radiatif (100) selon l'une des revendications 1 à 4, dans lequel chacune de la première couche de rayonnement (131) et de la deuxième couche de rayonnement (132) a une épaisseur de 10 nm à 10 $\mu$m.

6. Le dispositif de refroidissement radiatif (200) selon la revendication 5, dans lequel la couche de revêtement réfléchit la lumière du soleil ayant une longueur d'onde correspondent à une région visible, la première couche de revêtement (232) et la deuxième couche de revêtement (233) sont formées de manière répétée dans la couche de revêtement, et une différence d'indice de réfraction entre la première couche de revêtement et la deuxième couche de revêtement est de 0,4 à 3,0,
   dans lequel la première couche de revêtement (232) comprend au moins l'un parmi ZnS, Si, ZnSe et Ge, et la deuxième couche de revêtement comprend $CaF_2$.

7. Un procédé de fabrication d'un dispositif de refroidissement radiatif, le procédé comprenant :

   une étape de former une couche réfléchissant la lumière du soleil pour réfléchir la lumière du soleil ayant des longueurs d'onde correspondent à des régions ultraviolette, visible et proche infrarouge sur un substrat ; et une étape de former, sur la couche réfléchissant la lumière du soleil, une couche d'émission de chaleur pour absorber la lumière du soleil ayant une longueur d'onde correspondent à une région infrarouge moyen et émettre la lumière du soleil en tant que chaleur

dans lequel l'étape de former la couche de refroidissement radiatif comprend une étape de former, sur la couche réfléchissant la lumière du soleil, une première couche de rayonnement comprenant un motif irrégulier; et une étape de former, sur la première couche de rayonnement, une deuxième couche de rayonnement ayant un indice de réfraction différent de celui de la première couche de rayonnement,

dans lequel l'étape de former la couche d'émission de chaleur comprend une étape de former, sur la couche réfléchissant la lumière du soleil, une couche d'absorption de lumière infrarouge moyen pour absorber la lumière du soleil ayant une longueur d'onde correspondent à une région infrarouge moyen et émettre la lumière du soleil en tant que chaleur; et

une étape de former, sur la couche d'absorption de lumière infrarouge moyen, une couche de revêtement pour réfléchir la lumière du soleil ayant une longueur d'onde correspondent à une région visible,

dans lequel, dans l'étape de former la couche de revêtement, une première couche de revêtement et une deuxième couche de revêtement ayant des indices de réfraction différents par rapport à la lumière du soleil ayant une longueur d'onde correspondent à une région visible sont formées sur la couche d'absorption de lumière infrarouge moyen, et

la première couche de revêtement a un indice de réfraction supérieur à la deuxième couche de revêtement par rapport à la lumière du soleil ayant une longueur d'onde correspondent à une région visible.

8. Le procédé selon la revendication 7, dans lequel la première couche de rayonnement est formée pour avoir un motif irrégulier après que la couche réfléchissant la lumière du soleil est revêtue avec au moins l'une de particules fines constituées d'un oxyde ou d'un nitrure et d'un polymère.

9. Un dispositif blanc de refroidissement radiatif (100), comprenant :

un substrat (110) ; et
une couche blanche de refroidissement radiatif (120) formée sur le substrat (110), dans lequel, dans la couche blanche de refroidissement radiatif (120), des particules fines (121) comprenant un oxyde métallique, un nitrure métallique, un fluorure métallique, un sulfate métallique, ou un carbonate métallique et un polymère qui réfléchit et diffuse la lumière du soleil ayant une longueur d'onde correspondent à une région visible sont incorporées dans une matrice polymère (122) qui absorbe la lumière du soleil ayant une longueur d'onde correspondent à une région infrarouge moyen et émet la lumière du soleil en tant que chaleur,

dans lequel la matrice polymère (122) et les particules fines (121) comprenant le polymère ont des indices de réfraction différents.

dans lequel la couche blanche de refroidissement radiatif (120) absorbe la lumière du soleil ayant une longueur d'onde correspondent à une région infrarouge moyen et émet la lumière du soleil en tant que chaleur tout en réfléchissant et diffusant la lumière du soleil ayant une longueur d'onde correspondent à une région visible en utilisant une différence d'indice de réfraction entre la matrice polymère (122) et les particules fines (121) comprenant le polymère.

10. Le dispositif blanc de refroidissement radiatif (100) selon la revendication 9, dans lequel le dispositif blanc de refroidissement radiatif (100) devient blanc en raison de la réflexion et de la diffusion de la lumière du soleil ayant une longueur d'onde correspondent à une région visible par les particules fines (121) comprises dans la couche blanche de refroidissement radiatif (120).

11. Le dispositif blanc de refroidissement radiatif selon la revendication 9 ou 10, dans lequel le dispositif blanc de refroidissement radiatif (100) devient blanc en raison de la réflexion et de la diffusion de la lumière du soleil ayant une longueur d'onde correspondent à une région visible par les particules fines contenant un polymère comprises dans la couche blanche de refroidissement radiatif.

12. Le dispositif blanc de refroidissement radiatif (100) selon l'une des revendications 9 à 11, dans lequel la matrice polymère (122) comprend au moins l'un parmi le polydiméthylsiloxane (PDMS), l'acrylate de polyuréthane (PUA), le fluorure de polyvinylidène (PVDF), le téréphtalate de polyéthylène (PET), le chlorure de polyvinyle (PVC), le fluorure de polyvinylidène (PVDF), l'hexaacrylate de dipentaérythritol (DPHA), le polyméthacrylate de méthyle (PMMA), le polyméthacrylate de butyle (PBMA), le perfluoropolyéther (PFPE), le polycarbonate (PC), le polyéthylène (PE), le polytétrafluoroéthylène (PTFE), Spectralon et l'éthylène tétrafluoroéthylène (ETFE),

dans lequel l'oxyde métallique comprend au moins l'un parmi le dioxyde de titane, $Al_2O_3$, $SiO_2$, $BaSO_4$, LiF, $CaSO_4$, ZnO, $TiO_2$, $ZrO_2$, $CaF_2$, $MgF_2$, $HfO_2$ et $Si_3N_4$, et le polymère comprend au moins l'un parmi le polydiméthylsiloxane (PDMS), l'acrylate de polyuréthane (PUA), le fluorure de polyvinylidène (PVDF), le téréphtalate de polyéthylène (PET), le chlorure de polyvinyle (PVC), le fluorure de polyvinylidène (PVDF), l'hexaacrylate de dipentaérythritol (DPHA), le polyméthacrylate de méthyle (PMMA), le polyméthacrylate de butyle (PBMA), le perfluoropolyéther (PFPE), le polycarbonate (PC), le polyéthylène (PE), le polytétrafluoroéthylène (PTFE), Spectralon et l'éthylène tétrafluoroéthylène (ETFE),

13. Le dispositif blanc de refroidissement radiatif (100) selon l'une des revendications 9 à 12, dans lequel le dispositif blanc de refroidissement radiatif (100) comprend en outre, sur une surface inférieure de la couche blanche de refroidissement radiatif (120), une couche d'amélioration de réflexion (230) pour réfléchir additionnellement la lumière du soleil ayant une longueur d'onde correspondent à une région visible, et

la couche d'amélioration de réflexion (230) comprend au moins un élément parmi l'argent (Ag), l'aluminium (Al), le nickel (Ni), le chrome (Cr), le lithium (Li), l'aurum (Au) et le platine (Pt),
dans lequel, dans le dispositif blanc de refroidissement radiatif (100), la couche d'amélioration de réflexion (230) et la couche blanche de refroidissement radiatif (110) sont formées de manière répétée,
dans lequel, dans la couche blanche de refroidissement radiatif (120), les particules fines (121) pour réfléchir et diffuser la lumière du soleil ayant une longueur d'onde correspondent à une région visible et les particules fluorescentes pour émettre une fluorescence sont incorporées dans la matrice polymère (122) ou sont plongées dans la couche blanche de refroidissement radiatif (120).

FIG. 1

FIG. 2A

200

202

201

FIG. 2B

210

212

211

FIG. 3

300

FIG. 4A

<u>400</u>

FIG. 4B

410

FIG. 4C

420

FIG. 4D

430

FIG. 5A

500

Al$_2$O$_3$ : SiO$_2$ = 0.5 : 0.5

FIG. 5B

510

Al$_2$O$_3$ : SiO$_2$ = 1 : 1

FIG. 6A

<u>600</u>

FIG. 6B

<u>610</u>

FIG. 6C

620

FIG. 7A

700

FIG. 7B

710

FIG. 7C

720

FIG. 8A

<u>800</u>

FIG. 8B

810

1-R (8-13 μm)

FIG. 9A

900

FIG. 9B

<u>910</u>

FIG. 9C

920

FIG. 9D

930

FIG. 9E

940

FIG. 10A

<u>1000</u>

FIG. 10B

1010

EP 3 954 741 B1

FIG. 10C

1020

80

FIG. 10D

<u>1030</u>

FIG. 10E

1040

FIG. 10F

<u>1050</u>

FIG. 11A

<u>1100</u>

1105          1104

1103
1102
1101

1106

FIG. 11B

1110

FIG. 11C

<u>1120</u>

FIG. 11D

1130

FIG. 11E

<u>1140</u>

FIG. 11F

<u>1150</u>

FIG. 12A

1200

FIG. 12B

<u>1210</u>

FIG. 13A

1300

*Visible*

FIG. 13B

1310

FIG. 14A

FIG. 14B

FIG. 15A

1500

FIG. 15B

1510

FIG. 16A

1600

FIG. 16B

<u>1610</u>

FIG. 16C

1620

FIG. 16D

1630

FIG. 16E

1640

FIG. 17

FIG. 18

1800

FIG. 19A

1900

FIG. 19B

1910

FIG. 19C

1920

FIG. 19D

<u>1930</u>

FIG. 20A

100

FIG. 20B

100

FIG. 21A

FIG. 21B

FIG. 22

```
        ┌──────────────┐
        │    Start     │
        └──────┬───────┘
               │
               ▼                                    S110
┌────────────────────────────────────────────────────┐
│        Step of forming reflective layer for reflecting        │
│  sunlight having wavelengths corresponding to ultraviolet, visible,  │
│          and near-infrared regions on substrate             │
└────────────────────────────────────────────────────┘
               │
               ▼                                    S120
┌────────────────────────────────────────────────────┐
│     Step of forming, on reflective layer, radiative cooling layer      │
│   for absorbing sunlight having wavelength corresponding to         │
│        mid-infrared region and emitting sunlight as heat           │
│                                                    S121 │
│   ┌────────────────────────────────────────────┐   │
│   │          Step of forminmg, on reflective layer,          │   │
│   │        first radiation layer including uneven pattern        │   │
│   └────────────────────────────────────────────┘   │
│                         │                              │
│                         ▼                        S122  │
│   ┌────────────────────────────────────────────┐   │
│   │         Step of forming, on first radiation layer,         │   │
│   │  second radiation layer having a refractive index different   │   │
│   │          from that of first radiation layer            │   │
│   └────────────────────────────────────────────┘   │
└────────────────────────────────────────────────────┘
               │
               ▼
        ┌──────────────┐
        │     End      │
        └──────────────┘
```

111

FIG. 23

```
          ┌──────────────┐
          │    Start     │
          └──────────────┘
                 │
                 ▼                              ╭ S210
 ┌──────────────────────────────────────────────────────┐
 │         Step of forming reflective layer for reflecting │
 │ sunlight having wavelengths corresponding to ultraviolet, visible, │
 │       and near-infrared regions on substrate          │
 └──────────────────────────────────────────────────────┘
                 │
                 ▼                              ╭ S220
 ┌──────────────────────────────────────────────────────┐
 │      Step of forming, on reflective layer, mid-infrared light │
 │   absorption layer for absorbing sunlight having wavelength │
 │ corresponding to mid-infrared region and emitting sunlight as heat │
 └──────────────────────────────────────────────────────┘
                 │
                 ▼                              ╭ S230
 ┌──────────────────────────────────────────────────────┐
 │   Step of forming, on mid-infrared light absorption layer, │
 │    coating layer for reflecting sunlight having wavelength │
 │            corresponding to visible region            │
 └──────────────────────────────────────────────────────┘
                 │
                 ▼
          ┌──────────────┐
          │     End      │
          └──────────────┘
```

FIG. 24

FIG. 25

FIG. 26

FIG. 27

FIG. 28

19.04.13 Daytime

FIG. 29

19.04.12 Nighttime

FIG. 30

FIG. 31

FIG. 32

FIG. 33A

FIG. 33B

FIG. 33C

FIG. 34

FIG. 35

FIG. 36

FIG. 37

FIG. 38

FIG. 39

FIG. 40

FIG. 41A

FIG. 41B

FIG. 41C

FIG. 42A

<u>100</u>

FIG. 42B

200

222     221

220

230

210

FIG. 42C

300

FIG. 43A

FIG. 43B

FIG. 44

FIG. 45A

FIG. 45B

FIG. 46

FIG. 47

FIG. 48A

<u>100</u>

———— 101

FIG. 48B

<u>110</u>

———— 112

———— 111

FIG. 49A

200

203 {
- Inorganic layer — 205
- Polymer layer — 204

Reflective layer — 202

Substrate — 201

FIG. 49B

210

FIG. 49C

220

:

| Polymer layer | 226 |
| Inorganic layer | 225 |
| Polymer layer | 224 |
| Reflective layer | 222 |
| Substrate | 221 |

223

FIG. 49D

230

⋮

FIG. 50A

300

⋮

FIG. 50B

310

⋮

| Inorganic layer 2 | — 316 |
| Polymer layer | — 315 |
| Inorganic layer | — 314 |
| Reflective layer | — 312 |
| Substrate | — 311 |

313 {

FIG. 51A

400

:

| Polymer layer 2 + Inorganic particle | 406 |
| Inorganic layer | 405 |
| Polymer layer + Inorganic layer | 404 |
| Reflective layer | 402 |
| Substrate | 401 |

403

FIG. 51B

410

.
.
.

| | Inorganic layer 2 + polymer | —416 |
| 413 { | Polymer layer | —415 |
| | Inorganic particle 1 + 2 | —414 |
| | Reflective layer | —412 |
| | Substrate | —411 |

FIG. 51C

420

:

| 426 | Polymer layer + Polymer layer 2 |
| 425 | Inorganic layer |
| 424 | Polymer layer + Polymer layer 2 |
| 422 | Reflective layer |
| 421 | Substrate |

FIG. 52A

500

FIG. 52B

500

503

502

501

FIG. 52C

510

- 515
- 514
- 513
- 512
- 511

FIG. 52D

510

| | |
|---|---|
| DPHA | 515 |
| Al$_2$O$_3$ | 514 |
| DPHA | 513 |
| Ag | 512 |
| Substrate | 511 |

FIG. 52E

520

FIG. 52F

520

| Al$_2$O$_3$ | 526 |
| DPHA | 525 |
| Al$_2$O$_3$ | 524 |
| DPHA | 523 |
| Ag | 522 |
| Substrate | 521 |

FIG. 53A

600

FIG. 53B

610

FIG. 53C

620

**EP 3 954 741 B1**

**REFERENCES CITED IN THE DESCRIPTION**

**Patent documents cited in the description**

- KR 1020200100751
- KR 1020200158664
- CN 110567188 A
- CN 111155332 A
- WO 2020195743 A1